# EUROPÄISCHE PATENTSCHRIFT

(11) **EP 2 461 976 B1**
(45) Veröffentlichungstag und Bekanntmachung des Hinweises auf die Patenterteilung: **28.08.2013**
(21) Anmeldenummer: 10739546.9
(22) Anmeldetag: 26.07.2010
(51) Int. Cl.: B41F 13/20, F16C 35/00

(54) **LAGERAUFNAHME EINES LAGERS EINES ZYLINDERZAPFENS UND EIN VERFAHREN ZUM SCHLIESSEN UND VERRIEGELN EINER LAGERAUFNAHME**
BEARING RECEPTACLE OF A BEARING OF A CYLINDER JOURNAL AND A METHOD FOR CLOSING AND LOCKING A BEARING RECEPTACLE
LOGEMENT D'UN PALIER D'UN AXE DE CYLINDRE ET PROCÉDÉ POUR FERMER ET VERROUILLER UN LOGEMENT DE PALIER

(30) Priorität: 04.08.2009 DE 102009028199
(43) Veröffentlichungstag der Anmeldung: 13.06.2012
(73) Patentinhaber: KBA-MePrint AG, 97209 Veitshöchheim (DE)
(72) Erfinder: BAUER, Stefan, 97291 Thüngersheim (DE); KLEINSCHNITZ, Josef, 97259 Greußenheim (DE); PALME, Sven, 97776 Eußenheim (DE)
(74) Vertreter: Stiel, Jürgen
(86) Internationale Anmeldenummer: PCT/EP2010/060774
(87) Internationale Veröffentlichungsnummer: WO 2011/015478

(56) Entgegenhaltungen:
- WO-A1-98/13204
- DE-A1- 4 041 497
- DE-A1- 19 821 286

## Beschreibung

Die Erfindung betrifft eine Lageraufnahme eines Lagers eines Zylinderzapfens gemäß dem Oberbegriff des Anspruches 1 sowie ein Verfahren zum Schließen und Verriegeln einer Lageraufnahme gemäß dem Oberbegriff des Anspruches 10.

Rotationsdruckmaschinen arbeiten nach einem Rotationsdruckprinzip, wie beispielsweise einem Flexodruck, Offsetdruck, Hochdruck, Tiefdruck etc., bei welchem eine Druckvorlage des zu druckenden Druckbildes in einer Mantelfläche eines oder mehrerer Formzylinder eingebracht ist oder als Druckplatte auf die Mantelfläche eines Formzylinders aufgespannt ist, und während des Druckprozesses über eine Abrollung des Formzylinders über seine Mantelfläche das Druckbild entweder direkt oder über nachgeschaltete Übertragungszylinder auf einen Bedruckstoff übertragen wird. Um gleichzeitig dabei im Wesentlichen unabhängig von der Produktionsgeschwindigkeit und von anderen äußeren Einflüssen eine hohe Druckqualität aufrecht zu erhalten ist es darüber hinaus häufig vorgesehen, die Druckwalzen mittels einer Temperiereinrichtung auf einer bestimmten einstellbaren Temperatur zu betreiben, indem die Druckwalzen beispielsweise von einer Kühlflüssigkeit durchflossen werden.

Darüber hinaus ist es insbesondere bei der Bedruckung von bahnförmigem Bedruckstoff erforderlich, eine Drucklänge eines Druckbildes für unterschiedliche Druckaufträge zumindest in Schritten variabel zu gestalten, wodurch beispielsweise im Verpackungsdruck die Möglichkeit geschaffen wird unterschiedlich große Verpackungen zu gestalten. Da insbesondere im genannten Verpackungsdruck eine Vielzahl unterschiedliche Arten von Verpackungen wie Schlauchbeutelverpackungen oder Faltschachteln mit unterschiedlichen Formen und Größen verwendet werden, ist es erforderlich solche Rollen-Rotationsdruckmaschinen herstellerseitig so auszugestalten, dass unterschiedliche Formzylinder und/oder Übertragungszylinder und/oder Klischeewalzen mit unterschiedlichen Umfängen in der Druckmaschine verwendet werden können.

Die Änderung der unterschiedlichen Umfänge der Zylinder kann dabei beispielsweise durch Austausch von, auf einen Zylinderkern mit einem bestimmten Durchmesser aufschiebbaren und/oder aufziehbaren, Hülsen oder sogenannten Sleeves mit unterschiedlichen Außendurchmessern oder durch Austausch kompletter Zylinder vorgenommen werden. Dies erfolgt beispielsweise manuell durch eine Bedienperson, wobei hierbei die Zylinder voneinander abgestellt sein müssen und für den Austausch gegen Zylinder mit einem unterschiedlichen Durchmesser der Abstand der Zylinder zueinander so bemessen sein muss, dass sich auch Zylinder mit einem maximalem Durchmesser problemlos austauschen lassen. Austauschbare Sleeves sind bekannt, bergen jedoch für gewöhnlich den Nachteil, dass eine Temperierung der Mantelfläche der Sleeves nicht für alle Sleeves gleichermaßen möglich ist, da üblicherweise nur der Zylinder auf den das entsprechende Sleeve aufgezogen wird, über Mittel zur Temperierung verfügt und dann die entsprechenden Oberflächentemperaturen des Zylinders durch das Sleeve übertragen werden, um letztlich eine Oberflächentemperatur der Mantelfläche des Sleeves einzustellen. Verschieden große Sleeves zeigen dabei verschiedene charakteristische Eigenschaften, wie Wärmeleitfähigkeit oder Wärmekapazität.

Hierzu können die Zylinder beispielsweise in Exzenterbuchsen gelagert sein, welche mittels eines geeigneten Antriebs verschwenkt werden können. Dabei ist nur eine begrenzte Verschwenkung benachbarter Zylinder zueinander jeweils auf einem Kreisbogen möglich, was bei einem Austausch von Zylindern eines ersten Durchmessers gegen Zylinder eines zweiten Durchmessers eine aufwändige Neujustage der Zylinder zueinander erfordert.

Es ist ebenfalls bekannt die Lage der Zylinder zueinander mittels eines jeweiligen Linearantriebs einzustellen, wodurch die Zylinder und insbesondere zugeordnete Lageraufnahmen der Zylinder jeweils zueinander verschoben werden können. Dabei muss jedem entlang einer bestimmten Richtung zu bewegenden, insbesondere verschiebenden Zylinder ein jeweiliger Linearantrieb zugeordnet sein, wodurch sich ein aufwendiger Aufbau mit entsprechenden Kosten ergibt.

Eine exakte Übereinstimmung eines Druckbildes auf Vorder- und Rückseite eines beidseitig bedruckten Bedruckstoffes nennt man Register (DIN 16500-2). Im Mehrfarbendruck spricht man vom Passer (DIN 16500-2), wenn die einzelnen Druckbilder der verschiedenen Farben exakt passend zu einem Bild zusammengefügt werden. Im Zusammenhang mit dem Register bzw. dem Passer beim Druck in Mehrfarben-Rotationsdruckmaschinen sind verschiedene Korrekturerfordernisse und Korrekturmethoden bekannt. Eine Korrektur des Seitenregisters oder Seitenpassers, also eine Verschiebung des Druckbildes in einer Richtung quer zu einer Transportrichtung eines zu bedruckenden Bedruckstoffs, kann beispielsweise durch bewegen, beispielsweise Verschieben eines Formzylinders in Richtung seiner Rotationsachse erreicht werden. Das Umfangsregister oder der Umfangspasser, also eine Verschiebung des Druckbildes in einer Richtung längs der Transportrichtung des zu bedruckenden Bedruckstoffs, lässt sich beispielsweise durch Veränderung der Phasenlage der beteiligten Formzylinder zueinander anpassen. Weiterhin kann es nötig sein, das Diagonalregister oder den Diagonalpasser, also eine Schrägstellung des Druckbildes, zu korrigieren, beispielsweise wenn Druckplatten auf einem Plattenzylinder nicht im passenden Winkel ausgerichtet sind und dadurch eine Schrägstellung des Druckbildes der entsprechenden Farbe auf dem Bedruckstoff entsteht. Zu diesem Zweck wird, beispielsweise in Rotationsdruckmaschinen, üblicherweise der Formzylinder so schräg gestellt, dass seine Rotationsachse nicht mehr zu der Rotationsachse des Übertragungszylinders parallel liegt. Im Folgenden wird der Einfachheit halber nur noch von Seiten- Umfangs- bzw. Diagonalregister die Rede sein, es ist aber immer auch gleichermaßen der Seite- Umfangs- bzw. Diagonalpasser gemeint.

Durch die DE 40 41 497 A1 ist eine Lagerung für einen Druckwerkzylinder einer Rollenrotationsdruckmaschine bekannt, der einen auswechselbaren, hierzu seitlich durch eine Öffnung einer Maschinenseitenwand schiebbaren Mantel trägt, wobei an der Maschinenseitenwand parallel zu letzterer schwenkbar und in einer Endlage arretierbar ein Hebel lagert, der in einem aufmachbaren Gehäuse einen Zapfen des Zylinders aufnimmt. Sowohl ein Schließen bzw. Öffnen der Lagerung als auch ein Verriegeln bzw. Entriegeln der Lagerung mittels eines Stößels werden mittels maschinengesteuerter Arbeitszylinder ausgeführt. Um eine Verriegelung aufrecht zu erhalten, muss ein Arbeitszylinder permanent mit Druck beaufschlagt sein.

Durch die EP 0 741 017 A2 ist eine Lageraufnahme eines Lagers eines Zylinderzapfens eines Zylinders einer Druckmaschine bekannt, wobei die Lageraufnahme zumindest zwei Klapplagerhälften aufweist und wobei eine der Klapplagerhälften relativ zu der anderen Klapplagerhälfte schwenkbar angeordnet ist und wobei mittels eines Antriebs die Lageraufnahme verriegelbar und entriegelbar ausgebildet ist und wobei die Lageraufnahme einen schwenkbaren, die Lageraufnahme verriegelfähig ausgebildeten Haltebügel aufweist, wobei die Lageraufnahme einen mit dem Haltebügel zusammenwirkend angeordneten, Stempel aufweist und wobei der Stempel mittels des Antriebs unabhängig von der Klapplagerhälfte bewegbar angeordnet ist.

Durch die DE 198 21 286 A1 ist ein Verfahren zum Schließen und Verriegeln einer Lageraufnahme eines Lagers eines Zylinderzapfens eines Zylinders einer Druckmaschine bekannt, wobei ein Haltebügel in eine Lage verschwenkt wird, in der er die Lageraufnahme verriegelt, wobei der Haltebügel durch eine Federkraft verschwenkt wird, die den Haltebügel zu jeder Zeit in eine verriegelnde Stellung drückend angeordnet ist. Eine Verriegelung geschieht durch Bewegung einer die Verriegelung zuvor verhindernden Kolbenstange.

Durch die DE 694 03 065 T2 ist eine Druckmaschine bekannt, wobei die Druckmaschine zumindest eine Handhabungseinrichtung zumindest eines Zylinder der Druckmaschine aufweist, wobei die Handhabungseinrichtung den zumindest einen Zylinder in zwei unterschiedliche Richtungen verfahrfähig ausgebildet ist und wobei die Handhabungseinrichtung den zumindest einen Zylinder zwischen jeweils einer ersten Position und einer zweiten Position verfahrfähig ausgebildet ist und wobei Zylinderzapfen entsprechender Zylinder in einer der beiden Positionen und in einem Druckbetrieb in gleichen Lageraufnahmen angeordnet sind und wobei die Handhabungseinrichtung in einem ersten Betriebszustand zumindest zwei Zylinder gleichzeitig zwischen jeweils der ersten und der zweiten Position verfahrfähig ausgebildet ist.

Durch die DE 44 13 807 C1 ist eine Druckmaschine bekannt, wobei die Druckmaschine zumindest eine Handhabungseinrichtung zumindest eines Zylinder der Druckmaschine aufweist, wobei die Handhabungseinrichtung den zumindest einen Zylinder zwischen jeweils einer ersten Position und einer zweiten Position verfahrfähig ausgebildet ist und wobei Zylinderzapfen entsprechender Zylinder in einer der beiden Positionen und in einem Druckbetrieb in gleichen Lageraufnahmen angeordnet sind und wobei die Handhabungseinrichtung in einem ersten Betriebszustand zumindest zwei Zylinder gleichzeitig zwischen jeweils der ersten und der zweiten Position verfahrfähig ausgebildet ist.

Durch die DE 103 14 297 A1 ist ein Verfahren zur Handhabung von Zylindern eines Druckwerks einer Druckmaschine bekannt, wobei zwei Zylinder gehandhabt werden und aus einer jeweils ersten Position gleichzeitig mittels einer Handhabungseinrichtung bewegt werden, wodurch Zylinderzapfen eines Zylinders von, in einem Druckbetrieb mit ihnen verbundenen, Lageraufnahmen getrennt werden und wobei im Anschluss die Zylinder von der Handhabungseinrichtung durch eine Bewegung der Handhabungseinrichtung in einer zumindest teilweise horizontalen Richtung in eine zweite Position gebracht werden, die für einen der Zylinder eine Entnahmeposition ist und wobei ein Zylinder im Anschluss von zumindest einer weiteren Einrichtung oder manuell an der Entnahmeposition entnommen, von der Handhabungseinrichtung getrennt und aus der Druckmaschine entfernt wird.

Durch die DE 10 2006 034 661 A1 ist ein Verfahren zur Handhabung eines Formzylinders eines Druckwerks einer Druckmaschine bekannt, wobei der Zylinder aus einer ersten Position mittels einer Handhabungseinrichtung bewegt wird, wodurch Zylinderzapfen des Zylinders von, in einem Druckbetrieb mit ihnen verbundenen, Lageraufnahmen getrennt werden und wobei der Zylinder im Anschluss von der Handhabungseinrichtung entnommen und aus der Druckmaschine entfernt wird.

Durch die WO 01/87605 A1 ist ein Antrieb eines rotierenden Bauteils einer Druckmaschine bekannt, wobei das Bauteil durch einen Motor rotatorisch antreibbar ist und das rotierende Bauteil stirnseitig über eine erste Kupplung mit dem das rotierende Bauteil antreibenden Motor verbunden ist und wobei der Motor in einer Richtung mit zumindest einer Komponente parallel zu einer Rotationsachse des rotierenden Bauteils ortsveränderbar ist und wobei der Motor mittels eines Stellantriebs ortsveränderbar ist. Eine vollständige Entkopplung von Motor und Bauteil wird dabei erreicht, indem sowohl eine kraftschlüssige Verbindung getrennt wird als auch der gesamte Motor in einer Richtung parallel zur Rotationsachse des Bauteils verfahren wird.

Durch die DE 197 57 979 A1 ist eine Koppelvorrichtung eines Zylinders einer Druckmaschine bekannt, wobei die Koppelvorrichtung einen Koppelkörper aufweist, der in einem gekoppelten Betriebszustand reibschlüssig und/oder formschlüssig aber lösbar mit dem Zylinder verbunden ist und der in dem gekoppelten Betriebszustand ebenfalls mit einem rotierbaren Bestandteil eines, dem Zylinder zugeordneten, Antriebs reibschlüssig und/oder formschlüssig verbunden ist und wobei der Koppelkörper in einem entkoppelten Betriebszustand nicht mit dem Zylinder reibschlüssig und/oder formschlüssig verbunden ist, wobei der Koppelkörper in dem entkoppelten Betriebszustand auch nicht mit dem Antrieb reibschlüssig und/oder formschlüssig verbunden ist.

Durch die US 4 137 845 A ist eine Koppelvorrichtung eines Zylinders einer Druckmaschine bekannt, wobei die Koppelvorrichtung einen Koppelkörper aufweist, der in einem gekoppelten Betriebszustand reibschlüssig und/oder formschlüssig aber lösbar mit dem Zylinder verbunden ist und der in dem gekoppelten Betriebszustand ebenfalls mit einem rotierbaren Bestandteil eines, dem Zylinder zugeordneten, Antriebs reibschlüssig und/oder formschlüssig verbunden ist und wobei der Koppelkörper in einem entkoppelten Betriebszustand nicht mit dem Antrieb reibschlüssig und/oder formschlüssig verbunden ist.

Durch die DE 100 08 215 A1 ist ein Druckwerk bekannt, bei dem Formzylinder und Übertragungszylinder mit ihren jeweiligen Lagern an Schlitten angeordnet sind, welche wiederum entlang paralleler Führungsschienen mittels geeigneter Antriebe verfahrbar und feststellbar angeordnet sind. Auf diese Weise können Formzylinder unterschiedlichen Formats in einer entsprechenden Druckmaschine eingesetzt werden.

Durch die EP 113 601 B1 ist eine Offset-Rotationsdruckmaschine bekannt, bei der ebenfalls mehrere Zylinder mittels jeweiliger Schlitten entlang gemeinsamer Schienen verfahrbar angeordnet sind, wobei diese Zylinder mittels angeordneter Beilagen voneinander beabstandet sind und mittels mehrerer, auf jeweils alle Zylinder wirkender Hubzylinder entlang der Schienen verfahren werden können. Die einzelnen Zylinder können von der Druckmaschine nicht variabel beabstandet werden, sondern liegen direkt übereinander, wobei sich Lager eines oberen Zylinders auf Lagern eines unteren Zylinders abstützen und die Lager des untersten Zylinders auf den Hubzylindern lagernd angeordnet sind. Zum Wechsel der Zylinder müssen diese nach oben von entsprechenden Führungseinrichtungen abgenommen werden.

Durch die DE 199 37 783 A1, die DE 101 03 632 A1, die DE 10 2006 020 957 A1 und die DE 199 37 796 A1 ist jeweils eine Positioniervorrichtung zumindest zweier Zylinder eines Druckwerks einer Druckmaschine bekannt, wobei die Positioniervorrichtung zumindest eine Schienenanordnung aufweist und wobei die Schienenanordnung zumindest eine Schiene und zumindest zwei Schlitten aufweist und wobei jeweils ein, mit einem Zylinderzapfen eines der zumindest zwei Zylinder in Verbindung stehendes, Lager an jedem der zumindest zwei Schlitten angeordnet ist und die zumindest zwei Schlitten entlang der zumindest einen Schiene verschiebbar und an vorbestimmbaren Positionen entlang der Schienenanordnung fixierbar sind. Weiterhin ist durch die DE 199 37 783 A1, die DE 101 03 632 A1, die DE 10 2006 020 957 A1 und die DE 199 37 796 A1 jeweils ein Verfahren zur Positionierung von Zylindern in einem Druckwerk einer Druckmaschine bekannt, wobei Schlitten, an denen die Zylinder angeordnet sind, entlang von Schienen einer Schienenanordnung verfahren werden und die Zylinder an entsprechenden Positionen entlang der Schienen fixiert werden, wobei jeder Schlitten mittels eines eigenen Antriebs bewegt und fixiert wird.

Durch die DE 1 235 333 A ist eine Positioniervorrichtung zumindest zweier Zylinder eines Druckwerks einer Druckmaschine bekannt, wobei die Positioniervorrichtung zumindest eine Schienenanordnung aufweist und wobei die Schienenanordnung zumindest eine Schiene und zumindest zwei Schlitten aufweist und wobei jeweils ein, mit zumindest einem Zylinderzapfen eines der zumindest zwei Zylinder in Verbindung stehendes, Lager an jedem der zumindest zwei Schlitten angeordnet ist und die zumindest zwei Schlitten entlang der zumindest einen Schiene verschiebbar und an vorbestimmbaren Positionen entlang der Schienenanordnung fixierbar sind, wobei zumindest entlang der zumindest einen Schiene eine Anzahl von Klemmelementen angeordnet ist. Weiterhin ist durch die DE 1 235 333 A ein Verfahren zur Positionierung von Zylindern in einem Druckwerk einer Druckmaschine bekannt, wobei Schlitten, an denen die Zylinder angeordnet sind, entlang von Schienen einer Schienenanordnung verfahren werden und die Zylinder an entsprechenden Positionen entlang der Schienen fixiert werden, wobei nur ein Antrieb die Positionierung mehrerer zu positionierender Zylinder bewirkt, wobei die Schlitten in jeweiligen Positionen mittels einer Anzahl von entlang wenigstens einer Schiene angeordneten Klemmelementen fixiert werden.

Der Erfindung liegt die Aufgabe zugrunde, eine Lageraufnahme eines Lagers eines Zylinderzapfens sowie ein Verfahren zum Schließen und Verriegeln einer Lageraufnahme zu schaffen.

Die Aufgabe wird erfindungsgemäß durch die Merkmale des Anspruches 1 und die Merkmale des Anspruches 10 gelöst.

Die mit der Erfindung erzielbaren Vorteile bestehen insbesondere darin, dass durch eine Kombination eines Haltebügels zum Zusammenhalten zweier Klapplagerhälften mit einem Stellhebel zum Verschwenken und Verriegeln des Haltebügels und damit der Lageraufnahme ein System mit einem passiven Öffnungsmechanismus für den Haltebügel möglich ist. Im Gegensatz zu beispielsweise der in der DE 40 41 497 A1 offenbarten Vorrichtung mit einem Stößel zur Verriegelung kann der beschriebene Haltebügel einfach mittels einer Feder verschwenkt werden. Bei einem erwähnten Stößel würde eine Anordnung mittels nur einer Feder zu unsymmetrischen Kraftverteilungen und damit eventuell zu Verkippungen und Verkantungen des Stößels führen. Die Feder birgt den weiteren Vorteil, dass durch sie der Haltebügel in einem geöffneten Zustand der Lageraufnahme in einer definierten Position gehalten wird. Dadurch wird beispielsweise Verkantungen und Fehlfunktionen des Haltebügels entgegengewirkt.

Ein weiterer Vorteil besteht darin, dass durch ein Federpaket und einen entsprechend geformten Stellhebel eine Verriegelung des Stellhebels und damit des Haltebügels und der gesamten Lageraufnahme ermöglicht wird, bei der eine verriegelnde Kraft durch ein passives Bauelement verursacht wird und nicht dauerhaft durch einen Antrieb aufrecht erhalten werden muss.

Ein weiterer Vorteil besteht darin, dass durch die reversible Verformbarkeit des Federpakets, die mit einem Kraftaufwand und damit mit einem Energietransfer einhergeht, eine passive Verriegelung geschaffen wird, da zur Entriegelung des Haltebügels zuerst eine Kraft ausgeübt werden muss, die an einer anderen Stelle angreift, als eine Kraft, die ein Verschwenken des Haltebügels bewirkt. Somit wird verhindert, dass sich die Verriegelung von selbst löst, selbst wenn beispielsweise ein Antrieb, der den Stellhebel bewegen kann, ausfallen würde.

Ein weiterer Vorteil besteht darin, dass durch den mittels einer Feder öffnenden Haltebügel zum Öffnen des Haltebügels eine Kraft nicht durch ein aktives Bauelement ausgeübt werden muss und insbesondere nicht durch den Stellhebel. Dadurch ist es leicht möglich, eine für die Verriegelung des Haltebügels relevante Kontaktfläche zwischen Haltebügel und Stellhebel zu erreichen, da ein solcher Kontakt im entriegelten Zustand des Haltebügels nicht notwendig und nicht gegeben ist. Ein Austausch eines diese Kontaktfläche bildenden Federpakets ist damit sehr leicht möglich und wird durch die einfache Fixierung mittels einer leicht lösbaren Verbindung weiter vereinfacht.

Ein weiterer Vorteil besteht darin, dass durch die Anordnung von Ausnehmungen in den Klapplagerhälften eine passgenaue Lagerung eines Zylinderzapfens ermöglicht wird und dass durch die im Wesentlichen halbkreisförmigen Ausnehmungen eine einfache Entnahme des Zylinderzapfens gewährleistet wird.

Ein weiterer Vorteil besteht darin, dass durch eine Anordnung des Stellhebels und des Haltebügels an jeweils unterschiedlichen Klapplagerhälften eine besonders günstige Anordnung eines Haltebolzens und einer Kontaktstelle zwischen Haltebügel und Stellhebel und einer Drehachse des Stellhebels realisierbar ist, weil bei sehr kurzem Abstand und geradliniger Anordnung dieser Orte keine komplizierte Geometrie sondern eine ebene Trennfläche zwischen den beiden Klapplagerhälften möglich ist.

Ein Vorteil einer Ausführungsform besteht darin, dass mittels einer Kralle und eines starr angeordneten und eines beweglichen Haltebolzens auf andere Art eine passive Verriegelung entsteht, die die oben genannten Vorteile aufweist.

Ein weiterer Vorteil besteht darin, dass über einen Anpressdruck und eine Formschräge eine Kraft vorgebbar ist, mit der ein Zylinderzapfen in der durch die beiden Klapplagerhälften gebildeten Lageraufnahme zusammengepresst werden.

Ein weiterer Vorteil besteht darin, dass durch eine parallele Lage von Drehachsen des Haltebügels und des Stellhebels eine besonders fehlerarme Funktionsweise ermöglicht wird, da Verkanntungen vermieden werden. Eine Herstellung des Haltebügels und des Stellhebels ist dadurch ebenfalls in besonders einfacher Weise möglich.

Ausführungsbeispiele der Erfindung sind in den Zeichnungen dargestellt und werden im Folgenden näher beschrieben.

Es zeigen:
- Fig. 1: eine Schnittdarstellung durch eine Druckmaschine;
- Fig. 2: eine schematische Darstellung dreier Zylinder und einer Schienenanordnung mit Antrieb zum Verschieben der Zylinder relativ zueinander;
- Fig. 3a: eine schematische Darstellung einer Schienenanordnung mit Klemmelementen;
- Fig. 3b: eine schematische Darstellung einer alternativen Schienenanordnung mit Klemmelementen;
- Fig. 4: eine vereinfachte Darstellung der Anordnung aus Fig. 2 in einem ersten Schritt eines Austauschvorgangs zweier Zylinder;
- Fig. 5: eine vereinfachte Darstellung der Anordnung aus Fig. 2 in einem zweiten Schritt eines Austauschvorgangs zweier Zylinder;
- Fig. 6: eine vereinfachte Darstellung der Anordnung aus Fig. 2 in einem dritten Schritt eines Austauschvorgangs zweier Zylinder;
- Fig. 7: eine vereinfachte Darstellung der Anordnung aus Fig. 2 in einem vierten Schritt eines Austauschvorgangs zweier Zylinder;
- Fig. 8: eine vereinfachte Darstellung der Anordnung aus Fig. 2 in einem fünften Schritt eines Austauschvorgangs zweier Zylinder;
- Fig. 9: eine vereinfachte Darstellung der Anordnung aus Fig. 2 in einem sechsten Schritt eines Austauschvorgangs zweier Zylinder;
- Fig. 10: zwei Schlitten eines Schienensystems, wobei an einen Schlitten eine Lageraufnahme angeordnet ist;
- Fig. 11: eine schematische Darstellung einer Lageraufnahme in einem geöffneten Betriebszustand;
- Fig. 12: eine schematische Darstellung einer Lageraufnahme in einem geschlossenen Betriebszustand;
- Fig. 13: eine schematische Darstellung einer Lageraufnahme in einem teilweise verriegelten Betriebszustand;
- Fig. 14: eine schematische Darstellung einer Lageraufnahme in einem verriegelten Betriebszustand;
- Fig. 15: eine weitere Ausführungsform einer Lageraufnahme in einem verriegelten Betriebszustand;
- Fig. 16: eine schematische Darstellung einer Handhabungseinrichtung in einer Stellung zum Austausch eines oberen Zylinders;
- Fig. 17a: eine vereinfachte Darstellung der Handhabungseinrichtung aus Fig. 16 in einem ersten Schritt einer Demontage eines oberen Zylinders;
- Fig. 17b: eine vereinfachte Darstellung der Handhabungseinrichtung aus Fig. 16 in einem zweiten Schritt einer Demontage eines oberen Zylinders;
- Fig. 17c: eine vereinfachte Darstellung der Handhabungseinrichtung aus Fig. 16 in einem dritten Schritt einer Demontage eines oberen Zylinders;
- Fig. 17d: eine vereinfachte Darstellung der Handhabungseinrichtung aus Fig. 16 in einem vierten Schritt einer Demontage eines oberen Zylinders;
- Fig. 17e: eine vereinfachte Darstellung der Handhabungseinrichtung aus Fig. 16 in einem fünften Schritt einer Demontage eines oberen Zylinders;
- Fig. 18a: eine vereinfachte Darstellung der Handhabungseinrichtung aus Fig. 16 in einem ersten Schritt einer Demontage eines unteren Zylinders;
- Fig. 18b: eine vereinfachte Darstellung der Handhabungseinrichtung aus Fig. 16 in einem zweiten Schritt einer Demontage eines unteren Zylinders;
- Fig. 18c: eine vereinfachte Darstellung der Handhabungseinrichtung aus Fig. 16 in einem dritten Schritt einer Demontage eines unteren Zylinders;
- Fig. 18d: eine vereinfachte Darstellung der Handhabungseinrichtung aus Fig. 16 in einem vierten Schritt einer Demontage eines unteren Zylinders;
- Fig. 18e: eine vereinfachte Darstellung der Handhabungseinrichtung aus Fig. 16 in einem fünften Schritt einer Demontage eines unteren Zylinders;
- Fig. 18f: eine vereinfachte Darstellung der Handhabungseinrichtung aus Fig. 16 in einem sechsten Schritt einer Demontage eines unteren Zylinders;
- Fig. 19a: eine vereinfachte Darstellung der Handhabungseinrichtung aus Fig. 16 in einem ersten Schritt einer Demontage zweier Zylinder;
- Fig. 19b: eine vereinfachte Darstellung der Handhabungseinrichtung aus Fig. 16 in einem zweiten Schritt einer Demontage zweier Zylinder;
- Fig. 19c: eine vereinfachte Darstellung der Handhabungseinrichtung aus Fig. 16 in einem dritten Schritt einer Demontage zweier Zylinder;
- Fig. 19d: eine vereinfachte Darstellung der Handhabungseinrichtung aus Fig. 16 in einem vierten Schritt einer Demontage zweier Zylinder;
- Fig. 20: eine schematische Darstellung einer alternativen Handhabungseinrichtung in einer Stellung analog zu der in Fig. 16;
- Fig. 21: eine Handhabungseinrichtung für einen Austausch zweier Zylinder gleichzeitig;
- Fig. 22: eine schematische Darstellung eines Schnitts durch eine Kopplung eines Zylinders an einen Antrieb, wobei der Zylinder und der Antrieb gekoppelt sind;
- Fig. 23: eine schematische Darstellung eines Schnitts durch eine Kopplung eines Zylinders an einen Antrieb, wobei der Zylinder und der Antrieb entkoppelt sind;
- Fig. 24: eine schematische Darstellung eines Schnitts durch eine Kopplung eines Zylinders an einen Antrieb, wobei ein Seitenregister in eine Richtung verstellt wird;
- Fig. 25: eine schematische Darstellung eines Schnitts durch eine Kopplung eines Zylinders an einen Antrieb, wobei ein Seitenregister in eine andere Richtung verstellt wird;
- Fig. 26: eine weitere Darstellung des Koppelkörpers und des Antriebs;
- Fig. 27: eine Darstellung einer Kopplung analog zu der in Fig. 22 bei der eine

Lageraufnahme und ein Schienen- und Schlittensystem mit dargestellt sind.

Eine als Rotations-Offsetdruckmaschine ausgebildete Druckmaschine, weist zumindest ein, als Rotations-Offsetdruckwerk ausgebildet Druckwerk auf. Dieses Druckwerk weist zumindest einen als Formzylinder 01 ausgebildeten Zylinder 01, der als Plattenzylinder 01 ausgebildet sein kann und zumindest einen als Druckzylinder 02 ausgebildeten Zylinder 02 oder Gegendruckzylinder 02 sowie gegebenenfalls zumindest einen als Übertragungszylinder 03 ausgebildeten Zylinder 03, der ein Gummituchzylinder 03 sein kann, auf. Wenn das Druckwerk als Rotations-Offsetdruckwerk ausgebildet ist, arbeiten Formzylinder 01, Übertragungszylinder 03 und Gegendruckzylinder 02 in einem Druckbetrieb in bekannter Weise zusammen, so dass die Zylinder 01; 02; 03 während des Druckbetriebes zumindest paarweise miteinander in direktem Kontakt stehen. In dem Druckbetrieb befinden sich sämtliche Vorrichtungen in einer Produktionsposition. Der Formzylinder 01 wird von einem Farbwerk mit Druckfarbe entsprechend einem zu verdruckenden Druckbild eingefärbt. Die selektiv auf dem Formzylinder 01 angeordnete Druckfarbe wird durch rollenden Kontakt auf den Übertragungszylinder 03 übertragen und von dort ebenfalls mittels rollendem Kontakt auf einen Bedruckstoff 04 übertragen, der zwischen dem Übertragungszylinder 03 und dem daran angepressten Gegendruckzylinder 02 hindurchgeführt wird. Der Bedruckstoff 04 kann beispielsweise bahn- oder bogenförmig sein und es können alle möglichen Bedruckstoffe 04 wie beispielsweise Papier, Karton, Pappe, Textilien, Kunststoff oder Metall bedruckt werden.

Die Erfindung lässt sich auch auf andere Druckverfahren wie Hochdruck, Flexodruck oder Tiefdruck übertragen. Außerdem ist, wenn die Rede davon ist, dass Druckfarbe übertragen wird, ebenso ist ein Übertragen von Lacken eingeschlossen und die Erfindung gilt daher ebenfalls für Lackiereinrichtungen.

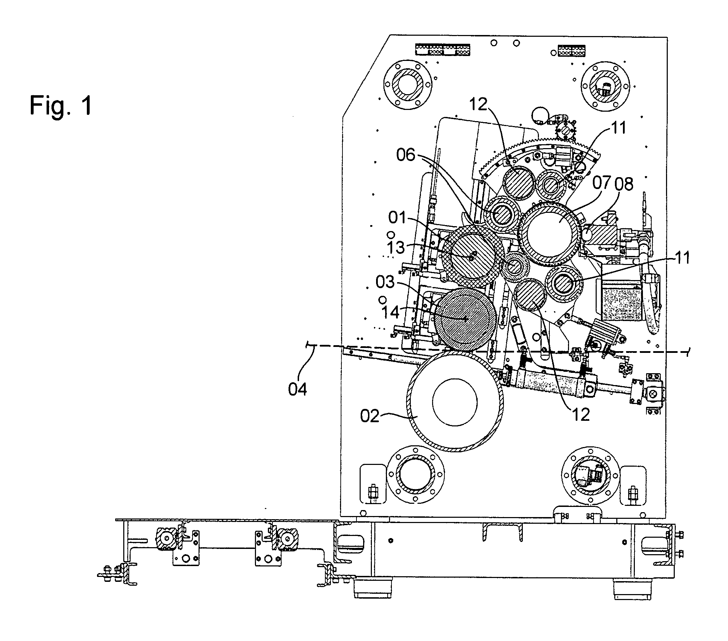

In einem Ausführungsbeispiel einer solchen Druckmaschine sind ein Gegendruckzylinder 02, ein Übertragungszylinder 03 und ein Formzylinder 01 angeordnet. Der Formzylinder 01 steht mit zumindest einer, bevorzugt jedoch zwei Farbauftragwalzen 06 in rollendem Kontakt. Die zumindest eine Farbauftragwalze 06 steht mit einer Farbwalze 07 in rollendem Kontakt, wobei diese Farbwalze 07 bevorzugt als Rasterwalze 07 ausgebildet ist. Die Farbwalze 07 steht mit einer Farbquelle 08 in Kontakt, wobei die Farbquelle 08 in dem Fall, dass die Farbwalze 07 als Rasterwalze 07 ausgebildet ist, bevorzugt als Kammerrakel 08 ausgebildet ist. Es sind auch andere Ausführungsformen denkbar, in denen beispielsweise die Farbquelle 08 als Farbkasten 08 ausgebildet ist und die Farbwalze 07 als zumindest teilweise in die Druckfarbe des Farbkastens 08 eintauchender Farbduktor 07 ausgebildet ist. Weiterhin ist es möglich, dass noch weitere Walzen zwischen dem Formzylinder 01 und der Farbwalze 07 angeordnet sind und es ist ebenfalls möglich, dass weitere Walzen 11; 12 angeordnet sind, die nicht auf einem direkten Farbtransportweg zwischen Farbwalze 07 und Formzylinder 01 liegen, sondern beispielsweise als Farbreibwalzen 12 ausgebildet sind und einer Vergleichmäßigung eines Farbfilms dienen, der sich auf Bestandteilen des Druckwerks und insbesondere auf dem Formzylinder 01 befindet (Fig. 1). Es ist ebenfalls möglich, zumindest ein Feuchtwerk mit entsprechenden Feuchtwalzen und zumindest einer entsprechenden Feuchtmittelquelle anzuordnen, in dem hier beschriebenen, bevorzugten Ausführungsbeispiel ist das jedoch nicht der Fall.

Der Formzylinder 01 und der Übertragungszylinder 03 sind bevorzugt übereinander angeordnet, bevorzugt so, dass im Druckbetrieb eine Rotationsachse 13; 14 eines der zwei Zylinder 01; 03 in vertikaler Richtung direkt über oder unter einem Bestandteil eines anderen der zwei Zylinder 01; 03 angeordnet ist, weiter bevorzugt so, dass zumindest die Rotationsachse 13 des Formzylinders 01 und die Rotationsachse 14 des Übertragungszylinders 03 in einer gemeinsamen senkrechten Ebene liegen. Ein Bedruckstoff 04 wird zumindest an der Stelle, an der er mit dem Übertragungszylinder 03 in Kontakt steht bevorzugt waagrecht transportiert. Im Folgenden wird von dieser Anordnung ausgegangen, die Erfindung lässt sich aber auch auf Ausführungsformen übertragen, in denen eine solche Ebene nicht senkrecht liegt und/oder der Bedruckstoff 04 nicht waagrecht transportiert wird und soll daher nicht auf diese spezielle Anordnung beschränkt sein. Außerdem soll die Umschreibung, dass zumindest die Rotationsachsen 13; 14 in einer gemeinsamen Ebene liegen auch den Fall einschließen, dass zumindest die beiden Rotationsachsen 13; 14 nicht exakt parallel liegen und damit auch nicht mathematisch exakt in einer Ebene liegen, beispielsweise weil eine der Rotationsachsen 13; 14 wegen einer Diagonalregistereinstellung leicht windschief zu der anderen Rotationsachse 13; 14 liegt.

Bevorzugt ist zumindest eine Walze und/oder oder ein Zylinder 01; 02; 03 austauschbar, weiter bevorzugt sind alle Walzen und Zylinder 01; 02; 03 des Druckwerks austauschbar, insbesondere der Formzylinder 01 und der Übertragungszylinder 03. Dadurch ist es beispielsweise möglich, verschiedene Formzylinder 01 einzusetzen, die sich zum einen in dem zu verdruckenden Druckbild unterscheiden, zum anderen aber auch einen unterschiedlichen Umfang aufweisen können und dadurch die Möglichkeit zum Drucken in unterschiedlichen Formaten eröffnen, ohne dass Platz auf beispielsweise einem bahnförmigen Bedruckstoff 04 unnötig unbedruckt bleiben würde. So kann ein kleineres Druckbild mit einem Formzylinder 01 kleineren Umfangs verdruckt werden, während bei einem bahnförmigen Bedruckstoff 04 und bei konstantem Format des Formzylinders 01 mit einem kleineren Druckbild ein größerer Verschnitt anfallen würde. Der Übertragungszylinder 03 wird im Fall eines Austauschs des Formzylinders 01 ebenfalls ausgetauscht, da die Umfänge von Formzylinder 01 und Übertragungszylinder 03 übereinstimmen oder zumindest in einem ganzzahligen Verhältnis stehen müssen.

Um Formzylinder 01 und Übertragungszylinder 03 verschiedener Formate in der Druckmaschine verwenden zu können, weist die Druckmaschine verschiedene Eigenschaften und Vorrichtungen auf.

Die Druckmaschine weist bevorzugt zumindest eine Positioniervorrichtung 101 für zumindest den Formzylinder 01 und den Übertragungszylinder 03 auf, da eine Positionierung der Rotationsachsen 13; 14 des Formzylinder 01 und des Übertragungszylinders 03 an deren Durchmesser angepasst werden muss, wenn diese Zylinder 01; 03 gegen solche mit anderen Umfängen ausgetauscht werden. Die Positioniervorrichtung 101 dient also dazu, trotz unterschiedlicher einsetzbarer Umfänge der Zylinder 01; 03 Abstände und Spalte zwischen Formzylinder 01, Übertragungszylinder 03 und Gegendruckzylinder 02 zu optimieren.

Um Zylinder 01; 02; 03 und/oder Walzen auswechseln zu können, sind diese bevorzugt mittels Lageraufnahmen 32, die bevorzugt als Klapplager 32 und weiter bevorzugt als steuerbare Schnellverschlusslager 32 ausgebildet sind, in der Druckmaschine rotierbar fixiert. Solche Schnellverschlusslager 32 gewährleisten einen sicheren und schnellen Austausch von Walzen und/oder Zylindern 01; 02; 03. Für einen maschinellen Austausch von Walzen und/oder Zylindern 01; 02; 03 sind bevorzugt steuerbare Schnellverschlusslager 32 angeordnet, da auf diese Weise ein solcher Austausch automatisch und somit präzise und schnell stattfinden kann und Bedienpersonal keiner Gefährdung bei einer Handhabung von teils mehr als 100 kg schweren Bauteilen der Druckmaschine ausgesetzt wird. Probleme mit nicht ganz geöffneten Klapplagern 32 werden durch eine Maschinensteuerung und bevorzugt in Verbindung mit entsprechenden Sensoren verringert oder gänzlich vermieden.

Zumindest ein Zylinder 01; 02; 03 ist in der Druckmaschine an seinen beiden Enden bezüglich seiner Rotationsachse 13; 14 gelagert. Dazu werden beispielsweise Zylinderzapfen 17 des Zylinders 01; 02; 03 in Lageraufnahmen 32 gehalten. Die Lageraufnahmen 32 können und manuell und/oder automatisch geöffnet bzw. geschlossen und/oder verriegelt bzw. entriegelt werden. Dadurch kann der zumindest eine Zylinder 01; 02; 03 in einer bestimmten vorgegebenen Lage rotierbar fixiert werden. Dabei weisen beide Zylinderzapfen 17 jeweils mindestens ein bevorzugt als Wälzlager 19 ausgebildetes Lager 19, beispielsweise ein Kugellager 19 oder ein Rollenlager 19 auf, deren äußerer, im Druckbetrieb unbeweglicher Bestandteil, beispielsweise Außenring, in jeweils einer Lageraufnahme 32 fixiert, beispielsweise eingespannt werden kann. Auf diese Weise kann der entsprechende Zylinder 01; 02; 03 um eine feste Rotationsachse 13; 14 rotieren. Die Lageraufnahmen 32 sind bevorzugt so angeordnet, dass sie mittels einer und bevorzugt mehrerer entsprechender Verstelleinrichtungen in Richtungen senkrecht zur Rotationsachse 13; 14 des Zylinders 01; 03 bewegt werden können. Dadurch können je nach Verstelleinrichtung Veränderungen eines Diagonalregisters vorgenommen werden und/oder es kann ein gesamter Zylinder 01; 03 bewegt, insbesondere verschoben werden, so dass sich beispielsweise ein Abstand zu einem anderen Zylinder 01; 02; 03 bzw. ein Anpressdruck zwischen Zylindern 01; 02; 03 ändert. Als Verstelleinrichtungen kommen Exzenterbuchsen oder bevorzugt Linearverstelleinrichtungen zum Einsatz. Wenn im Folgenden von Verschiebungen die Rede ist, so versteht sich, dass damit allgemeine Bewegungen, beispielsweise Ziehbewegungen genauso geeignet sind, ohne dass dies explizit erwähnt wird.

Zumindest eine Verstelleinrichtung weist bevorzugt gestellfeste Leisten 23; 24 oder Schienen 23; 24 oder Führungsschienen 23; 24 oder Führungen 23; 24 auf, in denen beispielsweise zumindest ein Schlitten 27; 28 über Gleitelemente 26 beweglich gelagert ist. Der zumindest eine Schlitten 27; 28 weist zumindest eine Lageraufnahme 32 auf, in welcher zumindest ein, mit dem Zylinderzapfen 17 jeweils eines Zylinders 01; 02; 03 fest verbundenes, Rollenlager 19 angeordnet ist. Über entsprechende Verstelleinrichtungen und gegebenenfalls entsprechende Antriebe ist es dadurch möglich, den Zylinder 01; 02; 03 je nach Anzahl und Ausführung der Verstelleinrichtungen in unterschiedliche Richtungen zu verschieben und damit Abstände zwischen Zylindern 01; 02; 03 und/oder Walzen einzustellen. Bevorzugt ist dies maschinengesteuert möglich. Eine Verschiebung des Zylinders 01; 02; 03 entlang seiner Rotationsachse 13; 14 ist hierdurch nicht möglich.

Für einen Austausch von Walzen und/oder Zylindern 01; 02; 03 ist bevorzugt zumindest eine Handhabungseinrichtung 301 und/oder eine Zylinderwechselvorrichtung vorgesehen, die weiter bevorzugt in der Lage sind, maschinengesteuert und möglichst ohne Eingreifen einer Bedienperson Walzen und/oder Zylinder 01; 02; 03 auszubauen und/oder einzubauen. Es sei darauf verwiesen, dass das über einen Austausch von Walzen und/oder Zylindern 01; 02; 03 Gesagte entsprechend auch für einen einzelnen Ausbau bzw. einen einzelnen Einbau eines oder mehrerer entsprechender Bauteile angewendet werden kann. Die zumindest eine Handhabungseinrichtung 301 dient also dem Zweck, auszutauschende Walzen und/oder Zylinder 01; 02; 03, aus der Druckmaschine zu entfernen und gegebenenfalls gegen andere zu ersetzen. Dabei sind verschiedene Ausführungsformen denkbar, beispielsweise kann zumindest eine Handhabungseinrichtung 301 zumindest einen Hebearm 327; 328 aufweisen, der einen Transport der Walzen und/oder Zylinder 01; 02; 03 durch eine Reihe von vertikalen und/oder horizontalen Bewegungsschritten aus der Druckmaschine in zumindest ein Lager oder zumindest einen Transportwagen hebt oder es kann zumindest eine Zylinderwechselvorrichtung zumindest einen Schwenkarm aufweisen, der Walzen und/oder Zylinder 01; 02; 03 durch Schwenkbewegungen zwischen zumindest einer Position innerhalb der Druckmaschine und zumindest einer Position beispielsweise auf oder in einer Transporteinrichtung beispielsweise unterhalb der Druckmaschine hin und/oder zurück verschwenken kann. Ein solcher Transportwagen oder eine solche Transporteinrichtung kann dabei so ausgestaltet sein, dass er beispielsweise eine Speicherposition oder eine Vielzahl von Speicherpositionen aufweist und damit Walzen und/oder Zylinder 01; 02; 03 aufnehmen kann und gegebenenfalls maschinengesteuert zwischen verschiedenen Orten transportieren kann, wobei an jedem relevanten Ort ausgewählt werden kann, welche Speicherposition zum Beladen oder Entladen freigegeben wird.

Da bevorzugt sowohl jeder Formzylinder 01 als auch jeder Übertragungszylinder 03 über jeweils einen eigenen Antrieb 16, beispielsweise in Form eines Motors 16, verfügt, muss dieser Antrieb 16 bei einem Wechsel des entsprechenden Zylinders 01; 03 berücksichtigt werden. Die Antriebe 16, die beispielsweise als lagegeregelte Synchronmotoren 16 mit Permanentmagneten ausgebildet sein können, sind bevorzugt koaxial zu den Zylindern 01; 03 angeordnet. Bevorzugt verbleiben die Motoren 16 während eines Wechsels der Zylinder 01; 03 ortsfest an ihrem im Druckbetrieb eingenommenen Ort, beispielsweise an einem Seitengestell der Druckmaschine. Zu diesem Zweck muss eine Koppelvorrichtung zwischen Zylinder 01; 03 und Motor 16 trennbar ausgeführt sein. Bevorzugt ist eine solche Trennung zumindest auch maschinengesteuert durchführbar. Weiter bevorzugt weist die Druckmaschine zumindest eine Seitenregistereinstellvorrichtung 602 auf, während ein Umfangsregister durch den separaten Antrieb 16 zumindest des Formzylinders 01 keine zusätzlichen mechanischen Komponenten erfordert. Die Seitenregistereinstellvorrichtung 602 ist bevorzugt mit der Kopplung zwischen Motor 16 und Formzylinder 01 zusammenwirkend angeordnet, da nach einem Wechsel des Formzylinder 01 üblicherweise eine neue Einstellung des Seitenregisters erforderlich ist.

Zumindest der Formzylinder 01 oder der Übertragungszylinder 03 oder sowohl der Formzylinder 01 als auch der Übertragungszylinder 03 weisen zumindest eine, bevorzugt jedoch jeweils zwei Diagonalregistereinstellvorrichtungen auf.

Es ist prinzipiell nicht nur möglich, Formzylinder 01 und/oder Übertragungszylinder 03 eines ersten Umfangs gegen solche mit einem anderen, zweiten Umfang auszutauschen, sondern es ist auch möglich, entsprechende Zylinder 01; 03 mit verschiedenen Aufzügen bzw. Hülsen, so genannten Sleeves, zu versehen, die jeweils einen gleichen Innendurchmesser und unterschiedliche Außendurchmesser aufweisen. Diese Sleeves werden auf einen Zylinder 01; 03 geschoben und darauf fixiert, somit sind mit einem einzigen solchen Zylinder 01; 03 verschiedene effektive Umfangslängen für verschiedene Druckvorgänge möglich.

Für eine gleich bleibende und hohe Druckqualität ist es vorgesehen, dass zumindest der Formzylinder 01 und/oder der Übertragungszylinder 03 temperierbar ausgebildet sind, um eine jeweilige Oberflächentemperatur zumindest der Mantelfläche steuern und/oder regeln zu können. Zu diesem Zweck sind zumindest der Formzylinder 01 und/oder der Übertragungszylinder 03 mit einem Zufluss und einem Abfluss sowie einem durchströmbaren Bestandteil versehen, so dass dieser von einem flüssigen Temperiermittel durchströmt werden und auf diese Weise im Druckbetrieb zumindest der Formzylinder 01 und/oder der Übertragungszylinder 03 an ihrer Mantelfläche auf einer konstanten Temperatur gehalten werden können.

Zusätzlich sind Bestandteile des Druckwerks, die im Druckbetrieb mit verstellbaren Zylindern 01; 03 in Kontakt stehen ebenfalls beweglich angeordnet, da bei einem Formatwechsel und insbesondere bei einem Umfangswechsel der Zylinder 01; 03 auch diese Bestandteile zumindest teilweise in ihrer Positionierung angepasst werden müssen. Beispielsweise muss gewährleistet sein, dass eine Farbauftragwalze 06 immer einen gleichen Abstand oder Anpressdruck zum Formzylinder 01 aufweist, unabhängig davon, welchen Umfang der Formzylinder 01 aufweist. Entsprechendes gilt für andere Kontaktstellen an denen einer der Zylinder 01; 03 beteiligt ist.

Es sein darauf verwiesen, dass der Ausdruck "parallel" in Vorangegangenen und im Folgenden sowohl als parallel also auch als antiparallel zu verstehen ist.

Um mit Zylindern 01; 02; 03 unterschiedlichen Umfangs drucken zu können und um gegebenenfalls Zylinder 01; 02; 03 ganz oder teilweise austauschen zu können oder zumindest voneinander abstellen zu können, sind die Lageraufnahmen 32 zumindest eines Zylinders 01; 02; 03 und bevorzugt zumindest des Formzylinders 01 und des Übertragungszylinders 03 mittels zumindest einer Positioniervorrichtung 101 an verschiedenen Positionen anordenbar. Eine solche Positioniervorrichtung 101 weist zumindest eine und bevorzugt mehrere parallele, als Führungsschienen 23; 24 oder Schienen 23; 24 ausgebildete Leisten 23; 24 und für jeden mittels der Positioniervorrichtung 101 positionierbaren Zylinder 01; 02; 03 zumindest eine Schlitten 27; 28 und bevorzugt je Zylinderzapfen 17 einen Schlitten 27; 28 auf. Die Führungsschienen 23; 24 können dabei zumindest an einer Seite beispielsweise die Form von Schwalbenschwanzführungen aufweisen. In den Figuren sind einfachere Ausführungsformen mit einem im Wesentlichen dreieckigen Querschnitt dargerstellt. Jeder mittels der Positioniervorrichtung 101 positionierbare Zylinder 01; 02; 03 ist also bevorzugt mit seinen beiden Zylinderzapfen 17 an jeweils einem Schlitten 27; 28 angeordnet, der entlang einer oder mehrerer Führungsschienen 23; 24 beweglich angeordnet ist. Bevorzugt werden die Führungsschienen 23; 24 jeweils von mehreren Schlitten 27; 28 gemeinsam genutzt, die entsprechend mehreren Zylindern 01; 02; 03 zugeordnet sind, so dass vorzugsweise für mindestens ein Druckwerk jeweils nur zwei Schienenanordnungen nötig sind, die jeweils zwei parallele Schienen 23; 24 aufweisen, zwischen denen Schlitten 27; 28 verfahrbar angeordnet sind.

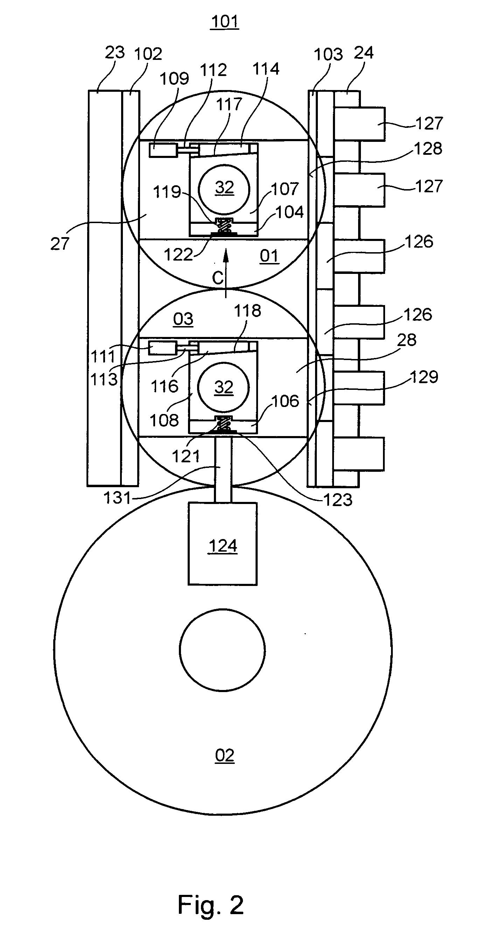

Eine schematische Darstellung einer Positioniervorrichtung 101 ist auch in Fig. 2 zu sehen. Die Positioniervorrichtung 101 weist hierbei beispielsweise eine Schienenanordnung auf, welche zumindest eine und bevorzugt zumindest zwei einander parallel gegenüber liegende Schienen 23; 24 mit jeweils daran angebrachten bzw. als deren Bestandteil ausgebildeten Laufleisten 102, 103 aufweist. Zwischen und/oder an den Schienen 23; 24 sind unterschiedliche Schlitten 27; 28 angeordnet, welche an ihren, den Laufleisten 102; 103 zugewandten, Seiten jeweilige Gegenstücke 29; 31 aufweisen, wodurch die Schlitten 27; 28 zwischen den Schienen 23; 24 spielfrei parallel zu einer Richtung C und bevorzugt insbesondere parallel zueinander bewegt werden können, wobei die Richtung C senkrecht zu zumindest einer Rotationsachse 13; 14 eines Zylinders 01; 02; 03 liegt und zumindest eine Komponente aufweist, die von einem Antrieb 124 auf zumindest einen Schlitten 27; 28 zu weist. Bei gleichzeitiger Bewegung der Schlitten 27; 28 werden diese also bevorzugt in der gleichen Richtung bewegt.

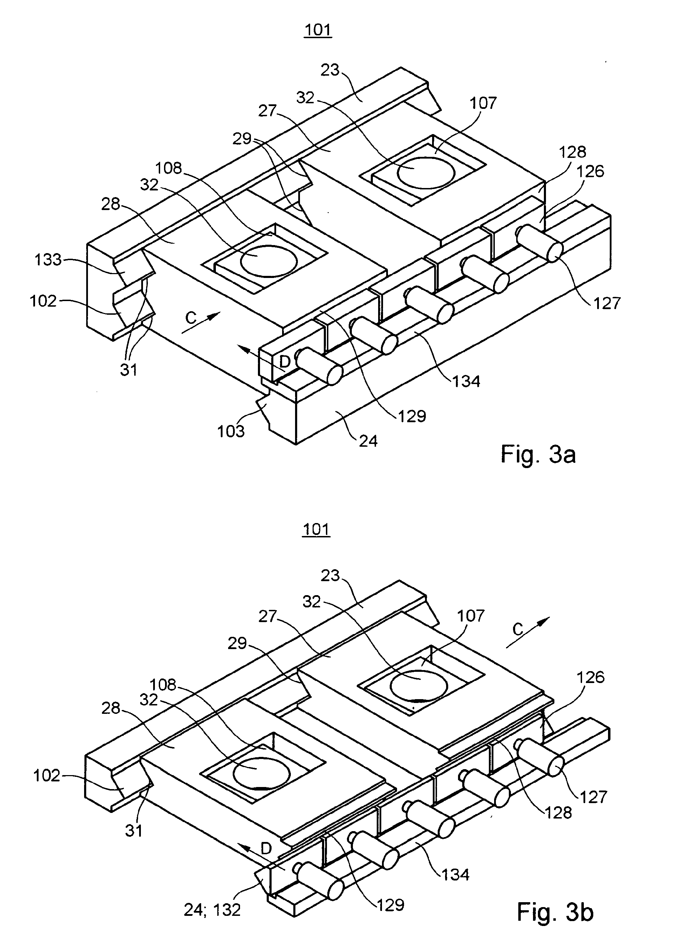

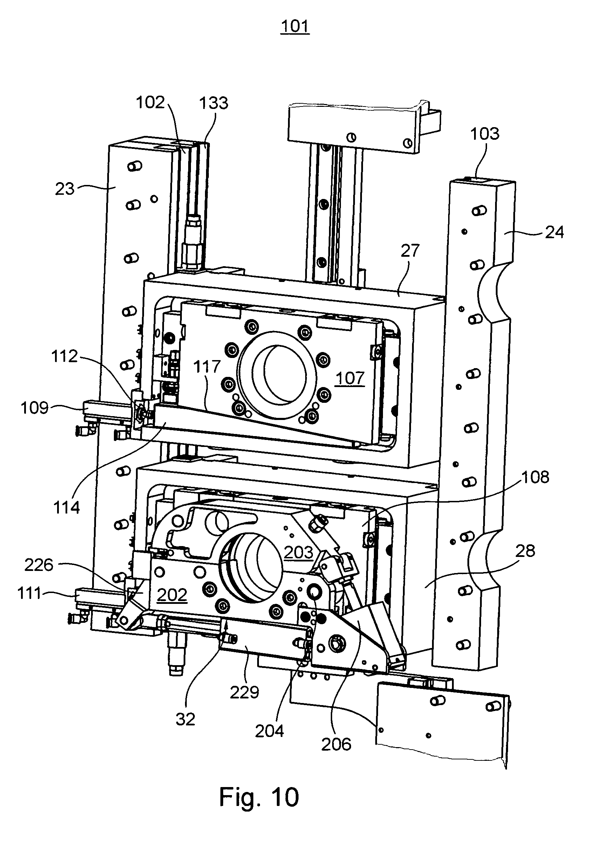

Jeder der Schlitten 27; 28 weist weiterhin bevorzugt eine Lageraufnahme 32 auf, in der zumindest ein Zylinderzapfen 17 des entsprechenden Zylinders 01; 02; 03 drehbar gelagert werden kann (Fig. 10). Weiterhin sind die Lageraufnahmen 32 jeweils auf Verstelleinheiten befestigt, welche einen beweglich in einer Ausnehmung 104; 106 der jeweiligen Schlitten 27; 28 angeordneten Verstellschlitten 107; 108 aufweisen. Die Bewegung der Verstellschlitten 107; 108 erfolgt beispielsweise mittels auf den Schlitten 27; 28 angeordneten Verstellantrieben 109; 111, die über eine Schubstange 112; 113 jeweils einen Schubkeil 114; 116 gegen eine an dem Verstellschlitten 107; 108 befindliche Schräge 117; 118 drücken, wodurch der Verstellschlitten 107; 108 in zwei entgegen gesetzte Richtungen, bevorzugt parallel zu der Richtung C, verschoben werden kann (Fig. 3a und 3b). Hierdurch wird eine Anstellkraft von benachbarten Zylindern 01; 02; 03 zueinander eingestellt. In einer bevorzugten Ausführungsform sind die Verstellschlitten 107; 108 gegen die Schlitten 27; 28 und die Verstellantriebe 109; 111 vorgespannt, beispielsweise mittels einer Feder 119; 121.

Vorzugsweise sind die Verstellschlitten 107; 108 und/oder die Verstellantriebe 109; 111 mit entsprechenden, beispielsweise in den Schlitten 27; 28 angeordneten, Kraftsensoren 122; 123 ausgerüstet, wodurch eine vorbestimmbare und kontrollierte Anpresskraft der Zylinder 01; 02; 03 aufeinander eingestellt und mittels einer Maschinenteuerung, bevorzugt einer übergeordneten Maschinensteuerung der gesamten Druckmaschine geregelt werden kann. Gleichzeitig ist es hierdurch möglich bei einem nachfolgend beschriebenen Verfahren der Schlitten 27; 28 mit ihren darauf befindlichen Zylindern 01; 02; 03 einen Kontaktpunkt der Zylinder 01; 02; 03 eindeutig zu bestimmen und hierdurch eine Ansteuerung des nachfolgend näher beschriebenen Antriebs 124 oder Verstellmotors 124 über die nicht dargestellte Maschinensteuerung zu regeln.

Weiterhin sind beispielsweise entlang der Schiene 24 und der Laufleiste 103 eine Mehrzahl von Fixierelementen 126, beispielsweise Klemmelementen 126, insbesondere Klemmbacken 126 angeordnet, welche jeweils eigenständig über einen eigenen Antrieb 127 oder ein eigenes Ansteuerelement 127 betätigt werden können und zum Festklemmen eines Schlittens 27; 28 auf eine jeweilige Klemmfläche 128; 129 des jeweiligen Schlittens 27; 28 einwirken. Unter einem Fixieren ist dabei insbesondere ein Fixieren bezüglich einer Bewegung parallel zu der Schiene 23; 24 zu verstehen. Die Fixierelemente 126 sorgen für eine reibschlüssige und/oder formschlüssige Verbindung, wobei im Folgenden beispielhaft Klemmelemente 126 beschrieben werden, die für eine reibschlüssige Verbindung sorgen. Es lassen sich aber auch andere Fixierelemente 126 einsetzen. Ein Vorteil der Klemmelemente 126 besteht darin, dass eine stufenlose Auswahl von relativen Positionierungen der Schlitten 27; 28 zu den Schienen 23; 24 möglich ist. Bewegungen für eine Einstellung beispielsweise eines Diagonalregisters werden dadurch nicht beeinträchtigt. Die Klemmelemente 126 sind aktivierbar und deaktivierbar und zumindest teilweise voneinander unabhängig über die oder eine übergeordnete Maschinensteuerung ansteuerbar ausgebildet. Die Klemmelemente 126, die im Folgenden ohne Einschränkung der Erfindung darauf auch als Klemmbacken 126 beschrieben werden, und/oder die Klemmflächen 128; 129 können aufgeraute und/oder mit einer Oberflächenstruktur versehene Kontaktflächen haben, wobei es bevorzugt ist, Oberflächenstrukturen von zusammenwirkenden Oberflächen aufeinander abzustimmen, um optimale Klemmeigenschaften zu erzielen. Durch die Klemmelemente 126 ist gewährleistet, dass die zumindest zwei Schlitten 27; 28 entlang der zumindest einen Schiene 23; 24 verschiebbar und an frei wählbar vorbestimmbaren Positionen entlang der Schienenanordnung fixierbar sind. Bevorzugt unterhalb der Schlitten 27; 28 ist der Antrieb 124 angeordnet, welcher beispielsweise über eine Schubstange 131 auf den ihm am nächsten gelegenen Schlitten 28 einwirkt, wodurch bei gelösten Klemmbacken 126 in diesem Ausführungsbeispiel der Schlitten 28 zusammen mit dem daran angeordneten Übertragungszylinder 03 entlang der Schienenanordnung in Richtung C bewegt werden kann. Somit können zwei Zylinder 01; 03 gleichzeitig mittels eines einzige Antriebs 124 verschoben werden. Ausgehend von einem Zustand während des Druckbetriebs befindet sich hierbei der Formzylinder 01 in mechanischem Kontakt mit dem Übertragungszylinder 03, so dass bei einer Verschiebung des Übertragungszylinders 03 gleichzeitig der Formzylinder 01 mit verschoben wird. Beispielhaft liegen hierbei die Zylinder 01; 02; 03 übereinander, wodurch die Zylinder 01; 03 aufgrund ihres Eigengewichts miteinander in Kontakt bleiben (Fig. 2). Es ist aber ebenfalls möglich, die Zylinder 01; 03 und/oder ihre jeweiligen Schlitten 27; 28 gegeneinander vorzuspannen, beispielsweise mittels zumindest einer, in den Figuren nicht gezeigten, Feder, die als Zug- oder Druckfeder ausgebildet sein kann. Dadurch wird die Möglichkeit geschaffen, beispielsweise den Antrieb 124 oberhalb der Zylinder 01; 03 anzuordnen oder die Zylinder 01; 02; 03 horizontal oder unter einem beliebigen Winkel zu einer Senkrechten anzuordnen. Gleiches gilt analog für einen Kontakt bzw. eine Vorspannung mit dem Gegendruckzylinder 02. Die Klemmelemente 126 sind also insbesondere zusätzlich zu den Schlitten 27; 28 und den Schienen 23; 24 und dem Antriebe 124 angeordnet.

Die Fig. 3a und 3b zeigen schematisch perspektivische Darstellungen unterschiedlicher Ausführungsformen der Positioniervorrichtung 101. Der Übersichtlichkeit halber sind hierbei nicht alle in Fig. 2 gezeigten Elemente dargestellt.

In einem Ausführungsbeispiel weist die Schiene 23 beispielsweise zumindest zwei unterschiedliche, zueinander parallele Laufleisten 102; 133 auf, welche in entsprechende Gegenstücke 29; 31 der Schlitten 27; 28 eingreifen. Die gegenüberliegende Schiene 24 weist dagegen lediglich eine Laufleiste 103 auf, welche in entsprechende Gegenstücke der Schlitten 27; 28 eingreift und hierdurch eine Verschiebbarkeit der Schlitten 27; 28 in Richtung C ermöglicht. An der Schiene 24 ist hierbei eine Trägerleiste 134 angebracht, auf welcher eine Reihe von Klemmbacken 126 mit ihren jeweiligen Ansteuerelementen 127 so befestigt ist, dass die Klemmbacken 126 mittels der Ansteuerelemente 127 parallel zu einer Richtung D, also senkrecht zu den Schienen 23; 24 und von der Schiene 24 zur anderen Schiene 23 weisend, und damit senkrecht zur Richtung C bewegt werden können (Fig. 3a).

Hierbei können die Klemmbacken 126 in Richtung D gegen die Klemmflächen 128; 129 auf den Schlitten 27; 28 gepresst werden, wodurch der Schlitten 27; 28 auch gegen die Laufleisten 102; 133 gepresst wird und wodurch der Schlitten 27; 28 in dieser Position in der Schienenanordnung fixiert werden kann. Die hierbei an der Schiene 23 vorhandene zweite Laufleiste 133 ist dabei zweckmäßigerweise so angeordnet, dass sie den Klemmflächen 128; 129 genau gegenüber liegt, so dass bei einem Festklemmen der Schlitten 27; 28 mittels der Klemmbacken 126 im Wesentlichen die Laufleiste 133 als Widerlager wirkt und hierdurch ein Verkippen der Schlitten 27; 28 in der Schienenanordnung wirkungsvoll vermieden wird.

Werden hingegen die Klemmbacken 126 entgegen der Richtung D bewegt, so wird die mechanische Verbindung zwischen den Klemmbacken 126 und den Klemmflächen 128; 129 gelöst, wodurch der Schlitten 27; 28 problemlos in der Schienenanordnung in Richtungen parallel zu C bewegt werden kann. Die Klemmbacken 126 führen dabei nur einen Hub von wenigen zehntel Millimetern aus, so dass auch bei einem Lösen der Fixierung der Schlitten 27; 28 die Schlitten 27; 28 spielfrei entlang der Schienenanordnung bewegt werden können. Es kann darüber hinaus vorgesehen sein, dass die Klemmbacken 126 und/oder die Klemmflächen 128; 129 aufgeraut sind oder eine ineinander eingreifende Oberflächenstruktur aufweisen, wodurch ein Wegrutschen der Schlitten 27; 28 in ihrer fixierten Position noch wirkungsvoller verhindert werden kann.

In einem weiteren Ausführungsbeispiel weist die Schiene 23 nur eine Laufleiste 102 auf, welcher eine Laufleiste 132 der Schiene 24 gegenüber liegt. Die Laufleiste 132 ist hierbei durch die Klemmbacken 126 gebildet, welche parallel zueinander und in einer Reihe angeordnet sind und entlang der Richtung C möglichst nahtlos nebeneinander angeordnet sind. Weiterhin sind die Klemmbacken 126 entsprechend einer Laufleiste ausgeformt, so dass sie problemlos in die entsprechenden an den Schlitten 27; 28 vorhandenen Gegenstücke 29; 31 eingreifen, wodurch eine spielfreie und problemlose Bewegung der Schlitten 27; 28 parallel zu der Richtung C ermöglicht wird. Die Klemmbacken 126 und ihre jeweiligen Antriebe 127 sind weiterhin auf einer Trägerleiste 134 so befestigt, dass die Klemmbacken 126 mittels der Antriebe 127 in Richtungen parallel zur Richtung D bewegt werden können (Fig. 3b).

Je nach Ansteuerung der Ansteuerelemente 127 der Klemmbacken 126 ist es so möglich, die Klemmbacken 126 in Richtung D zu bewegen und einen Schlitten 27; 28 an einer bestimmten Position entlang der Schienenanordnung zu fixieren. Die in der Schiene 23 vorhandene Laufleiste 102 ist dabei zweckmäßigerweise so angeordnet, dass sie der durch die Klemmbacken 126 gebildete Laufleiste 132 genau gegenüber liegt, so dass bei einem Festklemmen der Schlitten 27; 28 mittels der Klemmbacken 126 die Laufleiste 102 als Widerlager wirkt und hierdurch ein Verkippen der Schlitten 27; 28 in der Schienenanordnung wirkungsvoll vermieden wird.

Werden die Klemmbacken 126 über die Ansteuerelemente 127 hingegen entgegen der Richtung D bewegt, so wird eine Fixierung zumindest eines entsprechenden Schlittens 27; 28 aufgehoben und der Schlitten 27; 28 ist entlang der Schienenanordnung in Richtungen parallel zur Richtung C frei verfahrbar. Es kann dabei zweckmäßig sein, einen Hub der Klemmbacken 126 über nicht dargestellte Anschläge in der Trägerleiste 134 zu begrenzen. Die Klemmbacken 126 führen dabei nur einen Hub von wenigen zehntel Millimetern aus, so dass auch bei einem Lösen der Fixierung der Schlitten 27; 28 die Schlitten 27; 28 spielfrei entlang der Schienenanordnung bewegt werden können. Es kann darüber hinaus zweckmäßig sein die Klemmbacken 126 jeweils mechanisch gegen die in den Schlitten 27; 28 vorhandenen Gegenstücke 29; 31 vorzuspannen, beispielsweise mittels Federelementen, wodurch bei gelöster Stellung der Klemmbacken 126 zum einen die Schlitten 27; 28 in der Schienenanordnung spielfrei gehalten werden und zum anderen die Schlitten 27; 28 mittels des Antriebs 124 problemlos entlang der Schienenanordnung verfahren werden können.

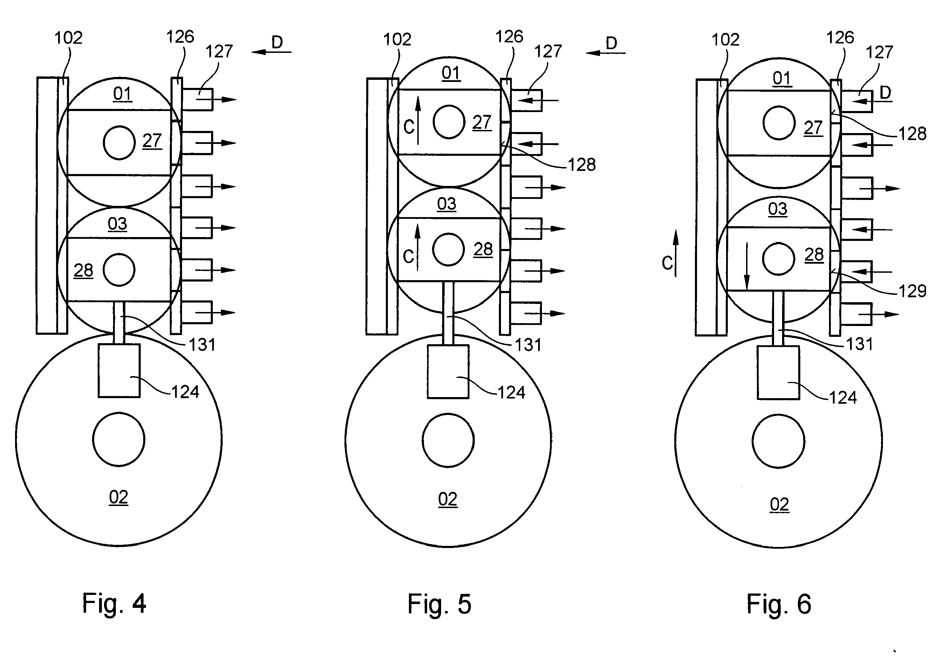

Ein Ablauf eines Zylinderwechsels unter Zuhilfenahme einer Positioniervorrichtung 101 erfolgt dann in mehreren Schritten, beispielsweise wie nachfolgend beschrieben und auch in Fig. 4 bis 9 schematisch dargestellt. Dabei ist insbesondere festzuhalten, dass die beiden verstellbaren Zylinder 01; 03 unabhängig voneinander in frei wählbaren Positionen entlang der Schienenanordnung fixiert werden können, wobei sie dennoch über einen gemeinsamen Antrieb 124 in gemeinsam genutzten Schienen 23; 24 verfahrbar angeordnet sind. Ermöglicht wird dies beispielsweise dadurch, dass die Schlittenanordnung im Wesentlichen senkrecht angeordnet ist, wodurch der Antrieb 124 unmittelbar auf einen Zylinder 03; und mittelbar auf einen mit diesem Zylinder 03 in Kontakt stehenden Zylinder 01 wirkend angeordnet ist. Dabei kann der Antrieb 124 unterhalb der in einer senkrechten Schienenanordnung befindlichen Schlitten 27; 28 angeordnet sein und die nicht fixierten Schlitten 27; 28 sich aufeinander und auf dem Antrieb 124 aufgrund der Schwerkraft abstützen oder es kann sein, dass die nicht fixierten Schlitten 27; 28 sich gegeneinander und/oder gegen den Antrieb 124 aufgrund einer mechanischen Vorspannung, beispielsweise mittels jeweiliger Federn, die Druck- oder Zugfedern sein können, abstützen. In einer anderen Ausführungsform ist der Formzylinder 01 unterhalb des Übertragungszylinders 03 angeordnet und das restliche Druckwerk ist entsprechend angepasst.

In einem ersten Schritt werden die Schlitten 27; 28 der sich in ihrer ersten Arbeitsposition befindlichen Zylinder 01; 03 gelöst, indem die Klemmbacken 126 über ihre Ansteuerelemente 127 entgegen der Richtung D bewegt werden. Es ist dabei zweckmäßig alle entlang der Schienenanordnung angebrachten Klemmbacken 126 entgegen der Richtung D zu bewegen, wodurch der gesamt mögliche Verfahrweg für die Schlitten 27; 28 entlang der Schienenanordnung freigegeben wird (Fig. 4).

In einem nächsten Schritt werden nun die Schlitten 27; 28 mit den darauf befindlichen Zylindern 01; 03 mittels des Antriebs 124 über die Schubstange 131 in Richtung C in eine erste Position verfahren, in welcher beispielsweise der Zylinder 01 eine für eine nachfolgenden Behandlung erforderliche Serviceposition einnimmt. In dieser Position wird nun der Schlitten 27 mittels der Klemmbacken 126 in der Schienenanordnung festgeklemmt, indem die Klemmbacken 126 in Richtung D bewegt werden (Fig. 5).

Der verbleibende frei bewegliche Schlitten 28 wird nachfolgend in einem weiteren Schritt entgegen der Richtung C an eine zweite Position verfahren, in welcher der Zylinder 03; eine für eine nachfolgende Behandlung erforderliche Serviceposition einnimmt. In dieser Position wird nun der Schlitten 28 mittels der Klemmbacken 126 in der Schienenanordnung festgeklemmt, indem die Klemmbacken 126 in Richtung D bewegt werden (Fig. 6).

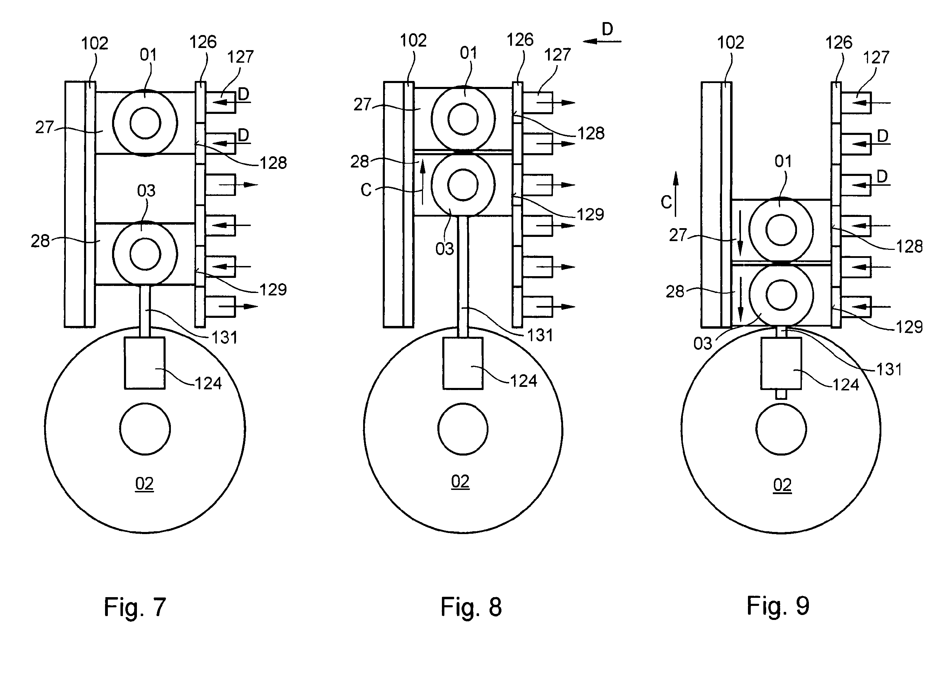

Hierdurch ist es möglich, die Zylinder 01; 03 in jeweilige bestimmte Positionen, beispielsweise Servicepositionen, zu verfahren und dort zu fixieren, wobei die Zylinder 01; 03 hierbei keinen mechanischen Kontakt mehr zueinander aufweisen, sondern vielmehr zueinander beabstandet sein können (Fig. 6), so dass beispielsweise die Zylinder 01; 03 in einfacher Weise gegen andere Zylinder 01; 03 ausgetauscht werden können, beispielsweise gegen solche mit einem anderen Umfang (Fig. 7). Insbesondere ist es dadurch möglich, auszutauschende Zylinder 01; 03 bei geeigneter Lagerung nach oben aus dieser Lagerung herauszuheben. Eine solche geeignete Lagerung kann beispielsweise genannte Lageraufnahmen 32 aufweisen.

Nach einem erfolgten Austausch der Zylinder 01; 03 wird nun in einem nachfolgenden Schritt die Klemmung des Schlittens 28 gelöst, so dass dieser problemlos in eine dritte Position in Richtung C verfahren werden kann, in welcher die Zylinder 01; 03 mechanischen Kontakt miteinander haben und aufeinander aufliegen, so dass die Klemmung des Schlittens 27 problemlos gelöst werden kann, indem die Klemmbacken 126 mittels ihrer Ansteuerelemente 127 entgegen der Richtung D bewegt werden (Fig. 8).

In einem letzten Schritt werden dann die Schlitten 27; 28 mit den sich darauf befindlichen Zylindern 01; 03 in ihre jeweilige zugehörige Arbeitsposition entgegen der Richtung C verfahren und mittels der Klemmbacken 126 dort fixiert (Fig. 9). Mittels der auf den jeweiligen Schlitten 27; 28 befindlichen Verstelleinrichtungen ist es in nachfolgenden Schritten dann möglich, einen für einen bestimmten Druckprozess erwünschten und/oder erforderlichen Anpressdruck der Zylinder 01; 03 aufeinander und auf den Gegendruckzylinder 02 einzustellen und mittels der Kraftsensoren 122; 132 über die nicht dargestellte übergeordnete Maschinensteuerung zu kontrollieren, indem die Verstellschlitten 107; 108 mittels der Verstellantriebe 109; 111 jeweils in oder entgegen der Richtung C bewegt werden.

Der Antrieb 124 zur Positionsbestimmung weist bevorzugt einen Encoder auf und/oder es sind entlang der Schienenanordnung Sensoren zumindest zur Bestimmung ausgewählter Positionen angebracht, um eine exakte Positionierung der Zylinder 01; 02; 03 zueinander zu gewährleisten. Der Antrieb 124 und/oder die Klemmbacken 126 können beispielsweise elektrisch, pneumatisch oder hydraulisch ausgeführt sein, so dass gegebenenfalls beispielsweise Versorgungseinrichtungen für Hydraulikflüssigkeit oder Ähnliches gemeinsam genutzt werden können. Der Antrieb 124 kann auch ein über eine mechanische Kopplung zu einem in der Druckmaschine vorhandenen Antrieb ausgeführter Antrieb 124 sein.

Bevorzugt klemmen die Klemmbacken 126 aus Sicherheitsgründen die Schlitten 27; 28 in einem nicht angesteuerten Zustand in der Schienenanordnung fest und geben sie nur in einem angesteuerten Zustand frei. Weiter bevorzugt sind die Lageraufnahmen 32 als Schnellverschlusslager 32 ausgeführt.

In einer bevorzugten Ausführungsform weisen die Gegenstücke 29; 31 in den Schlitten 27; 28 und/oder die Laufleisten 102; 103; 133 jeweilige Laufrollen oder Laufkugeln auf, wodurch die Schlitten 27; 28 problemlos und zuverlässig auf den Laufleisten 102; 103; 133 entlang der Schienenanordnung bewegt werden können. Es ist selbstverständlich auch möglich anstelle der beispielhaft genannten Schwalbenschwanzführung andere dem Fachmann bekannte Linearführungen zu verwenden.

Der Antrieb 124 kann dabei mit dem ihm nächstgelegenen Schlitten 27; 28 beispielsweise über eine Kupplung oder auch starr verbunden sein, er kann allerdings auch lediglich über eine mechanische Vorspannung mittels einer Feder oder über das Eigengewicht dieses Schlittens 27; 28 angekoppelt sein.

Es ist ebenfalls möglich mittels des einen Antriebs 126 mehr als zwei Zylinder 01; 03 zu bewegen und/oder zu positionieren. Beispielsweise können drei Zylinder 01; 02; 03 bewegt werden, dann einer der Zylinder 01; 02; 03 fixiert werden, dann zwei Zylinder 01; 02; 03 bewegt werden, dann ein weiterer Zylinder 01; 02; 03 fixiert werden und im Anschluss der letzte der Zylinder 01; 02; 03 bewegt und schließlich ebenfalls fixiert werden.

In einem Ausführungsbeispiel weist die als Schnellverschlusslager 32 ausgebildete Lageraufnahme 32 zumindest eine untere Klapplagerschale 202, insbesondere Klapplagerhälfte 202 und eine obere Klapplagerschale 203, insbesondere Klapplagerhälfte 203 auf. Die untere Klapplagerhälfte 202 ist dabei über nicht dargestellte Verbindungselemente ortsfest mit einem Bestandteil der Druckmaschine verbunden, beispielsweise an einem Gestell, einer Seitenwand oder einer Verschiebeeinrichtung, mit welcher ein Zylinder 01; 02; 03 gegen andere Zylinder 01; 02; 03 in der Druckmaschine einjustiert werden kann, angeordnet und bevorzugt fixiert.

Die eine, obere Klapplagerhälfte 203 ist mit der anderen, unteren Klapplagerhälfte 202 über ein Gelenk 204 so verbunden, dass die Klapplagerhälfte 203 um eine durch das Gelenk 204 definierte Drehachse verschwenkt werden kann, wobei die Drehachse vorzugsweise parallel zur Rotationsachse 13; 14 zumindest eines Zylinders 01; 02; 03 liegt. Das Verschwenken der Klapplagerhälfte 203 erfolgt dabei mittels eines Antriebs 206, welcher über Verbindungen 207; 208 mit der Klapplagerhälfte 203 und mit der Klapplagerhälfte 202 und/oder einer, relativ zu der Klapplagerhälfte 202 starr angeordneten Trägerplatte 209 verbunden ist. Die Verbindungen 207; 208 können als gelenkartige Halterungen 207; 208 ausgebildet sein und jeweils eine Schwenkachse aufweisen. Bevorzugt liegen diese Schwenkachsen parallel zueinander und weiter bevorzugt parallel zur Rotationsachse 13; 14 zumindest eines Zylinders 01; 02; 03. Der Antrieb 206 kann dabei, je nach Erfordernis, beispielsweise einen Hubmagnet 206, einen Elektromotor 206, einen Pneumatikzylinder 206 und/oder einen Hydraulikzylinder 206 aufweisen, welcher über die nicht dargestellte übergeordnete Maschinensteuerung angesteuert wird.

An der Klapplagerhälfte 203 ist weiterhin ein Haltebügel 211 so befestigt, dass er zumindest innerhalb eines bestimmten Winkelbereiches um eine durch ein Drehgelenk 212 definierte Drehachse 212 verschwenkt werden kann. Diese Drehachse 212 liegt bevorzugt parallel zur Rotationsachse 13; 14 zumindest eines Zylinders 01; 02; 03. Der Schwenkbereich kann dabei beispielsweise durch einen Anschlag 213 und eine vorgespannte Feder 214 begrenzt sein, wodurch der Haltebügel 211 im unbelasteten Zustand gegen den Anschlag 213 gedrückt wird und hierdurch eine bestimmte erste Position, beispielsweise eine Ruheposition, einnimmt. Die Feder 214 drückt den Haltebügel 211 also zumindest zeitweise und bevorzugt immer in eine entriegelnde Stellung. Ob nur die entsprechende Kraft wirkt oder auch tatsächlich eine Bewegung in die entriegelnde Stellung erfolgt, hängt von einem Zusammenspiel mit dem Stellhebel 226 ab.

Der Haltebügel 211 weist in einer Ausführungsform weiterhin an einer, seiner Drehachse 212 abgewandten, Seite zwei unterschiedliche Arme 216 und 217 auf, welche miteinander eine Ausformung 218 bilden. Der Arm 217 weist weiterhin an seiner der Ausformung 218 abgewandten Außenseite eine Formschräge 219 und eine Kralle 221 auf, welche im nachfolgend beschriebenen geschlossenen Zustand der Lageraufnahme 32 auf entsprechende Haltebolzen 222; 223 einwirken. Es kann weiterhin vorgesehen sein, dass der Arm 217 an seiner der Ausformung 218 zugewandten Seite eine Fläche 224 bzw. eine druck- und formstabilen Einlage 224 aufweist, auf welche wie nachfolgend beschrieben ein Stellhebel 226 einwirkt und wodurch eine Verformung und/oder ein Abrieb des Armes 217 des Haltebügels 211 aufgrund der mechanischen Einwirkung des Stellhebels 226 auf den Arm 217 vermieden oder zumindest verringert wird.

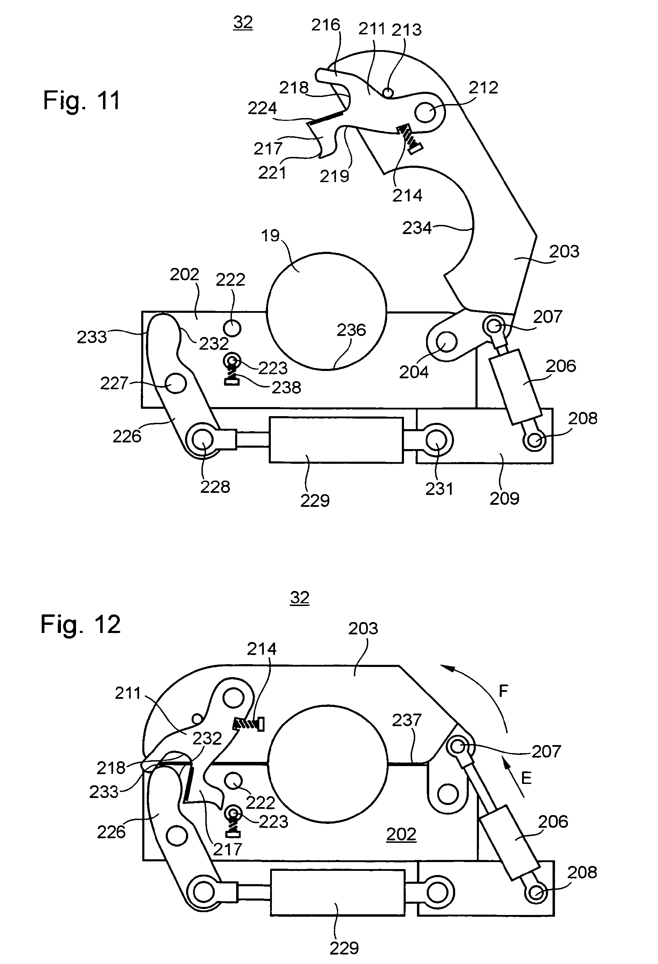

Die Klapplagerhälfte 202 weist den Stellhebel 226 auf, welcher um eine durch ein Drehgelenk 227 definierte Drehachse 227 schwenkbar und/oder drehbar gelagert ist. Bevorzugt liegt diese Drehachse 227 parallel zur Rotationsachse 13; 14 zumindest eines Zylinders 01; 02; 03 und/oder zur Drehachse 212 des Haltebügels 211. Der Stellhebel 226 ist darüber hinaus an seiner der Klapplagerhälfte 203 abgewandten Seite über eine Verbindung 228 mit einem Antrieb 229 verbunden, welcher sich über eine weitere Verbindung 231 an der Trägerplatte 209 abstützt. Der Antrieb 229 kann dabei, je nach Erfordernis, beispielsweise einen Hubmagnet 229, einen Elektromotor 229, einen Pneumatikzylinder 229 und/oder einen Hydraulikzylinder 229 aufweisen und über eine nicht dargestellte übergeordnete Maschinensteuerung ansteuerbar ausgebildet sein (Fig. 11).

Der Stellhebel 226 ist weiterhin an seiner der Klapplagerhälfte 203 zugewandten Seite 233 so ausgeformt, dass er bei einem Schließen der Lageraufnahme 32 in die Ausformung 218 des Haltebügels 211 eintaucht (Fig. 12). Darüber hinaus ist der Stellhebel 226 zumindest in einem Bereich 232 so als Fläche 232 ausgeformt, dass der Bereich 232 bei einer Drehung des Stellhebels 226 um die Drehachse 227 glatt über die entsprechenden Fläche 224 des Haltebügels 211 gleiten kann.

Die Klapplagerhälften 202; 203 weisen in jedem Fall weiterhin jeweils eine im Wesentlichen halbkreisförmige Ausnehmung 234; 236 zur Aufnahme eines Lagers 19 beispielsweise eines Zylinderzapfens 17 eines Zylinders 01; 02; 03 auf, wobei die jeweiligen Ausnehmungen 234; 236 so angeordnet sind, dass sie in einem geschlossenen Zustand des Klapplagers 32 eine im Wesentlichen kreisförmige Ausnehmung darstellen (Fig. 12). In dieser geschlossenen Position des Klapplagers 32 ist es vorgesehen, dass insbesondere bei einem in die Ausnehmungen 234; 236 eingelegten Lager 19 die Klapplagerhälften 202; 203 einander nicht direkt berühren, sondern über einen Spalt 237 voneinander getrennt sind (Fig. 12). Im Vorangegangenen und im Folgenden ist von Klapplagerhälften 202; 203 die Rede, es können jedoch auch allgemein Klapplagerschalen 202; 203 eingesetzt werden, die sich dadurch von Klapplagerhälften 202; 203 unterscheiden, dass zumindest eine Klapplagerschale 202; 203 eine Ausnehmung 234; 236 aufweist, die nicht halbkreisförmig ausgebildet ist, sondern beispielsweise einen Kreisbogen mit weniger als 180° abdeckt oder auch nur an einer oder mehreren Kontaltstellen mit dem Lager 19 in Berührung kommt.

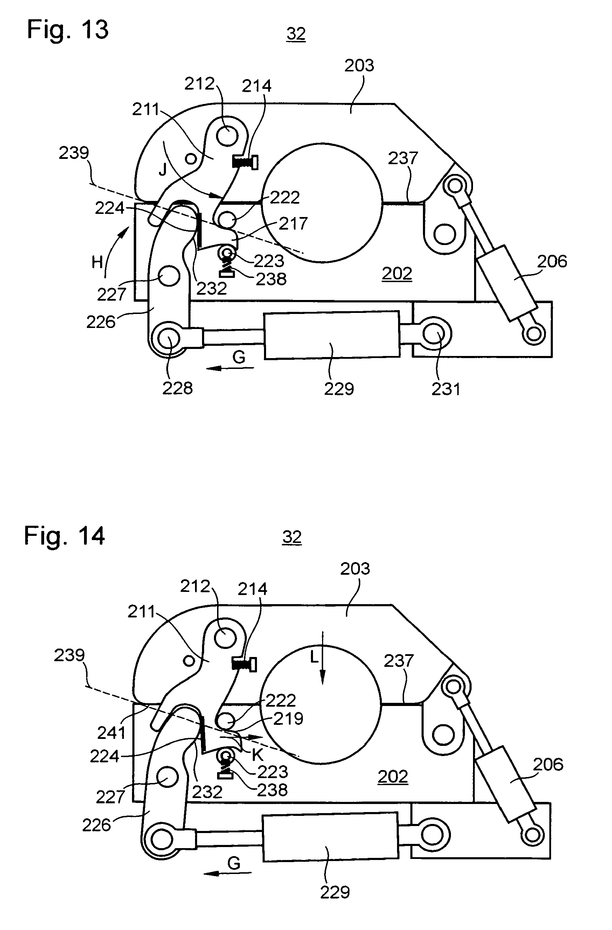

Zum Verschließen des Klapplagers 32 wird über die nicht dargestellte übergeordnete Maschinensteuerung der Antrieb 206 betätigt, wodurch die Verbindung 207 in einer Richtung E von der Verbindung 208 weg gedrückt wird und die Klapplagerhälfte 203 um die Drehachse in der Lagerung 204 in Richtung F verschwenkt wird. Eine solche Verschwenkung der Klapplagerhälfte 203 kann auf Grund der beiden unabhängigen Antriebe 206; 229 unabhängig von und insbesondere nach einem Einsetzen eines entsprechenden Zylinders 01; 02; 03 bzw. Zylinderzapfens 19 in das Klapplager 32 erfolgen, so dass beispielsweise dazwischen noch eine Lagekontrolle des Zylinders 01; 02; 03 durchführbar ist. Hierdurch gelangt der Bereich 233 in die Ausnehmung 218 des Haltebügels 211, wobei der Haltebügel 211 in dieser Position nicht in die Haltebolzen 222; 223 eingreift. Eine anschließende Betätigung des Antriebs 229 über die nicht dargestellte übergeordnete Maschinensteuerung verschiebt die Verbindung 228 in einer Richtung G von der Verbindung 231 weg, wodurch der Stellhebel 226 um seine Drehachse 227 in eine Richtung H verschwenkt wird (Fig. 13). Die Richtung H ist so festgelegt, dass die Fläche 232 des Stellhebels 226 auf die Fläche 224 des Haltebügels 211 drückt und den Haltebügel 211 um seine Drehachse 212 verdreht, wodurch der Haltebügel 211 in einer Richtung J verschwenkt wird und der Arm 217 zwischen die Haltebolzen 222; 223 gedrückt wird. Die Richtung J ist dabei so festgelegt, dass ein Verschwenken des Haltebügels 211 in diese Richtung J eine Verriegelung des Klapplagers 32 bewirkt. Es ist dabei vorgesehen, dass der Haltebolzen 223 mittels einer Feder 238 federnd gelagert ist, wodurch die Kralle 221 hinter den Haltebolzen 223 gelangt und das Klapplager 32 in dieser Position verriegelt, indem die Kralle 221 in den an einer Klapplagerhälfte 202 befestigten Haltebolzen 223 einrastet.

Die Formschräge 219 des Haltebügels 211 wird hierbei gegen den feststehenden Haltebolzen 222 gedrückt und ist so ausgeformt, dass zumindest in dieser Position des Haltebügels 211 eine Tangente 239 an den Haltebolzen 222, die durch eine Berührstelle zwischen Haltebolzen 222 und Haltebügel 211 verläuft, mit dem Spalt 237 zwischen den Klapplagerhälften 202 und 203 einen spitzen Winkel bildet, der den Haltebolzen 222 einschließt. Dadurch ist es möglich, mittels des Antriebs 229 über den Stellhebel 226 den Haltebügel 211 und insbesondere den Arm 217 in einer Richtung K gegen den Haltebolzen 222 zu pressen, wodurch über den Haltebügel 211 die Klapplagerhälfte 203 in eine Richtung L gedrückt wird und hierdurch ein Lager 19 bzw. Zylinderzapfen 17 in den Lageraufnahmen 234; 236 fixiert wird (Fig. 14). Die Richtung K ist dabei so festgelegt, dass durch die Pressung in Richtung K das Verschwenken des Haltebügels 211 in Richtung J fortgesetzt wird bzw. würde. Die Richtung L weist dabei von der einen Klapplagerhälfte 203 auf die andere Klapplagerhälfte 202 zu. Je nach Toleranzmaß der verwendeten Lager 19 bzw. Zylinderzapfen 17 kann dabei der Spalt 237 zumindest im Bereich 241 der Lageraufnahme 32 verkleinert werden oder ganz verschwinden.

Ein Öffnen der Lageraufnahme 32 erfolgt prinzipiell umgekehrt zu der beschriebenen Abfolge, wobei zum Entriegeln des Klapplagers 32 der Antrieb 229 entgegen der Richtung G betrieben wird, wodurch der Stellhebel 226 entgegen der Richtung H verschwenkt wird. Hierdurch wird der Bereich 233 des Stellhebels 226 gegen eine innere Wandung der Ausnehmung 218 im Bereich des Armes 216 gedrückt, wodurch der Arm 217 des Haltebügels 211 aus dem Bereich der Haltebolzen 222; 223 herausgeschwenkt wird und beispielsweise in seine Ruheposition gelangt. Die hierdurch entriegelte Klapplagerhälfte 203 kann anschließend durch eine entsprechende Ansteuerung des Antriebs 206 entgegen der Richtung F verschwenkt werden, wodurch das Klapplager 32 geöffnet wird. Ein Verschwenken des Haltebügels 211 erfolgt zumindest teilweise dadurch, dass der Stellhebel 226 den Haltebügel 211 freigibt und die Feder 214 eine Schwenkbewegung des Haltebügels 211 bewirkt. In einer entsprechenden Ausführungsform, in der beispielsweise kein Arm 216, sondern nur der Arm 217 angeordnet ist, erfolgt die Schwenkbewegung ausschließlich aufgrund der Freigabe und der Federkraft.

Die als Schnellverschlusslager 32 bzw. Klapplager 32 ausgeführte Lageraufnahme 32 weist also zumindest einen Antrieb 206 zum Aufklappen und/oder Zuklappen des Klapplagers 32 und zumindest einen weiteren Antrieb 229 zur Verriegelung und/oder zur Entriegelung des Klapplagers 32 und zum Aufwenden einer Kraft auf ein in dem Klapplager 32 befindliches Lager 19 auf.

Der Stellhebel 226 kann auf den Haltebügel 211 einwirken, wodurch der Haltebügel 211 von einer ersten Position (Fig. 12) in eine zweite Position (Fig. 13) und in eine dritte Position (Fig. 14) gebracht werden kann. Dabei ist der Haltebügel 211 in der ersten Position nicht in Eingriff mit einem aus den Haltebolzen 222; 223 gebildeten Widerlager, während der Haltebügel 211 in der zweiten Position in Eingriff mit diesem Widerlager ist und in der dritten Position in Eingriff mit dem Widerlager ist und über dieses Widerlager und die Klapplagerhälften 202; 203 eine Kraft auf ein in dem Klapplager 32 befindliches Lager 19 ausgeübt wird, was zu einer spielfreien Lagerung des Lagers 19 führt.

Bevorzugt weisen die Antriebe 206; 229 und/oder die Lageraufnahme 32 Sensoreinrichtungen auf, die eine jeweiligen Positionen der Antriebe 206; 229 und/oder der Klapplagerhälften 202; 203 und/oder des Haltebügels 211 und/oder des Stellhebels 226 erfassen können und gegebenenfalls der Maschinensteuerung übermitteln, wodurch unkontrollierte Zustände des Schnellverschlusslagers 32, beispielsweise durch eine Verklemmung des Haltebügels 211 in einem verriegelten Betriebszustand, vermieden werden, indem der Haltebügel 211 mittels eines Stellhebels 226 aus einer bestimmten Position in eine andere bestimmte Position gebracht werden kann und eine kontinuierliche Positionskontrolle des Haltebügels 211 gewährleistet ist.

Die Lageraufnahme 32 weist also zwei über ein Gelenk 204 miteinander verbundenen Klapplagerhälften 202; 203 auf, die, im zusammengeklappten Zustand mit einem in der Lageraufnahme 32 befindlichen Lager 19, einen Spalt 237 zueinander aufweisen, wodurch die Möglichkeit geschaffen wird, die beiden Klapplagerhälften 202; 203 gegeneinander vorzuspannen und insbesondere das in der Lageraufnahme 32 befindliche Lager 19 formschlüssig in die Lageraufnahme 32 einzuspannen. Bevorzugt weisen die jeweiligen Ausnehmungen 234; 236 zusätzliche Führungselemente, beispielsweise Krägen oder Kanten auf, wodurch ein Lager 19 eines Zylinders 01; 02; 03 in seiner axialen Bewegung begrenzt wird und/oder in die Lageraufnahme 32 axial zentriert wird.

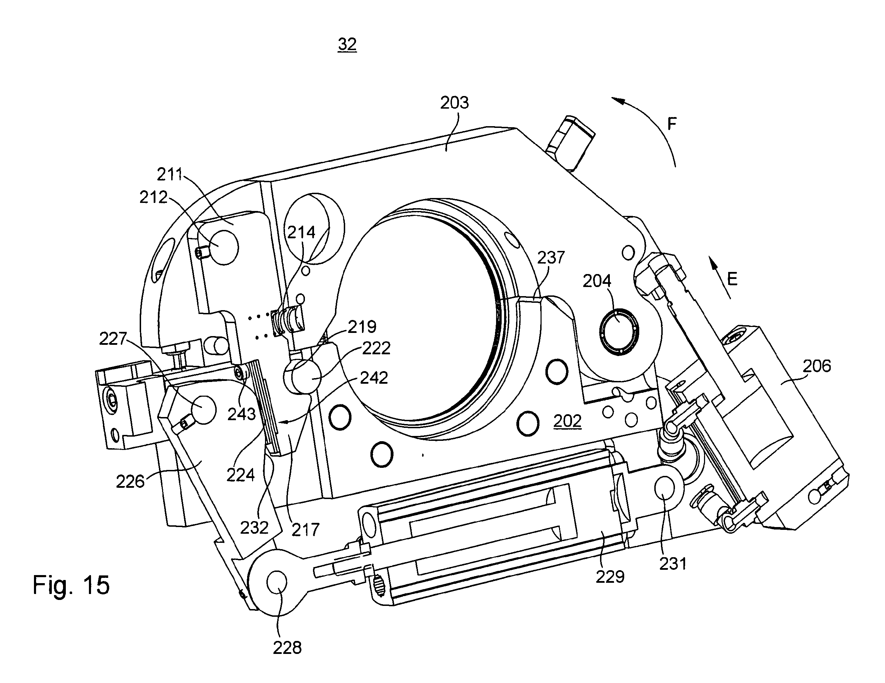

In einer bevorzugten Ausführungsform wird auf den Haltebolzen 223, die Feder 238 und den Arm 216 verzichtet. Ein Entriegeln des Schnellverschlusslagers 32 geschieht, indem mittels des Antriebs 229 der Stellhebel 226 in die entsprechende Richtung gedreht wird, wodurch dieser den Haltebügel 211 freigibt. Der Haltebügel 211 wird dann ausschließlich durch die Kraft der Feder 214 in eine entriegelte Position verschwenkt (Fig. 15). Alles bereits beschriebene, was nicht im Widerspruch zu dieser Ausführungsform steht, gilt für diese Ausführungsform entsprechend.

Bevorzugt weist der Haltebügel 211 weiterhin eine lösbare Verbindung 243 auf, die weiter bevorzugt als Schraube 243 ausgebildet ist. Diese Verbindung 243 dient dazu, die Einlage 224, die bevorzugt als Federpaket 224 ausgebildet ist an dem Haltebolzen 222 zu fixieren. Das Federpaket 224 hat dabei mehrere Zwecke. Zum einen dient es dazu, bei einem Verriegelungsvorgang, d. h. wenn mittels des Stellhebels 226 der Haltebügel 211 festgeklemmt wird, Toleranzen auszugleichen. Zum anderen dient es dazu, dass der Stellhebel 226 einrasten kann. Dazu ist die Fläche 232 des Stellhebels 226 flach ausgebildet und liegt im verriegelten Zustand bevorzugt plan an dem Federpaket 224 an. Um in diese Position zu kommen oder aus dieser Position heraus zu kommen muss der Stellhebel 226 verschwenkt werden und während dieser Verschwenkung verformt ein Teil des Stellhebels 226 das Federpaket 224, indem dieser Teil des Stellhebels 226 das Federpaket 224 zumindest teilweise in einen hinter dem Federpaket 224 liegenden Hohlraum 242 des Haltebügels 211 drückt. Das Federpaket 224 wird also beim Wechsel zwischen einer verriegelten und einer entriegelten Position des Stellhebels 226 reversibel verformt, wobei eine gewisse Kraft zur Verformung aufgewendet werden muss und dadurch eine gewisse Energie in das Federpaket 224 übertragen wird. Diese nötige Kraft sorgt dafür, dass der Wechsel zwischen der verriegelten und der entriegelten Position des Stellhebels 226 nicht von selbst oder versehentlich stattfinden kann. Insbesondere ist dadurch gewährleistet, dass die Lageraufnahme 32 gegebenenfalls verschlossen und verriegelt ist, ohne dass der Antrieb 229, der die Verriegelung und die Entriegelung bewirkt, währenddessen betrieben werden muss. Insbesondere muss in dem Fall, dass der Antrieb 229 als ein Hydraulikzylinder 229 oder ein Pneumatikzylinder 229 ausgebildet ist, nicht dauerhaft ein bestimmter Druck aufrecht erhalten werden, um die Verriegelung sicherzustellen, da diese Verriegelung durch das passive Federpaket 224 gewährleistet ist.

Da das Federpaket 224 für einen Übergang von einem ersten, geöffneten und damit entriegelten Betriebszustand der Lageraufnahme 32 in einen zweiten, verriegelten Betriebszustand der Lageraufnahme 32 zumindest einen dritten Betriebszustand durchlaufen muss, in dem das Federpaket 224 stärker verformt ist als in dem zweiten, verriegelten Betriebszustand, wirkt zumindest in diesem dritten Betriebszustand eine größere vom Stellhebel 226 übertragene Kraft auf das Federpaket 224 und ist daher zumindest in dem dritten Betriebszustand durch die Verformung mehr Energie in dem Federpaket 224 gespeichert, als in dem zweiten, verriegelten Betriebszustand.

Um gegebenenfalls das Federpakt 224 einfach ersetzen zu können, ist das Federpaket 224 mittels der Verbindung 243 lösbar an dem Haltebügel 211 angeordnet. Dadurch, dass die Entriegelung des Haltebügels 211 alleine durch die Feder 214 bewirkt wird, ist der Haltebügel 211 im entriegelten Zustand nicht mit dem Stellhebel 226 in Kontakt. Im Gegensatz zu einem Exzentersystem, wie es beispielsweise in der DE 40 41 497 A1 beschrieben ist, ist die Fläche 224, die eine Stellbewegung eines verriegelnden Bauteils mitbewirkt und gegebenenfalls ersetzt werden muss, im entriegelten Zustand also leicht zugänglich und kann durch die lösbare Verbindung 243 leicht ausgetauscht werden.

Eine Handhabungseinrichtung 301 einer Druckmaschine ist so ausgebildet, dass sie in einem ersten Betriebszustand zumindest zwei Zylinder 01; 03 zwischen verschiedenen Positionen, insbesondere einer ersten Position und einer zweiten Position hin und zurück bewegen, insbesondere transportieren und/oder heben und/oder verschieben kann. Eine der Positionen ist dabei vorzugsweise eine Serviceposition, beispielsweise eine Position, in der die Zylinder 01; 03 nicht miteinander in Kontakt stehen aber beide noch über ihre Zylinderzapfen 17 mit den jeweiligen Lageraufnahmen 32 in Kontakt stehen, mit denen sie auch in einem Druckbetrieb in Kontakt stehen. In eine solche Position können die Zylinder 01; 03 und die Lageraufnahmen 32 beispielsweise wie oben beschrieben mittels Schlitten 27; 28 entlang von Schienen 23; 24 gebracht werden. Dazu ist die Handhabungseinrichtung 301 in der Lage, die Zylinder 01; 03 in zumindest zwei verschiedene Richtungen M; N zu bewegen, die beide senkrecht zu den Rotationsachsen 13; 14 der Zylinder 01; 03 stehen und die nicht parallel zueinander liegen und von denen bevorzugt die eine Richtung M eine Komponente in horizontaler Richtung aufweist, die größer ist, als eine mögliche Komponente in vertikaler Richtung und von denen die andere Richtung N eine Komponente in vertikaler Richtung aufweist, die größer ist, als eine mögliche Komponente in horizontaler Richtung. Bevorzugt ist die Richtung M die horizontale Richtung und/oder ist die Richtung N die vertikale Richtung. In einer Ausführungsform kann mit der Handhabungseinrichtung 301 in einem zweiten Betriebszustand nur ein Zylinder 01; 03 zu einer Zeit bewegt werden, beispielsweise weil durch eine veränderte Lage zumindest zweier Zylinderaufnahmen 334; 336 der Handhabungseinrichtung 301 relativ zueinander nur noch ein Zylinder 01; 03 zugänglich ist und ein anderer Zylinder 03; 01 außerhalb einer Reichweite entsprechender Zylinderaufnahmen 336; 334 der Handhabungseinrichtung 301 liegt.

Im Folgenden wird ein erstes Ausführungsbeispiel einer Handhabungseinrichtung 301 beschrieben. Die Handhabungseinrichtung 301 weist einen Schlitten 304 auf, welcher entlang einer Schiene 306 mittels eines ersten Antriebs 307, beispielsweise über eine Spindel 308, im Wesentlichen in horizontaler Richtung verfahren werden kann. Es ist selbstverständlich auch möglich anstelle eines eine Spindel 308 aufweisenden Antriebs 307 einen Riemenantrieb 307, einen Kettenantrieb 307 oder einen Linearantrieb 307 zu verwenden oder anstelle des beispielhaft gezeigten elektrischen Antriebs 307 einen pneumatischen oder hydraulischen Antrieb 307 zu verwenden oder den Schlitten 304 mechanisch über ein Getriebe oder über Zahnräder und/oder Zahnstangen anzutreiben. Gleiches gilt hierbei für die weiteren im Folgenden beschriebenen Antriebe 307; 326. Auf dem Schlitten 304 ist weiterhin eine zweite Schiene 309 mit einem zweiten Schlitten 311 angeordnet, welcher beispielsweise mittels eines Antriebs 312 über eine Spindel 313 entlang der Schiene 309 verschoben werden kann.

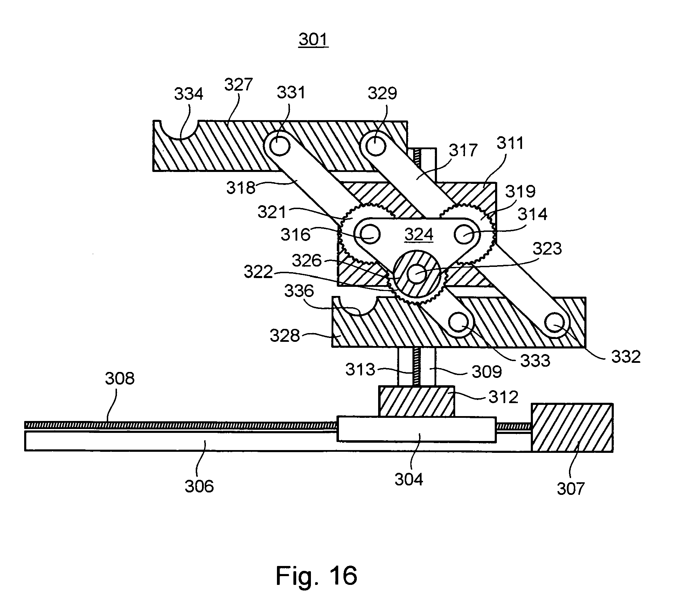

An dem zweiten Schlitten 311 sind weiterhin Schwenkachsen 314; 316 beispielsweise Drehgelenke 314; 316 angeordnet, über welche Tragarme 317; 318 jeweils drehbar gelagert mit dem Schlitten 311 verbunden sind. Die Schwenkachsen 314; 316 können dabei beispielsweise zentrisch in den Tragarmen 317; 318 angeordnet sein (Fig. 16). Koaxial zu den Schwenkachsen 314; 316 sind auf den Tragarmen 317; 318 jeweilige Zahnräder 319; 321 befestigt, welche mit einem gemeinsamen Antriebszahnrad 322 in Eingriff stehen. Das Antriebszahnrad 322 ist hierbei beispielsweise über eine Welle 323 drehbar auf einer Platte 324 befestigt, wobei die Platte 324 beispielsweise fest mit den Schwenkachsen 314; 316 verbunden ist. Weiterhin ist das Zahnrad 322 mit einem Antrieb 326 verbunden, wodurch bei einer Ansteuerung des Antriebs 326 die Tragarme 317; 318 über die ineinander eingreifenden Zahnräder 319; 321; 322 in einem bestimmten Winkelbereich zueinander parallel verschwenkt werden können. Zur Begrenzung des Winkelbereiches kann es dabei vorgesehen sein, entsprechende, in den Figuren nicht dargestellte Begrenzungsanschläge auf dem Schlitten 311 und/oder auf zumindest einem Tragarm 317; 318 und/oder an einer anderen geeigneten Stelle vorzusehen.

Weiterhin sind an den jeweiligen Enden der Tragarme 317; 318 jeweilige gemeinsame Hebearme 327; 328 angebracht, die jeweils über Drehachsen 329; 331 beziehungsweise 332; 333 mit den Tragarmen 317; 318 verbunden sind und hierdurch mit den Tragarmen 317; 318 ein Parallelogramm bilden. Die Hebearme 327; 328 weisen weiterhin an ihren Enden jeweilige Zylinderaufnahmen 334; 336 auf, beispielsweise im Wesentlichen kreissegmentförmige und/oder halbkreisförmige Ausnehmungen 334; 336, in welche die Zylinderzapfen 17 zu entnehmender Zylinder 01; 03 zu liegen kommen können.

Durch eine entsprechende Ansteuerung des Antriebs 326 über eine übergeordnete, nicht dargestellte Maschinensteuerung ist es somit möglich, die Hebearme 327; 328 in unterschiedliche Positionen zu verschwenken, beispielsweise in eine erste, auch in Fig. 16 dargestellte, Position, in welcher der obere Hebearm 327 in eine nach vorn weisenden Stellung gebracht ist und in welcher wie nachfolgend beschrieben ein oberer Zylinder 01; 03 gehandhabt werden kann, oder in eine zweite Position gebracht werden kann, in welcher der untere Hebearm 328 in eine nach vorn weisenden Stellung gebracht ist und in welcher ein unterer Zylinder 01; 03 gehandhabt werden kann, oder in eine dritte Position gebracht werden kann, in welcher beide Hebearme 327; 328 in eine beispielsweise mittlere Position gebracht werden können, in welcher beide Zylinder 01; 03 gehandhabt werden können.

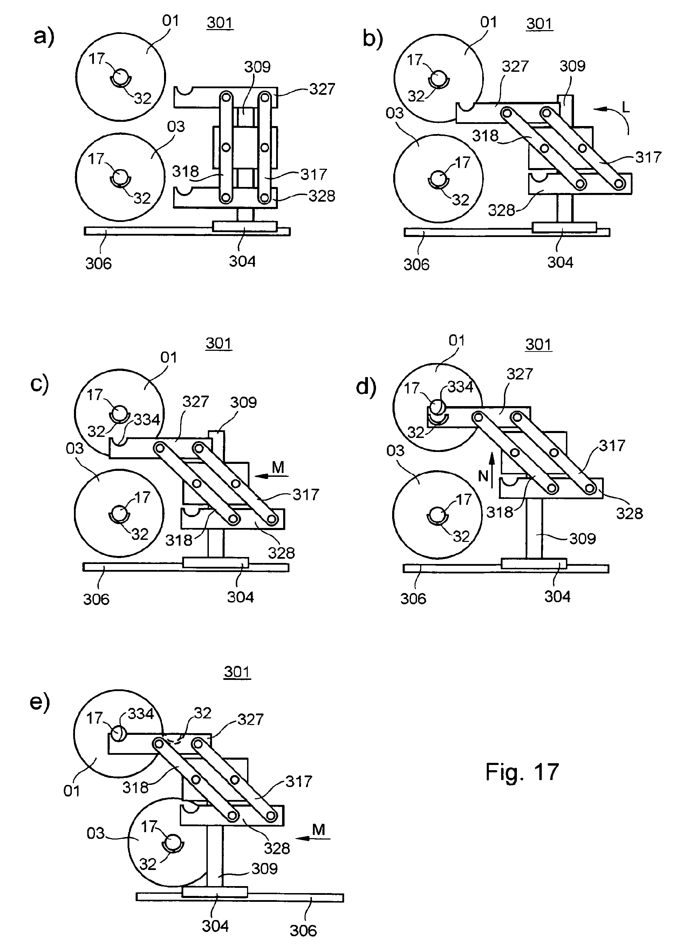

Eine genaue Lage der Hebearme 327; 328 und damit auch der Zylinderaufnahmen 334; 336 zueinander, insbesondere in der mittleren Position, hängt dabei von der geometrischen Anordnung der Zylinder 03; 01 im Druckwerk ab, diese ist im Folgenden beispielhaft als senkrecht aufeinander stehend gewählt. Ein Ablauf einer Handhabung des oberen Zylinders 01; 03 mittels der Handhabungseinrichtung 301 wird im Folgenden beschrieben und ist auch schematisch in den Fig.17a bis 17e gezeigt. Er entspricht dem eingangs beschrieben zweiten Betriebszustand der Handhabungseinrichtung 301. Zum besseren Verständnis sind hierbei in Fig. 16 dargestellte Elemente, beispielsweise Antriebselemente, nicht dargestellt.

Hierbei befindet sich die Handhabungseinrichtung 301 zu Beginn eines Zylinderwechsels zunächst noch in einer Ruheposition, welche die Handhabungseinrichtung 301 beispielsweise während des normalen Druckbetriebs einnimmt und in welcher sich insbesondere die Hebearme 327; 328 außerhalb eines Einflussbereichs der Zylinder 01; 03 befinden. Die Zylinder 01; 03 befinden sich hierbei bereits in einer für einen Zylinderwechsel erforderlichen Serviceposition, in welcher die Zylinder 01; 03 voneinander abgestellt sind und zueinander einen festgelegten Abstand aufweisen (Fig. 17a). Die Zylinder 01; 03 sind zu diesem Zeitpunkt mit ihren jeweiligen Zylinderzapfen 17 in ihren jeweiligen Lageraufnahmen 32 gelagert, wobei zu diesem Zeitpunkt beispielsweise bereits eine Fixierung mittels eines jeweiligen nicht dargestellten Bestandteils der beispielsweise als Klapplager 32 ausgebildeten Lageraufnahme 32 gelöst sein kann, so dass die Zylinder 01; 03 entnehmbar sind.

In einem nachfolgenden Arbeitsschritt wird der obere Hebearm 327 mittels des Antriebs 326 über die Tragarme 317; 318 in eine vordere Position verfahren, wodurch gewährleistet ist, dass im weiteren Vorgehen ausschließlich der obere Zylinder 01; 03 aus seiner Lageraufnahme 32 entnommen werden kann, während der untere Zylinder 03; 01 außerhalb einer Reichweite der Handhabungseinrichtung 301 liegt. Hierzu werden die Tragarme 317; 318 in Richtung L verschwenkt, wobei gleichzeitig der untere Hebearm 328 in eine hintere Position mit verschwenkt wird und somit aus dem Arbeitsbereich weggeschwenkt wird (Fig. 17b).

In einem nachfolgenden Schritt wird nun die Handhabungseinrichtung 301 auf ihrem Schlitten 304 entlang der Schiene 306 mittels des Antriebs 307 in eine Richtung M in eine erste Arbeitsposition verfahren, in welcher sich die Zylinderaufnahme 334 des Hebearms 327 unterhalb des Zylinderzapfens 17 des zu entnehmenden Zylinders 01; 03 befindet (Fig. 17c). Die Richtung M liegt dabei im Wesentlichen senkrecht zu einer Ebene, die die als parallel angenommenen Rotationsachsen 13; 14 der Zylinder 01; 03 enthält, und weist zumindest eine Komponente auf, die von der Handhabungseinrichtung 301 weg und auf eine der Rotationsachsen 13; 14 zu weist. Ein nachfolgendes Anheben des Schlittens 311 der Handhabungseinrichtung 301 entlang der Schiene 309 in einer Richtung N mittels des Antriebs 312 bewirkt, dass die Zylinderzapfen 17 des Zylinder 01; 03 in den Zylinderaufnahmen 334 zu liegen kommen und der Zylinder 01; 03 aus den Lageraufnahmen 32 herausgehoben wird (Fig. 17d). Die Richtung N zeigt also bevorzugt im Wesentlichen senkrecht nach oben. Hierbei wird der Zylinder 01; 03 zumindest soweit aus den Lageraufnahmen 32 herausgehoben, dass sie in einem nachfolgenden Schritt problemlos mittels des Antriebs 307 in Richtung M aus dem Druckwerk in eine Entnahmeposition herausgefahren werden kann (Fig. 17e).

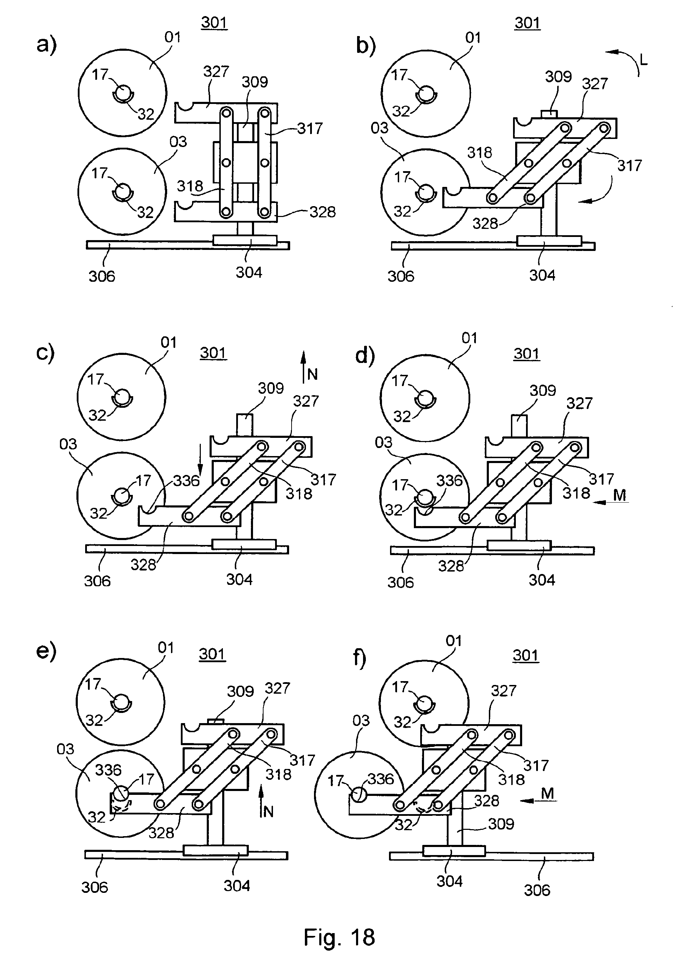

Einen Ablauf einer Handhabung eines unteren Zylinders 03; 01 mittels der Handhabungseinrichtung 301 zeigen schematisch und beispielhaft Fig. 18a bis 18f. Auch dieser Ablauf entspricht dem eingangs beschrieben zweiten Betriebszustand der Handhabungseinrichtung 301 und auch in diesen Figuren sind der Übersichtlichkeit halber die in Fig. 16 dargestellten Elemente zum Teil nicht dargestellt.

Die Handhabungseinrichtung 301 befindet sich zu Beginn eines Zylinderwechsels zunächst noch in einer Ruheposition, welche die Handhabungseinrichtung 301 während des normalen Druckbetriebs einnimmt und in welcher insbesondere die Hebearme 327; 328 sich außerhalb des Einflussbereichs der Zylinder 01; 03 befinden und sich die Zylinder 01; 03 wie bereits beschrieben in einer für einen Zylinderwechsel erforderlichen Serviceposition befinden, in welcher die Zylinder 01; 03 voneinander abgestellt sind und zueinander einen festgelegten Abstand aufweisen (Fig. 18a). Die Zylinder 01; 03 sind zu diesem Zeitpunkt mit ihren jeweiligen Zylinderzapfen 17 in ihren jeweiligen Lageraufnahmen 32 gelagert, wobei zu diesem Zeitpunkt beispielsweise bereits eine Fixierung mittels eines jeweiligen nicht dargestellten Bestandteils der beispielsweise als Klapplager 32 ausgebildeten Lageraufnahme 32 gelöst sein kann, so dass die Zylinder 01; 03 entnehmbar sind.

In einem nachfolgenden Arbeitsschritt wird der untere Hebearm 328 mittels des Antriebs 326 über die Tragarme 317; 318 in eine vordere Position verfahren, wodurch gewährleistet ist, dass im weiteren Vorgehen ausschließlich der untere Zylinder 03; 01 aus seiner Lageraufnahme 32 entnommen werden kann (Fig. 18b). Hierzu werden die Tragarme 317; 318 entgegen der Richtung L verschwenkt, wobei gleichzeitig der obere Hebearm 327 in eine hintere Position mit verschwenkt wird und somit aus dem Arbeitsbereich weggeschwenkt wird.

Es kann hierbei erforderlich sein, in einem nachfolgenden Schritt die Hebearme 327; 328 entlang der Schiene 309 entgegen der Richtung N soweit abzusenken, dass der Hebearm 328 oder zumindest die Zylinderaufnahme 336 unterhalb des Zylinderzapfens 17 und/oder unterhalb der Lageraufnahme 32 gelangt, wodurch der Hebearm 328 problemlos unter die Zylinderzapfen 17 verfahren werden kann (Fig. 18c).

In einem nachfolgenden Schritt wird nun die Handhabungseinrichtung 301 auf ihrem Schlitten 304 entlang der Schiene 306 mittels des Antriebs 307 in Richtung M in eine erste Arbeitsposition verfahren, in welcher sich die Zylinderaufnahme 336 des Hebearms 328 unterhalb des Zylinderzapfens 17 des Zylinders 03; 01 befindet (Fig. 18d). Ein nachfolgendes Anheben des Schlittens 311 der Handhabungseinrichtung 301 entlang der Schiene 309 in Richtung N mittels des Antriebs 312, bewirkt, dass die Zylinderzapfen 17 des Zylinders 03; 01 in den Zylinderaufnahmen 336 zu liegen kommen und der Zylinder 03; 01 aus den Lageraufnahmen 32 herausgehoben wird (Fig. 18e). Hierbei wird der Zylinder 03; 01 zumindest soweit aus den Lageraufnahmen 32 herausgehoben, dass er in einem nachfolgenden Schritt problemlos mittels des Antriebs 307 in Richtung M aus dem Druckwerk in eine Entnahmeposition herausgefahren werden kann und gleichzeitig nicht mit dem noch in seiner Lageraufnahme 32 befindlichen Zylinder 01; 03 kollidiert oder von diesem behindert wird (Fig. 18f).

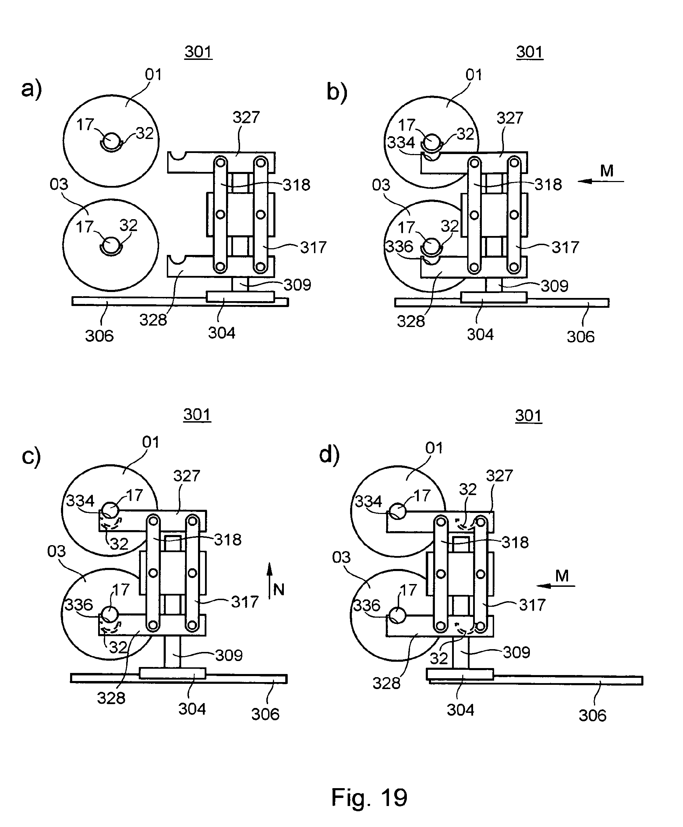

Einen Ablauf einer Handhabung beider Zylinder 01; 03 mittels der Handhabungseinrichtung 301, der dem eingangs erwähnten ersten Betriebszustand der Handhabungseinrichtung 301 entspricht, zeigen schematisch und beispielhaft Fig. 19a bis 19d. Auch in diesen Figuren sind der Übersichtlichkeit halber teilweise die in Figur 1 dargestellten Elemente nicht dargestellt.

Die Handhabungseinrichtung 301 befindet sich zu Beginn eines Zylinderwechsels zunächst noch in einer Ruheposition, welche die Handhabungseinrichtung 301 während des normalen Druckbetriebs einnimmt und in welcher insbesondere die Hebearme 327; 328 sich außerhalb des Einflussbereichs der Zylinder 01; 03 befinden und sich die Zylinder 01; 03 wie bereits beschrieben in einer für einen Zylinderwechsel erforderlichen Serviceposition befinden, in welcher die Zylinder 01; 03 voneinander abgestellt sind und ihre Rotationsachsen 13; 14 zueinander einen festgelegten Abstand aufweisen (Fig. 19a). Die Zylinder 01; 03 sind zu diesem Zeitpunkt mit ihren jeweiligen Zylinderzapfen 17 in ihren jeweiligen Lageraufnahmen 32 gelagert, wobei zu diesem Zeitpunkt beispielsweise bereits eine Fixierung mittels eines jeweiligen nicht dargestellten Bestandteils der beispielsweise als Klapplager 32 ausgebildeten Lageraufnahme 32 gelöst sein kann, so dass die Zylinder 01; 03 entnehmbar sind. Es kann dabei vorgesehen sein, dass die Ruheposition der Hebearme 327; 328 bereits der zur Entnahme beider Zylinder 01; 03 erforderlichen Stellung entspricht, wodurch ein zusätzliches Verschwenken der Hebearme 327; 328 mittels der Tragarme 317; 318 und des Antriebs 326 nicht erforderlich ist.

In einem nachfolgenden Schritt wird nun die Handhabungseinrichtung 301 auf ihrem Schlitten 304 entlang der Schiene 306 mittels des Antriebs 307 in Richtung M in eine Arbeitsposition verfahren, in welcher sich die Zylinderaufnahmen 334; 336 der Hebearme 327; 328 jeweils unterhalb der jeweiligen Zylinderzapfen 17 der Zylinder 01; 03 befinden (Fig. 19b).

Ein nachfolgendes Anheben des Schlittens 311 der Handhabungseinrichtung 301 entlang der Schiene 309 in Richtung N mittels des Antriebs 312 bewirkt einerseits, dass die Zylinderzapfen 17 der Zylinder 01; 03 in den jeweiligen Zylinderaufnahmen 334; 336 zu liegen kommen und die Zylinder 01; 03 aus ihren jeweiligen Lageraufnahmen 32 herausgehoben werden (Fig. 19c). Hierbei werden die Zylinder 01; 03 zumindest soweit aus den jeweiligen Lageraufnahmen 32 herausgehoben, dass sie in einem nachfolgenden Schritt problemlos mittels des Antriebs 307 in Richtung M aus dem Druckwerk in eine Entnahmeposition herausgefahren werden können (Fig. 19d).

Das bedeutet, dass die Handhabungseinrichtung 301 mittels eines Antriebs 307 zumindest zwei Lagen einnehmbar ausgebildet ist, wobei sich in einer ersten Lage mit einem der zumindest zwei Zylinder 01; 03 in zumindest einem Betriebszustand zusammenwirkende Zylinderaufnahmen 334; 336 der Handhabungseinrichtung 301 bezüglich einer horizontalen Richtung auf einer anderen Seite von in zumindest einem Betriebszustand mit dem selben der zumindest zwei Zylinder 01; 03 zusammenwirkenden Lageraufnahmen 32 befinden, als in einer zweiten Lage.

Bevorzugt werden also zumindest in dieser Ausführungsform die Zylinder 01; 03 mittels der Handhabungseinrichtung 301 immer parallel zueinander bewegt.

Es ist dabei zu bemerken, dass die in den jeweiligen beispielhaften Beschreibungen genannten Arbeitspositionen der Schlitten 304; 311 entlang ihrer jeweiligen Schienen 306; 309 in Abhängigkeit von der oder den zu entnehmenden Zylindern 01; 03 unterschiedlich sein können und jeweils beispielsweise mittels nicht dargestellter Sensoren und/oder Steuereinrichtungen überwacht und/oder kontrolliert werden können. Solche Sensoren und/oder Steuereinrichtungen können mit einer Maschinensteuerung verbunden sein.

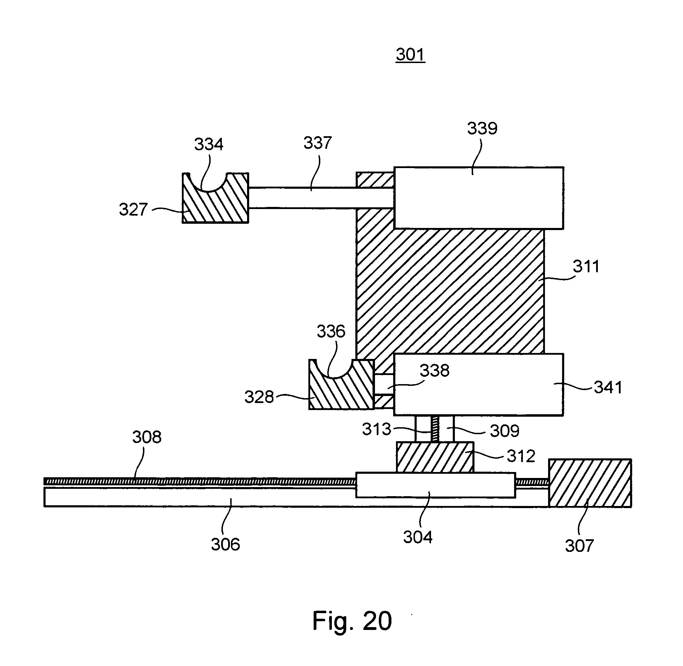

Ein weiteres Ausführungsbeispiel einer Handhabungseinrichtung 301 wird im Folgenden beschrieben. Hierbei sind im Unterschied zu den bisherigen Ausführungsbeispielen die Hebearme 327; 328 als kurze Hebearme 327; 328 ausgeführt, welche jeweils eine Zylinderaufnahme 334; 336 aufweisen und welche über jeweilige Schubstangen 337; 338 an jeweiligen Linearantrieben 339; 341 befestigt sind. Die Linearantriebe 339; 341 sind hierbei auf dem Schlitten 311 einer vertikalen Verschiebeeinrichtung befestigt, welche zumindest eine Schiene 309, einen Schlitten 311 und einen Antrieb 312 aufweist, wobei der Schlitten 311 mittels des Antriebs 312 über eine Antriebswelle 313 beispielsweise eine Spindel 313 entlang der Schiene 309 verschoben werden kann (Fig. 20).

Linearantriebe 339; 341 können beispielsweise als Pneumatikzylinder 339; 341, elektrische Linearantriebe 339; 341 oder hydraulische Linearantriebe 339; 341 ausgeführt sein, welche jeweils über eine übergeordnete Maschinensteuerung betätigt werden können. Dadurch ist es möglich, durch Betätigung entweder des Linearantriebs 339 oder 341 nur einen der Zylinder 01; 03 im Wesentlichen entsprechend eines bereits beschriebenen Ablaufs aus seiner Lageraufnahme 32 zu entnehmen oder beide Zylinder 01; 03 gleichzeitig zu entnehmen. Es ist dabei zweckmäßig zumindest den vertikalen Abstand der Linearantriebe 339; 341 so zu wählen, dass er im Wesentlichen dem vertikalen Abstand der Zylinder 01; 03 in ihrer Serviceposition entspricht.

Mit der Handhabungseinrichtung 301 können also je nach Bedarf wahlweise ein Zylinder 01; 03 oder zwei Zylinder 01; 03, in anderen denkbaren Ausführungsformen auch mehr als zwei Zylinder 01; 02; 03, selbsttätig ohne Eingriff einer Bedienperson, also insbesondere maschinengesteuert angetrieben und/oder antreibbar aus einer ersten Position, beispielsweise einer für einen Druckbetrieb geeigneten Arbeitsposition oder einer Serviceposition, in zumindest eine zweite, beispielsweise von außerhalb der Druckmaschine leicht zugängliche, Position, beispielsweise eine Austauschposition oder Entnahmeposition oder andere Serviceposition gebracht werden. Bei entsprechend umgekehrtem Verfahren können natürlich auch Zylinder 01; 02; 03 von der zweiten Position in die erste Position gebracht werden. In der zweiten Position, beispielsweise der Serviceposition und insbesondere in der Entnahmeposition befindliche Zylinder 01; 02; 03 können manuell oder bevorzugt mittels geeigneter maschinengesteuerter Mittel weiter behandelt werden. Beispielsweise können die Zylinder 01; 02; 03 mittels einer externen Handhabungseinrichtung, beispielsweise einem Transportwagen, einem Schwenkarm oder einem Flaschenzug, entnommen werden und gegen andere Zylinder 01; 02; 03 ausgetauscht werden oder es können auch lediglich Reinigungsarbeiten oder ein Druckformwechsel oder ein Drucktuchwechsel durchgeführt werden.

Bevorzugt weisen die Hebearme 327; 328 und/oder die Lageraufnahmen 32 Einrichtungen zur axialen Positionierung zumindest eines Zylinders 01; 02; 03 auf, wodurch entsprechende Zylinder 01; 02; 03 beim Einlegen in das Druckwerk anhand von an dem jeweiligen Druckwerk angebrachten Referenzmarken ausgerichtet werden können.

Die Handhabungseinrichtung 301 eignet sich insbesondere für Druckmaschinen und/oder Lackiermaschinen, bei welchen ein häufiger Austausch von Zylindern 01; 03 vorgesehen ist, beispielsweise für formatvariable Rotations-Druckmaschinen, die, je nach zu druckendem Druckauftrag, Druckformen unterschiedlicher Drucklängen verarbeiten.

Bevorzugt sind die Lageraufnahmen 32 der auszutauschenden Zylinder 01; 02; 03 mit zumindest einem eigenen Antrieb ausgestattet und beispielsweise als Klapplager 32 bzw. Schnellverschlusslager 32 ausgebildet, so dass sie insbesondere über die Maschinensteuerung zu öffnen und/oder zu entriegeln sind, so dass kein manuelles Eingreifen einer Bedienperson nötig ist, um die die Zylinder 01; 03 nach einem Druckbetrieb in eine entsprechende Serviceposition und schließlich in eine entsprechende Entnahmeposition zu bringen.

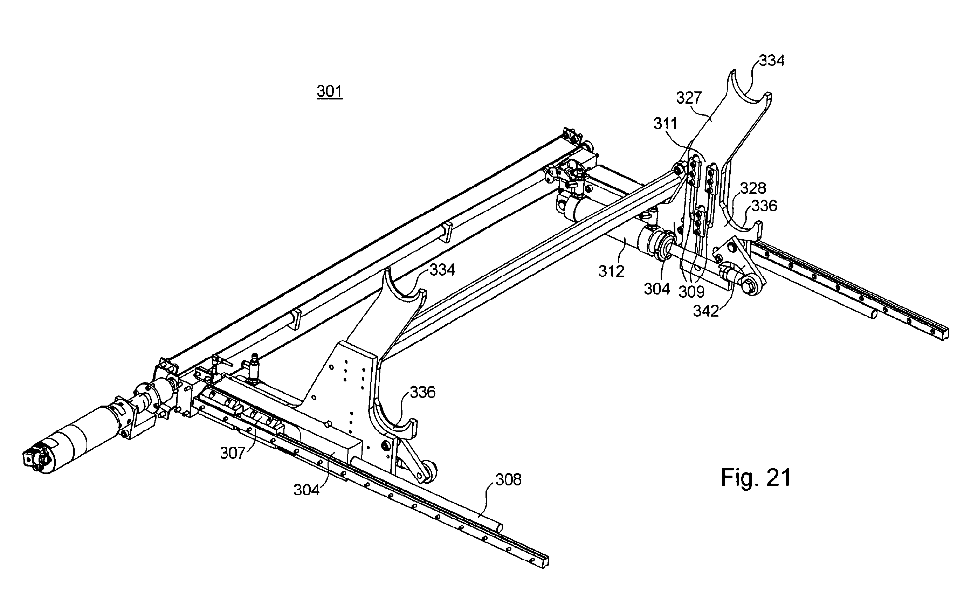

In einem weiteren Ausführungsbeispiel der Handhabungseinrichtung 301 sind sämtliche Hebearme 327; 328 relativ zueinander starr angeordnet und können nur gemeinsam verschoben werden. Daraus folgt, dass sämtliche Zylinder 01; 03, die mit der Handhabungseinrichtung 301 verschoben werden können, nur gemeinsam verschoben werden können (Fig. 21). Diese Ausführungsform empfiehlt sich, wenn überwiegend oder immer alle Zylinder 01; 03 gleichzeitig ausgetauscht werden sollen. Die Ausführung entspricht dann im Wesentlichen der in Fig. 20 dargestellten Ausführungsform, mit dem Unterschied, dass die Linearantriebe 339; 341 entfallen und stattdessen die Zylinderaufnahmen 334; 336 zueinander unbeweglich angeordnet sind. Ihre Verwendung ist analog zu dem oben beschriebenen Fall, der auch in Fig. 19a bis 19d dargestellt ist. Auch in diesem Fall ist es möglich, nur einen der Zylinder 01; 03 auszutauschen, beispielsweise indem zwar alle Zylinder 01; 03 mittel der Handhabungseinrichtung 301 in ihre entsprechende Entnahmeposition gebracht werden, aber dort nur der Zylinder 01; 03 entnommen wird, der ausgetauscht werden soll, während der andere Zylinder 01; 03 zusammen mit dem neu engesetzten Zylinder 01; 03 wieder an seine Serviceposition und/oder an seine Arbeitsposition zurückbefördert wird. In Fig. 21 ist zudem eine andere Ausführungsform des Antriebs 312 dargestellt, der in diesem Fall zumindest einen Hydraulikzylinder oder einen Pneumatikzylinder aufweist dessen Bewegungen über einen Hebel 342 in eine vertikale Bewegung des Schlittens 311 und damit der zugeordneten Hebearme 327; 328 umgewandelt wird.

Mit dieser Ausführungsform können Kosten eingespart werden, da weniger Antriebe und bewegliche Teile anfallen und bei entsprechendem Zusammenspiel mit anderen Maschinenbestandteilen trotzdem eine volle Funktionalität gewährleistet bleibt.

Im Folgenden wird eine Koppelvorrichtung zur Kopplung zumindest eines Zylinders 01; 02; 03 an zumindest einen entsprechenden Antrieb 16 beschrieben. Bevorzugt weist für jeden Zylinder 01; 02; 03 mit eigenem Antrieb 16 zumindest eine der Lageraufnahmen 32 eine Koppelvorrichtung auf, mittels der der Zylinder 01; 02; 03 in einem gekoppelten Betriebszustand mit seinem Antrieb 16 gekoppelt, d. h. kraftschlüssig, insbesondere reibschlüssig und gegebenenfalls auch formschlüssig verbunden ist, insbesondere bezüglich Rotationsbewegungen um die Rotationsachse 13; 14 des Zylinders 01; 02; 03. Hierzu weist die entsprechende Lageraufnahme 32 eine zur Rotationsachse 13; 14 des Zylinders 01; 02; 03 und zu einer Rotationsachse 13; 14 des Antriebs 16 konzentrische Öffnung auf, durch welche ein Koppelkörper 603 der Koppelvorrichtung, der bevorzugt als Koppelzylinder 603 ausgebildet ist, konzentrisch zumindest teilweise hindurchbewegt werden kann. Im Folgenden wird die Koppelvorrichtung in der Ausführungsform mit einem Koppelzylinder 603 beschrieben, die entsprechenden Angaben gelten jedoch entsprechend auch für einen allgemeinen Koppelkörper 603.

Die Rotationsachse 13; 14 des Zylinders 01; 02; 03 ist gleich einer Rotationsachse 13; 14 des Koppelzylinders 603 und der Rotationsachse 13; 14 des Antriebs 16. Der Koppelzylinder 603 ist innerhalb eines Bestandteils 611 des Antriebs 16, bevorzugt innerhalb einer hohl ausgeführten Antriebswelle 611 des Antriebs 16 konzentrisch geführt, wobei die Antriebswelle 611 beispielsweise gleichzeitig als Rotor 659 eines als Antrieb 16 dienenden elektrischen Motors 16 ausgeführt sein kann. Dieser Bestandteil 611 des Antriebs 16 ist also rotierbar und/oder rotierend angeordnet. Zum Verschieben des Koppelzylinders 603 in der Antriebswelle 611 entlang der gemeinsamen Rotationsachse 13; 14 ist bevorzugt eine außerhalb des Antriebs 16 angeordnete Verschiebeeinrichtung 612, beispielsweise ein Linearmotor 612, ein Elektromotor 612, ein Hubmagnet 612, ein hydraulischer Antrieb 612 oder ein Pneumatikzylinder 612, angeordnet. Die Verschiebeeinrichtung 612 ist also unabhängig von dem Antrieb 16 betreibbar. Der Koppelkörper 603 kann damit axial so angeordnet werden, dass keine Ebene existiert, die senkrecht zur Rotationsachse 13; 14 des Zylinders 01; 03 liegt und die zugleich den Zylinder 01; 03 und den Koppelkörper 603 schneidet.

Zum kraftschlüssigen, also insbesondere reibschlüssigen und/oder Formschlüssigen Verbinden des Antriebs 16 mit dem Zylinder 01; 02; 03 wird der Koppelzylinder 603 aus einer ersten Position, in welcher der Koppelzylinder 603 nicht in einen Teil des Zylinderzapfens 17 hineinragt und weder reibschlüssig noch formschlüssig weder mit dem Zylinder 01; 03 noch mit dem Antrieb 16 verbunden ist und die einem entkoppelten Betriebszustand entspricht, in Richtung auf den Zylinderzapfen 17 zu in eine zweite Position bewegt und hierbei in eine dafür vorgesehene konzentrisch zur Rotationsachse 13; 14 des Zylinders 01; 02; 03 liegende Ausnehmung 613 des Zylinderzapfens 17 bzw. des Zylinders 01; 02; 03, beispielsweise eine Buchse 613, geschoben. Die Ausnehmung 613 ist hierbei einer äußeren Form des Koppelzylinders 603 angepasst und in einer bevorzugten Ausführung beispielsweise ebenfalls zylindrisch ausgeführt, wodurch der Koppelzylinder 603 in jeder beliebigen Drehstellung des Zylinders 01; 02; 03 relativ zum Koppelzylinder 603 in die Ausnehmung 613 eingreifen kann, wobei ein Durchmesser der Ausnehmung 613 geringfügig größer ist als ein Durchmesser des Koppelzylinders 603, so dass der beweglich gelagerte Koppelzylinder 603 problemlos in die Ausnehmung 613 hinein und aus der Ausnehmung 613 heraus bewegt werden kann. Es sei darauf verwiesen, dass sich zumindest die Formschlüssigkeit jeweils auf Rotationsbewegungen um die Rotationsachse 13; 14 des Zylinders 01; 02; 03 bezieht. Bezogen auf Translationsbewegungen, insbesondere in Richtungen mit Komponenten senkrecht zur Rotationsachse 13; 14 des Zylinders 01; 02; 03 sind davon nicht betroffen.

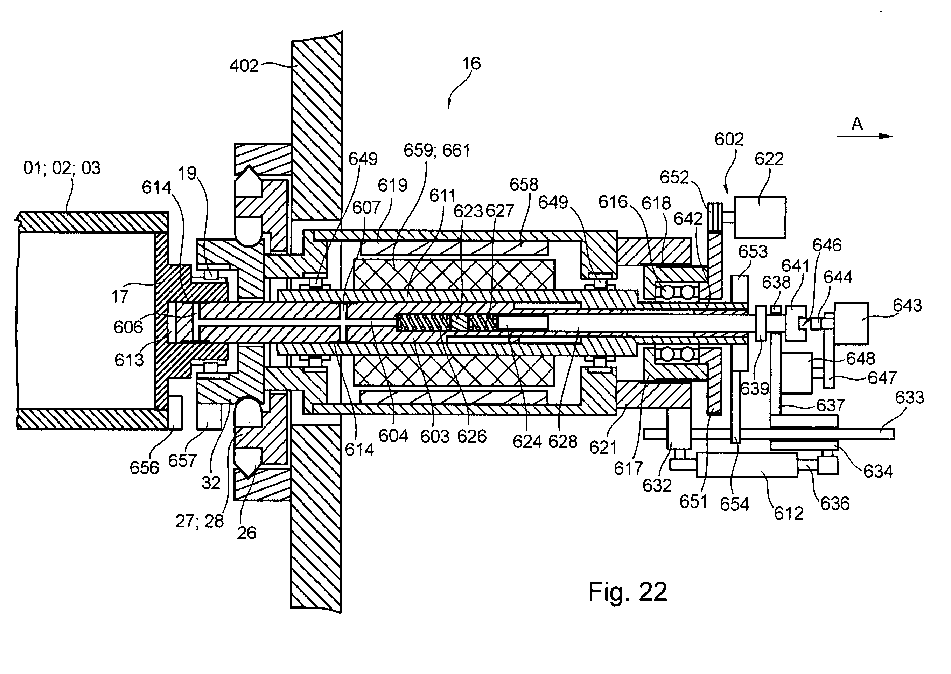

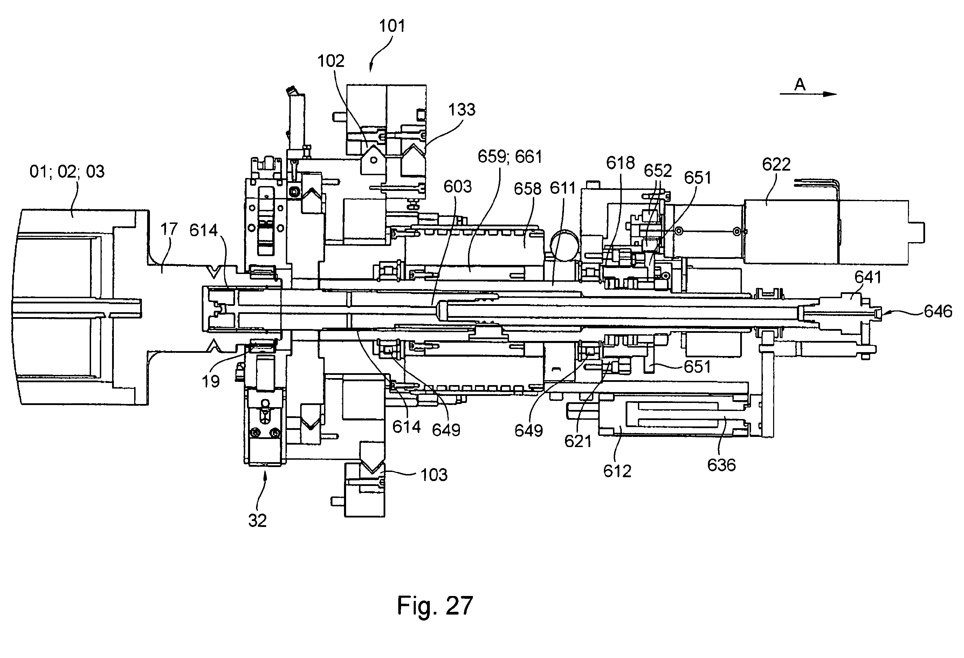

Der Koppelzylinder 603 weist in seinem Inneren zumindest einen Längskanal 604 und zumindest zwei Querkanäle 606; 607 auf, welche mit dem Längskanal 604 verbunden sind, wobei zumindest zwei Enden der jeweiligen Querkanäle 606; 607 an zumindest zwei unterschiedlichen Positionen entlang einer Mantelfläche des Koppelzylinders 603 enden und somit entsprechende Öffnungen in dieser Mantelfläche bilden. Der Längskanal 604 ist bevorzugt als Bohrung von einer dem Zylinderzapfen 17 des Zylinders 01; 02, 03 entgegen gesetzten stirnseitigen Seite des Koppelzylinders 603 ausgeführt, kreuzt den ebenfalls bevorzugt als Bohrung ausgeführten zweiten Querkanal 607 und endet im Bereich des ebenfalls bevorzugt als Bohrung ausgeführten ersten Querkanals 606. In einem gekoppelten Betriebszustand, also in einer eingekoppelten zweiten Position des Koppelzylinders 603, liegen dabei zumindest zwei Öffnungen so, dass diese in einem ersten Bereich im Inneren der Ausnehmung 613 des Zylinders 01; 02; 03 liegen und liegen dabei zumindest zwei Öffnungen so, dass diese in wenigstens einem zweiten Bereich im Inneren der als Hohlzylinder ausgeführten Antriebswelle 611 liegen, jeweils insbesondere bezogen auf eine axiale Richtung. Dabei sind die Öffnungen mittels eines flexiblen Materials 614 abgedeckt und flüssigkeitsdicht und/oder gasdicht mit dem Koppelzylinder 603 verbunden. Als flexibles Material 614 kann hierbei beispielsweise ein dünnwandiger Metallzylinder 614 verwendet werden, welcher mit dem Koppelzylinder 603 beispielsweise verlötet, verschweißt oder verklebt ist oder aber ein Kunststoffmaterial 614, welches mit dem Koppelzylinder 603 verklebt ist. Es kann hierbei auch vorgesehen sein, dass zumindest im Bereich der Öffnungen zumindest eine zusätzliche, den Koppelzylinder 603 umlaufende, mit dem Längskanal 604 verbundene, Nut vorgesehen ist, welche von dem flexiblen Material 614 vollständig abgedeckt ist (Fig. 22 und 27).

Eine reibschlüssige und bevorzugt auch formschlüssige Verbindung zwischen zumindest dem Zylinder 01; 02; 03, dem Koppelzylinder 603 und der Antriebswelle 611 erfolgt dadurch, dass die Längs- und Querkanäle 604; 606; 607 des Koppelzylinders 603 mit einem Hydraulikmedium, beispielsweise mit einem Gas oder bevorzugt mit einer inkompressiblen Hydraulikflüssigkeit gefüllt sind und auf dieses Medium ein Überdruck ausgeübt wird. Hierdurch werden die flexiblen Materialien 614 im Bereich der Öffnungen bevorzugt reversibel so verformt, dass ein wirksamer Durchmesser des Koppelzylinders 603 in diesen Bereichen vergrößert wird und eine Verklemmung des Koppelzylinders 603 mit dem Zylinder 01; 02; 03 bzw. der Antriebswelle 611 und damit eine reibschlüssige und/oder formschlüssige Verbindung erzielt wird. Bei einer Wegnahme des Überdrucks nimmt das flexible Material 614 bevorzugt wieder seine ursprüngliche Form an. Es sind auch andere Hydraulikmedien denkbar, beispielsweise entsprechender Sand.

Die hierbei auftretenden Verformungen der flexiblen Materialien 614 liegen bei angepassten Durchmessern der jeweiligen Zylinder 01; 02; 03 bzw. Koppelzylinder 603 und Ausnehmungen 613 im Bereich von wenigen zehntel Millimetern oder weniger, so dass als flexible Materialien 614 wie bereits genannt auch dünnwandige Metallzylinder 614 verwendet werden können, welche in besonders vorteilhafter Weise mit dem Koppelzylinder 603 verschweißt werden können. Bevorzugt weist der Koppelzylinder 603 im Bereich der dünnwandigen Metallzylinder 614 einen um die doppelte Wandstärke des dünnwandigen Metallzylinders 614 geringeren Durchmesser auf, so dass der Koppelzylinder 603 nach einem Aufbringen des dünnwandigen Metallzylinders 614 einen über seine Länge gleichen Durchmesser aufweist.

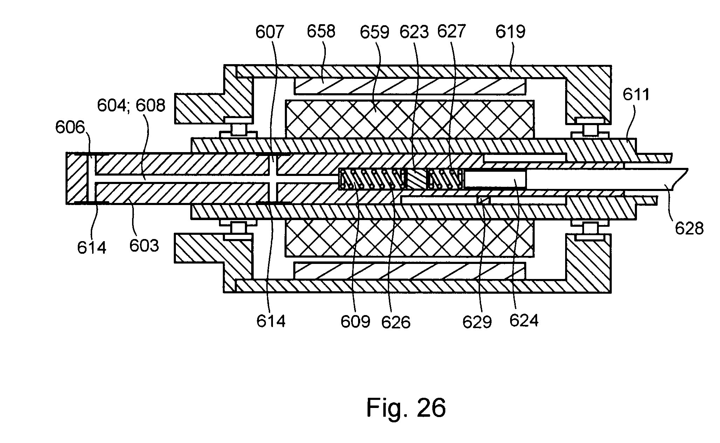

Eine Druckbeaufschlagung eines durch den Längskanal 604 und die Querkanäle 606; 607 gebildeten Volumens 608 kann beispielsweise dadurch erfolgen, dass das Volumen 608 mit dem Hydraulikmedium gefüllt ist, auf welches ein Druckstempel 623 im Inneren des Koppelzylinders 603 einwirkt, welcher mittels einer Druckstange 624 in seiner Lage verändert werden kann und insbesondere in das Volumen 608 hinein gedrückt werden kann. Hierzu ist der Druckstempel 623 beispielsweise beweglich in einer beispielsweise zylindrischen Bohrung 609 so angeordnet, dass er entlang einer Achse dieser Bohrung 609 verschoben werden kann. Die Bohrung 609 ist dabei mit dem Volumen 608 verbunden und bildet zumindest bis zu dem Druckstempel 623 ein gemeinsames Volumen 608, welches mit dem Hydraulikmedium gefüllt ist. Zur Beaufschlagung des gemeinsamen Volumens 608 mit einem Überdruck kann der Druckstempel 623 mechanisch oder pneumatisch oder hydraulisch mit Kraft beaufschlagt werden. Der Druckstempel 623 kann dabei so ausgeführt sein, dass er zusätzliche, in den Figuren nicht dargestellte, Dichtelemente aufweist, wodurch ein Austreten der inkompressiblen Flüssigkeit verhindert wird. Weiter bevorzugt wirkt der Druckstempel 623 im Inneren des mit inkompressibler Flüssigkeit gefüllten Volumens auf eine Druckfeder 626 ein, wodurch bei einer Wegnahme der Druckbeaufschlagung der Druckstempel 623 in eine entgegen gesetzte Richtung gedrückt wird, wodurch sich ein geringer Unterdruck im Inneren des mit inkompressibler Flüssigkeit gefüllten Volumens einstellt und die flexiblen Materialien 614 unterstützend in ihre Ursprungsform gebracht werden. Weiterhin kann zwischen dem Druckstempel 623 und der Druckstange 624 eine weitere Druckfeder 627 angeordnet sein, wodurch temperaturbedingte Volumenänderungen der Hydraulikflüssigkeit und hierdurch bedingte Druckänderungen im Inneren des mit inkompressibler Flüssigkeit gefüllten Volumens wirkungsvoll kompensiert werden können (Fig. 26).

Die Druckstange 624 kann beispielsweise in einer längs der Richtung der Rotationsachsen 13; 14 der Zylinder 01; 03 durchgängig hohl ausgeführten Schubstange 628 angeordnet sein und sich bevorzugt komplett durch diese Schubstange 628 erstrecken, wobei die Schubstange 628 fest mit dem Koppelzylinder 603 verbunden ist. Dadurch ist es möglich, den Koppelzylinder 603 im Inneren der Antriebswelle 611 entlang der Rotationsachse 13; 14 des Zylinders 01; 02; 03 mittels der Schubstange 628 zu verschieben und dadurch den Koppelzylinder 603 aus der Ausnehmung 613 des Zylinderzapfens 17 vollständig herauszufahren. Hierdurch ist der Zylinder 01; 02; 03 vollständig vom Antrieb 16 entkoppelt und kann aus seinen Lageraufnahmen 32 herausgenommen werden, beispielsweise durch eine Bewegung senkrecht zu seiner vorherigen Rotationsachse 13; 14. Bevorzugt ist ein Hub des Koppelzylinders 603 in der Antriebswelle 611 über zumindest einen entsprechenden Anschlag 629 begrenzt.

Zum Antreiben des Zylinder 01; 02; 03 ist weiterhin an dem Schlitten 27; 28 ein Antrieb 16 so angeordnet, dass sich dieser zumindest mit seinem Motorgehäuse 619 an dem Schlitten 27; 28 abstützt, also ortsfest relativ zum Schlitten 27; 28 angeordnet ist. Der Antrieb 16 ist hierbei beispielsweise ein Elektromotor 16, dessen Stator 658 in dem Motorgehäuse 619 oder Gehäuse 619 befestigt ist und dessen Rotor 659 zumindest eine Antriebswelle 611 mit daran befestigten Rotorwicklungen 661 umfasst. Die Antriebswelle 611 ist hierbei beispielsweise jeweils an den Enden des Motorgehäuses 619 in Lagern 649, bevorzugt Wälzlagern 649, beispielsweise Rollenlagern 649 gelagert. Weiterhin ist die Antriebswelle 611 zur Aufnahme des Koppelzylinders 603 hohl ausgeführt. Ein Innendurchmesser der Antriebswelle 611 ist dabei ebenfalls geringfügig größer gewählt als der Durchmesser des Koppelzylinders 603, wodurch der Koppelzylinder 603 problemlos im Inneren der Antriebwelle 611 über die Schubstange 628 entlang der gemeinsamen Rotationsachse 13; 14 bewegt werden kann. Die Bewegung des Koppelzylinders 603 über die Schubstange 628 entlang der gemeinsamen Rotationsachse 13; 14 in einer Richtung A erfolgt mittels des äußeren Antriebs 612. Die Richtung A ist parallel zur Rotationsachse 13; 14 des Zylinders 01; 02; 03 und weist vom Zylinder 01; 02; 03 weg und auf den Antrieb in 16 zu.

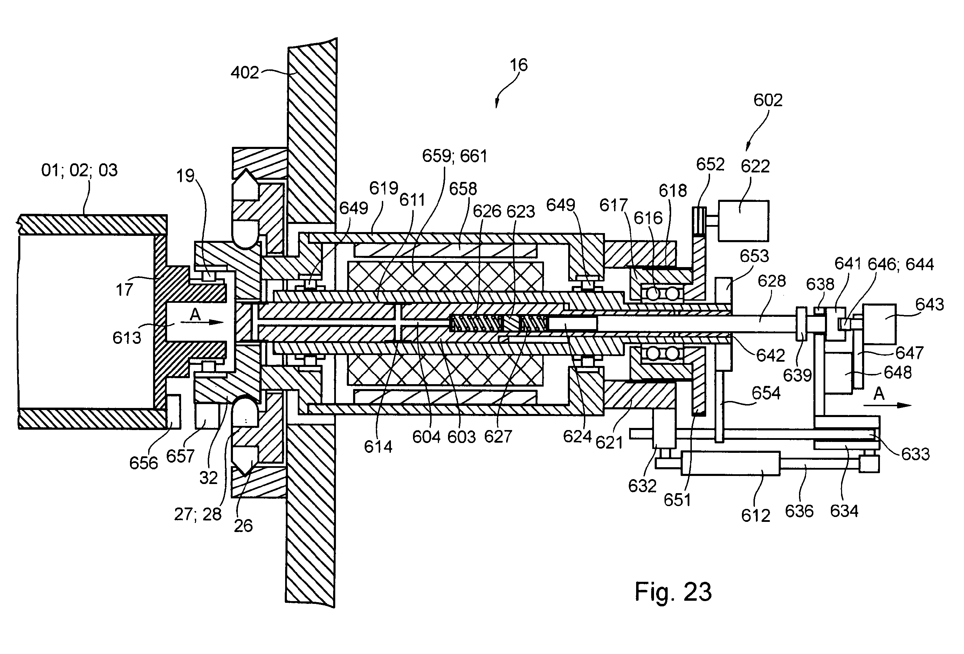

Der Antrieb 612 stützt sich hierbei beispielsweise über eine Halterung 632 an einer mit dem Motorgehäuse 619 des Antriebs 16 verbundenen Halterung 621 ab. Der Antrieb 612 weist weiterhin zumindest eine Führungsstange 633 oder Führungswelle 633 auf, auf welcher zumindest ein Gleitelement 634 angeordnet ist, welches mittels zumindest einer Schubstange 636 durch den Antrieb 612 entlang der Führungsstange 633 bewegt werden kann. An dem zumindest einen Gleitelement 634 ist weiterhin zumindest ein Mitnehmer 637 befestigt, welcher an einer dem zumindest einen Gleitelement 634 abgewandten Seite zumindest eine Klaue 638 aufweist. Die zumindest eine Klaue 638 greift hierbei in eine an der Schubstange 628 aus zumindest zwei Distanzstücken 639 und 641 gebildeten Ausnehmung so ein, dass bei einer Bewegung der Schubstange 636 in Richtung A der Koppelzylinder 603 ebenfalls in Richtung A bewegt wird. Dabei bewegt der Koppelzylinder 603 über die Schubstange 636 und das zumindest eine daran befestigte Gleitelement 634 die zumindest eine an dem Mitnehmer 637 befindliche Klaue 638 gegen das Distanzstück 641, wodurch der Koppelzylinder 603 über die Schubstange 628 in Richtung A bewegt wird. Hierdurch wird der Koppelzylinder 603 aus der Ausnehmung 613 des Zylinderzapfens 17 herausbewegt und der Zylinder 01; 02; 03 vom Antrieb 16 getrennt (Fig. 23).

In umgekehrter Weise wird zum Einkuppeln des Antriebs 16 an den Zylinder 01; 02; 03 die Schubstange 636 mittels des Antriebs 612 entgegen der Richtung A bewegt, wodurch die Klaue 638 über das Distanzstück 639 die Schubstange 628 und damit den Koppelzylinder 603 in die Ausnehmung 613 des Zylinderzapfens 17 hinein bewegt. Die Schubstange 628 kann dabei zusätzlich über zumindest ein Gleitlager 642 im Inneren der Antriebswelle 611 abgestützt sein. Die Verriegelung des Koppelzylinders 603 erfolgt hierbei so, dass nach einem Hineinfahren des Koppelzylinders 603 in die Ausnehmung 613 des Zylinderzapfens 17 das mit inkompressibler Flüssigkeit gefüllte Volumen 608 mit einem Überdruck beaufschlagt wird, wodurch sich zumindest das flexible Material 614 im Bereich der ersten Querkanäle 606 ausdehnt und sich reibschlüssig und/oder formschlüssig an die Innenwandung der Ausnehmung 613 anschmiegt. Gleichzeitig dehnt sich auch das flexible Material 614 im Bereich der zweiten Querkanäle 607 aus und schmiegt sich an die Innenwandung der Antriebswelle 611 reibschlüssig und/oder formschlüssig an, wodurch der Zylinder 01; 02; 03 reibschlüssig und/oder formschlüssig mit dem Antrieb 16 verbunden wird.

Zur Verriegelung des Koppelzylinders 603 in der Ausnehmung 613 und in der Antriebswelle 611 ragt die Druckstange 624 beispielsweise über ein dem Zylinder 01; 02, 03 zugewandtes Ende der Schubstange 628 hinaus und weist an ihrem Ende ein Gewinde auf, welches in ein an der Schubstange 628 befestigtes Gegenstück eingreift, wodurch bei einem Verdrehen der Druckstange 624 diese Druckstange 624 entlang der Rotationsachse 13; 14 relativ zur Schubstange 628 bewegt wird und hierdurch einen Druck auf zumindest den Druckstempel 623 ausübt. Das Verdrehen der Druckstange 624 kann beispielsweise so erfolgen, dass ein entsprechendes, beispielsweise elektrisch betriebenes, Schraubwerkzeug 643 mit einem entsprechenden Werkzeugkopf 644 in eine entsprechende Ausnehmung 646 an einem dem Zylinder 01; 03 abgewandten Ende der Druckstange 624 eingreift, wodurch je nach Drehrichtung des Schraubwerkzeugs 643 die Druckstange 624 relativ zur Schubstange 628 hinein oder herausgeschraubt werden kann, also in axialer Richtung bezüglich der Rotationsachse 13; 14 des Zylinders bewegt werden kann. Da im Druckbetrieb der Zylinder 01; 02; 03, der Koppelzylinder 603, die Antriebswelle 611, die Schubstange 628 und die Druckstange 624 eine miteinander fest verbundene Einheit bilden und somit eine gemeinsame Rotation ausführen, ist bevorzugt der Werkzeugkopf 644 zumindest während des Druckbetriebs aus der Ausnehmung 646 herausgefahren und damit mechanisch von der Ausnehmung 646 getrennt. Hierzu ist das Schraubwerkzeug 643 beispielsweise auf einer Montageplatte 647 befestigt, welche über eine Hubeinrichtung 648 parallel zur Richtung A bewegt werden kann. Es kann auch vorgesehen sein dass das Distanzstück 641 gleichzeitig einen Schraubenkopf der Druckstange 624 darstellt.

Weiterhin ist eine Seitenregistereinstellvorrichtung 602 angeordnet. Zur Einstellung des Seitenregisters sind zumindest der Formzylinder 01 und die Antriebswelle 611 in Lagern 19; 649 gelagert, welche ein bestimmtes axiales Spiel aufweisen. Dadurch wird die Möglichkeit geschaffen den Koppelzylinder 603 und im gekoppelten Betriebszustand den Zylinder 01 und die mit dem Zylinder 01 über den Koppelzylinder 603 verbundene Antriebswelle 611 in und entgegen der Richtung A parallel zur Rotationsachse 13 des Formzylinders 01 zu verschieben, insbesondere relativ zu einer Seitengestellwand 402. Solche Lager 19; 649 können beispielsweise Wälzlager 19, 649 wie beispielsweise Rollenlager 19; 649 sein. Ein Verschiebeweg liegt dabei bevorzugt im Bereich von einigen Zehntel Millimetern bis zu wenigen Millimetern. Hierzu ist ein von dem Zylinder 01 abgewandtes Ende der Antriebswelle 611 beispielsweise mit zumindest einem weitgehend oder vollständig spielfreien und axial nicht verschiebbaren Lager 616, beispielsweise einem Kugellager 616, versehen, dessen Außenring in einer Hülse 617 eingefasst und mittels einer Scheibe 651 an der Hülse 617 befestigt ist. Die Hülse 617 ist ihrerseits ist über ein Gewinde 618, insbesondere Außengewinde 618 mit einem beispielsweise an einem Motorgehäuse 619 befestigten, ein entsprechendes Innengewinde tragenden, Gegenstück 621 bzw. einer Halterung 621 drehbar verbunden, so dass bei einem Drehen der Hülse 617 relativ zu dem Gegenstück 621 die Antriebswelle 611 und der mit der Antriebswelle 611 über den Koppelzylinder 603 verbundene Zylinder 01 parallel zur Rotationsachse 13; 14 verschoben wird. Dazu kann beispielsweise die Hülse 617 über einen angeordneten Antrieb 622 je nach Erfordernis verdreht werden, bevorzugt indem die Scheibe 651 zumindest in einem bestimmten Winkelbereich als Zahnrad ausgeführt ist, an welchem der Antrieb 622 beispielsweise über ein Ritzel 652 angreift. Der Antrieb 622 kann dabei gleichzeitig so ausgeführt sein, dass er bei einem Nichtbetätigen des Antriebs 622 als Bremse wirkt und ein unerwünschtes oder unbeabsichtigtes Verdrehen der Hülse 617, wodurch eine Verstellung des Seitenregisters bewirkt werden würde, wirkungsvoll verhindert. Der Antrieb 622 oder Stellantrieb 622 kann hierzu beispielsweise als selbsthemmender Schneckenantrieb 622 oder Getriebeantrieb 622 ausgelegt sein oder zumindest eine zusätzliche, in den Figuren nicht dargestellte Bremseinrichtung oder Fixiereinrichtung aufweisen. Der Antrieb 622 kann beispielsweise elektrisch, pneumatisch, hydraulisch oder mechanisch ausgebildet sein.

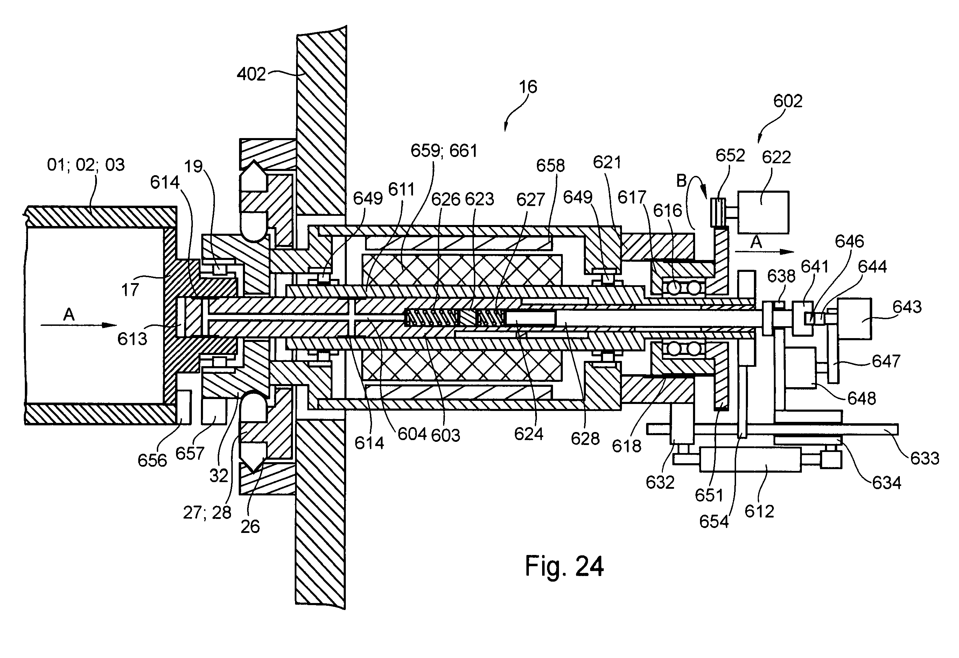

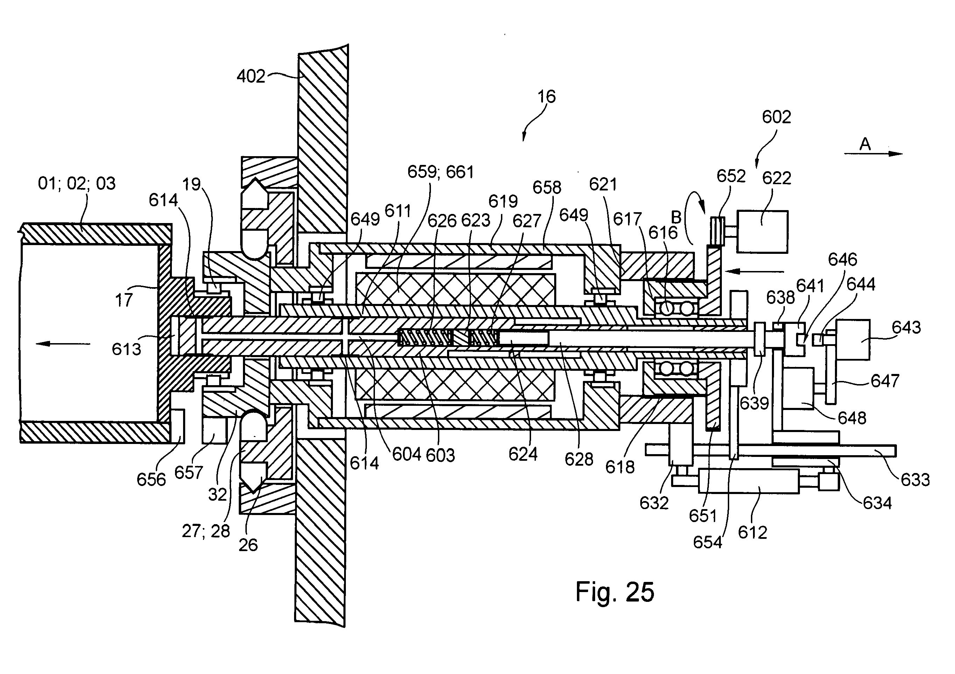

Fig. 24 und 25 zeigen hierzu eine jeweilige linke beziehungsweise rechte Seitenregisterposition des Formzylinders 01. Wird hierbei wie in Fig. 24 dargestellt der Antrieb 622 in einer Richtung B rotiert, also mit einer Drehachse, die in Richtung A weist, so wird die Hülse 617 über die Scheibe 651 aus dem Gewinde 618 herausgedreht und der Formzylinder 01 entsprechend in Richtung A verschoben. Wird die Antriebsrichtung des Antriebs 622 umgekehrt und weist nun entgegen der Richtung B wie in Fig. 25 dargestellt, so wird die Hülse 617 über die Scheibe 651 in das Gewinde 618 hineingedreht, wodurch der Formzylinder 01 entsprechend entgegen der Richtung A bewegt wird. Eine Einstellung des Seitenregisters kann sowohl während als auch außerhalb des normalen Druckbetriebs und von diesem unabhängig erfolgen, wobei der Formzylinder 01 ausschließlich in Richtungen parallel zu seiner Rotationsachse 13 verschoben wird. Es ist hierbei möglich, elektrische, pneumatische, hydraulische, oder mechanisch angekoppelte Antriebe zu verwenden. Mittels anderer Bestandteile der Druckmaschine kann dennoch gleichzeitig Einfluss auf das Umfangs- und/oder Diagonalregister genommen werden.

Dadurch dass der Koppelzylinder 603 in jeder möglichen Winkelstellung zum Zylinder 01; 02; 03 verbindbar ist, ist es zumindest im Fall des Formzylinders 01 erforderlich, eine Referenzposition des Zylinders 01 zumindest bezüglich des Umfangsregisters zu ermitteln, d. h. bezüglich einer Lage des Bedruckstoffs 04 und/oder bezüglich einer Lage möglicher anderer Formzylinder 01. Eine ähnliche Anordnung kann natürlich auch für andere Zylinder 02; 03 eingesetzt werden, beispielsweise um eine Lage eines Zylinderkanals eines Übertragungszylinders 02 zu kontrollieren und/oder gezielt zu beeinflussen. Hierzu weist die Antriebswelle 611 bevorzugt einen mit dieser fest verbundenen Drehwinkelsensor 653, beispielsweise bevorzugt Drehencoder 653, weiter bevorzugt Absolutwertencoder 653 auf, mit welchem sich die Drehstellung des Antriebs 16 und insbesondere die Drehstellung der Antriebswelle 611 bevorzugt mittels einer nicht dargestellten übergeordneten Maschinensteuerung absolut bestimmen lässt, indem der Drehwinkelsensor 653 zu einer Lageraufnahme 32 des entsprechenden Zylinders 01 drehfest angeordnet ist.

Zur Abstützung des Drehwinkelsensors 653 weist dieser bevorzugt zumindest einen Arm 654 auf, welcher so auf der Führungsstange 633 angeordnet ist, das der Arm 654 in Drehrichtung spielfrei und an der Führungsstange 633 entlang beweglich gelagert ist, wodurch gewährleistet ist, dass der Drehwinkelsensor 653 unabhängig von einer axialen Position der Antriebswelle 611 stets einen gleichen Abstützungswinkel, d. h. eine gleiche Referenzlage aufweist. Weiterhin ist vorgesehen, dass der Formzylinder 01 zumindest eine Referenzmarke 656 aufweist, welche über zumindest eine vorzugsweise an der Lageraufnahme 32 angebrachte Sensoreinrichtung 657 abgetastet werden kann und an eine nicht dargestellte übergeordnete Maschinensteuerung weitergeleitet werden kann, woraus in Verbindung mit Positionsdaten des Drehwinkelsensors 653 eine eindeutige Referenzwinkellage des Formzylinders 01 bestimmt werden kann und/oder der Formzylinder 01 mittels des Antriebs 16 in diese Referenzwinkellage gebracht werden kann.

### Bezugszeichenliste

- 01: Zylinder, Formzylinder, Plattenzylinder
- 02: Zylinder, Druckzylinder, Gegendruckzylinder
- 03: Zylinder, Übertragungszylinder, Gummituchzylinder
- 04: Bedruckstoff
- 05: -
- 06: Farbauftragwalze
- 07: Farbwalze, Rasterwalze, Farbduktor
- 08: Farbquelle, Kammerrakel, Farbkasten
- 09: -
- 10: -
- 11: Walze
- 12: Walze, Farbreibwalze
- 13: Rotationsachse (01; 16)
- 14: Rotationsachse (03; 16)
- 15: -
- 16: Antrieb, Motor, Synchronmotor, Elektromotor
- 17: Zylinderzapfen
- 18: -
- 19: Lager, Wälzlager, Kugellager, Rollenlager
- 20: -
- 21: -
- 22: -
- 23: Leiste, Schiene, Führungsschiene, Führung
- 24: Leiste, Schiene, Führungsschiene, Führung
- 25: -
- 26: Gleitelement
- 27: Schlitten
- 28: Schlitten
- 29: Gegenstück (27)
- 30: -
- 31: Gegenstück (28)
- 32: Lageraufnahme, Klapplager, Schnellverschlusslager

- 101: Positioniervorrichtung
- 102: Laufleiste
- 103: Laufleiste
- 104: Ausnehmung
- 105: -
- 106: Ausnehmung
- 107: Verstellschlitten
- 108: Verstellschlitten
- 109: Verstellantrieb
- 110: -
- 111: Verstellantrieb
- 112: Schubstange
- 113: Schubstange
- 114: Schubkeil
- 115: -
- 116: Schubkeil
- 117: Schräge
- 118: Schräge
- 119: Feder
- 120: -
- 121: Feder
- 122: Kraftsensor
- 123: Kraftsensor
- 124: Antrieb, Verstellmotor
- 125: -
- 126: Fixierelement, Klemmelement, Klemmbacke
- 127: Antrieb, Ansteuerelement (126)
- 128: Klemmfläche
- 129: Klemmfläche
- 130: -
- 131: Schubstange
- 132: Laufleiste
- 133: Laufleiste
- 134: Trägerleiste

- 201: Lageraufnahme, Klapplager, Schnellverschlusslager
- 202: Klapplagerschale, Klapplagerhälfte, untere
- 203: Klapplagerschale, Klapplagerhälfte, obere
- 204: Gelenk
- 205: -
- 206: Antrieb, Hubmagnet, Elektromotor, Pneumatikzylinder, Hydraulikzylinder
- 207: Verbindung, Halterung (206; 204)
- 208: Verbindung, Halterung (206; 209)
- 209: Trägerplatte
- 210: -
- 211: Haltebügel
- 212: Drehgelenk, Drehachse
- 213: Anschlag
- 214: Feder
- 215: -
- 216: Arm (211)
- 217: Arm (211)
- 218: Ausformung
- 219: Formschräge
- 220: -
- 221: Kralle
- 222: Haltebolzen
- 223: Haltebolzen
- 224: Fläche, Einlage, Federpaket
- 225: -
- 226: Stellhebel
- 227: Drehgelenk, Drehachse (226)
- 228: Verbindung (229; 226)
- 229: Antrieb, Hubmagnet, Elektromotor, Pneumatikzylinder, Hydraulikzylinder
- 230: -
- 231: Verbindung (229; 209)
- 232: Bereich, Fläche (226)
- 233: Seite (226)
- 234: Ausnehmung (203)
- 235: -
- 236: Ausnehmung (202)
- 237: Spalt
- 238: Feder
- 239: Tangente
- 240: -
- 241: Bereich
- 242: Hohlraum
- 243: Verbindung, Schraube
- 301: Handhabungseinrichtung
- 302: -
- 303: -
- 304: Schlitten
- 305: -
- 306: Schiene
- 307: Antrieb, Riemenantrieb, Kettenantrieb, Linearantrieb
- 308: Spindel
- 309: Schiene
- 310: -
- 311: Schlitten
- 312: Antrieb
- 313: Spindel, Antriebswelle
- 314: Schwenkachse, Drehgelenk
- 315: -
- 316: Schwenkachse, Drehgelenk
- 317: Tragarm
- 318: Tragarm
- 319: Zahnrad
- 320: -
- 321: Zahnrad
- 322: Antriebszahnrad
- 323: Welle
- 324: Platte
- 325: -
- 326: Antrieb
- 327: Hebearm
- 328: Hebearm
- 329: Drehachse
- 330: -
- 331: Drehachse
- 332: Drehachse
- 333: Drehachse
- 334: Zylinderaufnahme, Ausnehmung
- 335: -
- 336: Zylinderaufnahme, Ausnehmung
- 337: Schubstange
- 338: Schubstange
- 339: Linearantrieb, Pneumatikzylinder
- 340: -
- 341: Linearatrieb, Pneumatikzylinder
- 342: Hebel

- 402: Seitengestellwand

- 602: Seitenregistereinstellvorrichtung
- 603: Koppelkörper, Koppelzylinder
- 604: Längskanal
- 605: -
- 606: Querkanal
- 607: Querkanal
- 608: Volumen
- 609: Bohrung
- 610: -
- 611: Bestandteil (16), Antriebswelle
- 612: Verschiebeeinrichtung, Linearmotor, Elektromotor, Hubmagnet, hydraulischer Antrieb, Pneumatikzylinder
- 613: Ausnehmung (17), Buchse
- 614: Material, Metallzylinder, Kunststoffmaterial
- 615: -
- 616: Lager, Kugellager
- 617: Hülse
- 618: Gewinde, Außengewinde (617)
- 619: Motorgehäuse, Gehäuse (16)
- 620: -
- 621: Gegenstück, Halterung
- 622: Antrieb, Stellantrieb, Schneckenantrieb, Getriebeantrieb
- 623: Druckstempel
- 624: Druckstange
- 625: -
- 626: Druckfeder
- 627: Druckfeder
- 628: Schubstange
- 629: Anschlag
- 630: -
- 631: -
- 632: Halterung
- 633: Führungsstange, Führungswelle
- 634: Gleitelement
- 635: -
- 636: Schubstange
- 637: Mitnehmer
- 638: Klaue
- 639: Distanzstück
- 640: -
- 641: Distanzstück
- 642: Gleitlager
- 643: Schraubwerkzeug
- 644: Werkzeugkopf
- 645: -
- 646: Ausnehmung
- 647: Montageplatte
- 648: Hubeinrichtung
- 649: Lager, Wälzlager, Rollenlager
- 650: -
- 651: Scheibe
- 652: Ritzel
- 653: Drehwinkelsensor, Drehencoder, Absolutwertencoder
- 654: Arm (653)
- 655: -
- 656: Referenzmarke
- 657: Sensoreinrichtung
- 658: Stator
- 659: Rotor
- 660: -
- 661: Rotorwicklung

- A: Richtung
- B: Richtung
- C: Richtung
- D: Richtung
- E: Richtung
- F: Richtung
- G: Richtung
- H: Richtung
- J: Richtung
- K: Richtung
- L: Richtung
- M: Richtung
- N: Richtung

## Patentansprüche

1. Lageraufnahme (32) eines Lagers (19) eines Zylinderzapfens (17) eines Zylinders (01; 02; 03) einer Druckmaschine, wobei die Lageraufnahme (32) zumindest zwei Klapplagerschalen (202; 203) aufweist und wobei eine der Klapplagerschalen (203) relativ zu der anderen Klapplagerschale (202) schwenkbar angeordnet ist und wobei ein Antrieb (206) zum Verschwenken dieser einen Klapplagerschale (203) über eine Verbindung (207) mit der Klapplagerschale (203) verbunden angeordnet ist und wobei mittels eines anderen Antriebs (229) die Lageraufnahme (32) verriegelbar und entriegelbar ausgebildet ist und wobei die Lageraufnahme (32) einen schwenkbaren, die Lageraufnahme (32) verriegelnd und/oder verriegelfähig ausgebildeten Haltebügel (211) aufweist und wobei die Lageraufnahme (32) einen mit dem Haltebügel (211) zusammenwirkend angeordneten, schwenkbaren Stellhebel (226) aufweist, wobei der Stellhebel (226) mittels des anderen Antriebs (226) unabhängig von der Klapplagerschale (203) schwenkbar angeordnet ist, **dadurch gekennzeichnet, dass** eine den Haltebügel (211) in eine entriegelnde Stellung drückende Feder (214) angeordnet ist.

2. Lageraufnahme nach Anspruch 1, **dadurch gekennzeichnet, dass** der Antrieb (229) auf den Stellhebel (226) einwirkend und der Stellhebel (226) den Haltebügel (211) in eine verriegelnde Stellung schwenkfähig ausgebildet ist.

3. Lageraufnahme nach Anspruch 1, **dadurch gekennzeichnet, dass** an dem Haltebügel (211) ein Federpaket (224) angeordnet ist.

4. Lageraufnahme nach Anspruch 3, **dadurch gekennzeichnet, dass** der Stellhebel (226) in einem ersten, geöffneten Betriebszustand der Lageraufnahme (32) nicht mit dem Federpaket (224) in Kontakt stehend angeordnet ist und dass der Stellhebel (226) in einem zweiten, verriegelten Betriebszustand der Lageraufnahme (32) mit dem Federpaket (224) in Kontakt stehend angeordnet ist und dass der Stellhebel in einem dritten Betriebszustand in einer, eine Verformung des Federpakets (224) bewirkenden, Weise mit dem Federpaket (224) in Kontakt stehend angeordnet ist und dass eine durch diese Verformung in dem Federpaket (224) gespeicherte Energie größer ist, als eine Energie, die durch eine mögliche Verformung des Federpakets (224) in dem zweiten, verriegelten Betriebszustand der Lageraufnahme (32) in dem Federpaket (224) gespeichert ist.

5. Lageraufnahme nach Anspruch 1, **dadurch gekennzeichnet, dass** die Lageraufnahme (32) als Klapplager (32) mit einer feststehenden Klapplagerschale (202) und einer beweglichen Klapplagerschale (203) ausgebildet ist und dass die Klapplagerschalen (202; 203) jeweilige, im geschlossenen Zustand der Lageraufnahme (32) einander gegenüber liegende Ausnehmungen (234; 236) zur Aufnahme eines Lagers (19) aufweisen.

6. Lageraufnahme nach Anspruch 1, **dadurch gekennzeichnet, dass** der Haltebügel (211) an der einen Klapplagerschale (202; 203) schwenkbar angeordnet ist und dass der Stellhebel (226) an der anderen Klapplagerschale (202; 203) schwenkbar angeordnet ist.

7. Lageraufnahme nach Anspruch 1, **dadurch gekennzeichnet, dass** der Haltebügel (211) einen ersten und einen zweiten, miteinander eine Ausformung (218) bildenden, Arm (216; 217) zur Aufnahme des Stellhebels (226) aufweist und dass der erste Arm (217) eine Formschräge (219) aufweist, welche gegen einen an der nicht mit dem Haltebügel (211) in Kontakt stehenden Klapplagerschale (202) befestigten Haltebolzen (222) andrückbar ist und dass der erste Arm (217) eine Kralle (221) aufweist, welche in einen an der nicht mit dem Haltebügel (211) in Kontakt stehenden Klapplagerschale (202) befestigten Haltebolzen (223) einrastbar ausgebildet ist.

8. Lageraufnahme nach Anspruch 7, **dadurch gekennzeichnet, dass** einer der Haltebolzen (223) beweglich und vorgespannt angeordnet ist und der andere Haltebolzen (222) feststehend angeordnet ist.

9. Lageraufnahme nach Anspruch 7, **dadurch gekennzeichnet, dass** in einem verriegelten Zustand der Lageraufnahme (32) zumindest ein Teil des Stellhebels (226) in die Ausformung (218) des Haltebügels (211) eingreifend angeordnet ist und der Haltebügel (211) über den Antrieb (229) und den Stellhebel (226) mit einer vorgebbaren Kraft die Formschräge (219) des ersten Arms (217) gegen den feststehenden Haltebolzen (222) drückend angeordnet ist.

10. Verfahren zum Schließen und Verriegeln einer Lageraufnahme (32) eines Lagers (19) eines Zylinderzapfens (17) eines Zylinders (01; 02; 03) einer Druckmaschine, wobei die Lageraufnahme (32) mittels eines Antriebs (206) geschlossen wird und wobei im Anschluss daran ein Haltebügel (211) in eine Lage verschwenkt wird, in der er die Lageraufnahme (32) verriegelt, wobei der Haltebügel (211) durch einen Stellhebel (226) verschwenkt wird, **dadurch gekennzeichnet, dass** der Stellhebel (226) den Haltebügel (211) zumindest während eines Teils der die Lageraufnahme (32) verriegelnden Schwenkbewegung des Haltebügels (211) gegen eine Federkraft andrückend verschwenkt.

11. Verfahren nach Anspruch 10, **dadurch gekennzeichnet, dass** der Stellhebel (226) selbst verschwenkt wird und dadurch den Haltebügel (211) so weit verschwenkt, bis dieser sich in einer Lage befindet, in der er die Lageraufnahme (32) verriegelt.

12. Verfahren nach Anspruch 11, **dadurch gekennzeichnet, dass** der Stellhebel (226) zu Beginn seiner Verschwenkung auf ein an dem Haltebügel (211) angeordnetes Federpaket (224) keine Kraft ausübt oder eine Kraft ausübt, die kleiner ist als eine Kraft, die der Stellhebel (226) zu einem Zwischenzeitpunkt auf das Federpaket (244) ausübt und dass der Stellhebel (226) nach dem Verriegeln der Lageraufnahme (32) auf das Federpaket (224) keine Kraft ausübt oder eine Kraft ausübt, die kleiner ist, als die Kraft, die der Stellhebel (226) zu dem Zwischenzeitpunkt auf das Federpaket (224) ausübt, wobei der Zwischenzeitpunkt zwischen dem Beginn der Verschwenkung des Stellhebels (226) und einem Abschluss des Verriegelns der Lagerraufnahme (32) liegt.

## Claims

1. Bearing support (32) of a bearing (19) of a cylinder journal (17) of a cylinder (01; 02; 03) of a printing press, the bearing support (32) having at least two folding bearing shells (202; 203) and one of the folding bearing shells (203) being arranged pivotably relative to the other folding bearing shell (202) and a drive (206) for swivelling this one folding bearing shell (203) by means of a connection (207) being connected to the folding bearing shell (203) and by means of another drive (229) the bearing support (32) being designed to be lockable and unlockable and the bearing support (32) having a pivotable retaining bracket (211) to lock and/or be able to lock the bearing support (32) and the bearing support (32) having a pivotable adjusting lever (226) arranged interacting with the retaining bracket (211), the adjusting lever (226) being arranged pivotably independently of the folding bearing shell (203) by means of the other drive (226), **characterized in that** a spring (214) is arranged pressing the retaining bracket (211) into an unlocking position.

2. Bearing support according to Claim 1, **characterized in that** the drive (229) acting on the adjusting lever (226) and the adjusting lever (226) is designed capable of pivoting the retaining bracket (211) into a locking position.

3. Bearing support according to Claim 1, **characterized in that** a spring assembly (224) is arranged on the retaining bracket (211).

4. Bearing support according to Claim 3, **characterized in that** the adjusting lever (226) is arranged not in contact with the spring assembly (224) in a first, opened operating state of the bearing support (32) and **in that** the adjusting lever (226) is arranged in contact with the spring assembly (224) in a second, locked operating state of the bearing support (32) and **in that** the adjusting lever is arranged in contact with the spring assembly (224) in a third operating state in a manner causing a deformation of the spring assembly (224) and **in that** an energy stored by this deformation in the spring assembly (224) is greater than an energy stored in the spring assembly (224) by a possible deformation of the spring assembly (224) in the second, locked operating state of the bearing support (32).

5. Bearing support according to Claim 1, **characterized in that** the bearing support (32) is designed as a folding bearing (32) with a fixed folding bearing shell (202) and a movable folding bearing shell (203) and **in that** the folding bearing shells (202; 203) in each case, in the closed state of the bearing support (32), have recesses (234; 236) opposite to each other for the support of a bearing (19).

6. Bearing support according to Claim 1, **characterized in that** the retaining bracket (211) is arranged pivotably on the first folding bearing shell (202; 203) and **in that** the adjusting lever (226) is arranged pivotably on the other folding bearing shell (202; 203).

7. Bearing support according to Claim 1 **characterized in that** the retaining bracket (211) has a first and a second arm (216; 217) forming a moulding (218) with one another for the support of the adjusting lever (226) and **in that** the first arm (217) has a mould incline (219) which can be pressed against a retaining bolt (222) fixed to the folding bearing shell (202) not in contact with the retaining bracket (211) and **in that** the first arm (217) has a claw (221), which is constructed in a lockable manner in a holding bolt (223) fixed to the folding bearing shell (202) not in contact with the retaining bracket (211).

8. Bearing support according to Claim 7, **characterized in that** one of the retaining bolts (223) is movable and is arranged in pretensioned form and the other holding bolt (222) is arranged in fixed form.

9. Bearing support according to Claim 7, **characterized in that** in a locked state of the bearing support (32) at least a part of the adjusting lever (226) is arranged engaging in the moulding (218) of the retaining bracket (211) and the retaining bracket (211) is arranged pressing the mould incline (219) of the first arm (217) against the fixed holding bolt (222) by means of the drive (229) and the adjusting lever (226).

10. Method for closing and locking a bearing support (32) of a bearing (19) of a cylinder journal (17) of a cylinder (01; 02; 03) of a printing press, the bearing support (32) being closed by means of a drive (206) and following thereon a retaining bracket (211) being swivelled into a position in which it locks the bearing support (32), the retaining bracket (211) being swivelled by means of an adjusting lever (226), **characterized in that** the adjusting lever (226) swivels the retaining bracket (211) at least during one part of the swivelling movement of the retaining bracket (211) locking the bearing support (32) pressing against a spring force.

11. Method according to Claim 10, **characterized in that** the adjusting lever (226) is itself swivelled and thereby the retaining bracket (211) is swivelled so far until this is in a position in which it locks the bearing support (32).

12. Method according to Claim 11, **characterized in that** the adjusting lever (226) at the start of its swivelling exerts no force on a spring assembly (224) arranged on the retaining bracket (211) or exerts a force which is smaller than a force that the adjusting lever (226) exerts at an intermediate point on the spring assembly (244) and **in that** the adjusting lever (226) exerts no force on the spring assembly (224) after the locking of the bearing support (32) or exerts a force which is smaller than the force which the adjusting lever (226) exerts on the spring assembly (224) at the intermediate point, the intermediate point lying between the start of the swivelling of the adjusting lever (226) and a completion of the locking of the bearing support (32).

## Revendications

1. Logement (32) d'un palier (19) d'un tourillon (17) d'un cylindre (01 ; 02 ; 03) d'une machine à imprimer, ledit logement de palier (32) comportant au moins deux coussinets de palier à bascule (202 ; 203), un des coussinets de palier à bascule (203) étant disposé de manière à pouvoir pivoter par rapport à l'autre coussinet de palier à bascule (202), un entraînement (206) pour le pivotement dudit premier coussinet de palier à bascule (203) étant disposé de manière à être relié par une liaison (207) au coussinet de palier à bascule (203), ledit logement de palier (32) étant réalisé de manière à pouvoir être verrouillé et déverrouillé au moyen d'un autre entraînement (229), ledit logement de palier (32) comportant un étrier de retenue (211) pivotant, réalisé de manière à verrouiller et/ou à pouvoir verrouiller ledit logement de palier (32), et ledit logement de palier (32) comportant un levier d'actionnement (226) pivotant disposé de manière à coopérer avec l'étrier de retenue (211), ledit levier d'actionnement (226) étant disposé de manière pouvoir pivoter indépendamment du coussinet de palier à bascule (203) au moyen de l'autre entraînement (226), **caractérisé en ce qu'**il est prévu un ressort (214) serrant l'étrier de retenue (211) vers une position de déverrouillage.

2. Logement de palier selon la revendication 1, **caractérisé en ce que** l'entraînement (229) est réalisé de manière à agir sur le levier d'actionnement (226) et le levier d'actionnement (226) à pouvoir pivoter l'étrier de retenue (211) vers une position de verrouillage.

3. Logement de palier selon la revendication 1, **caractérisé en ce qu'**un bloc-ressort (224) est disposé sur l'étrier de retenue (211).

4. Logement de palier selon la revendication 3, **caractérisé en ce que**, dans un premier état de service d'ouverture dudit logement de palier (32), le levier d'actionnement (226) n'est pas disposé de manière à être en contact avec le bloc-ressort (224), **en ce que**, dans un deuxième état de service de verrouillage dudit logement de palier (32), le levier d'actionnement (226) est en contact avec le bloc-ressort (224), **en ce que** le levier d'actionnement est en contact avec le bloc-ressort (224) dans un troisième état de service de manière à provoquer une déformation du bloc-ressort (224), et **en ce qu'**une énergie accumulée dans le bloc-ressort (224) du fait de cette déformation est supérieure à une énergie accumulée dans le bloc-ressort (224) du fait d'une déformation possible du bloc-ressort (224) dans le deuxième état de service de verrouillage dudit logement de palier (32).

5. Logement de palier selon la revendication 1, **caractérisé en ce que** ledit logement de palier (32) est réalisé comme palier à bascule (32) avec un coussinet de palier à bascule (202) fixe et un coussinet de palier à bascule (203) mobile, et **en ce que** les coussinets de palier à bascule (202 ; 203) présentent en état de fermeture dudit logement de palier (32) des évidements (234 ; 236) respectifs superposés pour la réception d'un palier (19).

6. Logement de palier selon la revendication 1, **caractérisé en ce que** l'étrier de retenue (211) est disposé de manière à pouvoir pivoter sur le premier coussinet de palier à bascule (202 ; 203), et **en ce que** le levier d'actionnement (226) est disposé de manière à pouvoir pivoter sur l'autre coussinet de palier à bascule (202 ; 203).

7. Logement de palier selon la revendication 1, **caractérisé en ce que** l'étrier de retenue (211) comporte un premier et un deuxième bras (216 ; 217) formant ensemble une ouverture (218) pour la réception du levier d'actionnement (226), **en ce que** le premier bras (217) présente une dépouille (219) qui peut être serrée contre un axe de maintien (222) fixé sur le coussinet de palier à bascule (202) qui n'est pas en contact avec l'étrier de retenue (211), et **en ce que** le premier bras (217) présente une griffe (221) réalisée de manière à être enclenchable sur un axe de maintien (223) fixé sur le coussinet de palier à bascule (202) qui n'est pas en contact avec l'étrier de retenue (211).

8. Logement de palier selon la revendication 7, **caractérisé en ce qu'**un des axes de maintien (223) est disposé de manière à être mobile et pré-contraint, et l'autre axe de maintien (222) est à disposition fixe.

9. Logement de palier selon la revendication 7, **caractérisé en ce que**, dans un état de verrouillage dudit logement de palier (32), au moins une partie du levier d'actionnement (226) est disposée de manière à s'engager dans l'ouverture (218) de l'étrier de retenue (211), et l'étrier de retenue (211) est disposé de manière à serrer la dépouille (219) du premier bras (217) avec une force pouvant être définie contre l'axe de maintien (222) fixe au moyen de l'entraînement (229) et du levier d'actionnement (226).

10. Procédé de fermeture et de verrouillage d'un logement (32) d'un palier (19) d'un tourillon (17) d'un cylindre (01 ; 02 ; 03) d'une machine à imprimer, ledit logement de palier (32) étant fermé au moyen d'un entraînement (206) et un étrier de retenue (211) étant consécutivement pivoté vers une position où il verrouille le logement de palier (32), l'étrier de retenue (211) étant pivoté par un levier d'actionnement (226), **caractérisé en ce que** le levier d'actionnement (226) pivote l'étrier de retenue (211) de manière à le serrer contre une force de ressort, au moins pendant une partie du mouvement de pivotement de l'étrier de retenue (211) verrouillant le logement de palier (32).

11. Procédé selon la revendication 10, **caractérisé en ce que** le levier d'actionnement (226) est lui-même pivoté et pivote de ce fait l'étrier de retenue (211) jusqu'à ce que celui-ci se trouve dans une position où il verrouille ledit logement de palier (32).

12. Procédé selon la revendication 11, **caractérisé en ce qu'**au début de son pivotement vers un bloc-ressort (224) disposé sur l'étrier de retenue (211), le levier d'actionnement (226) n'exerce aucune force ou exerce une force inférieure à une force que le levier d'actionnement (226) exerce sur le bloc-ressort (244) à un moment intermédiaire, et **en ce qu'**après verrouillage du logement de palier (32), le levier d'actionnement (226) n'exerce sur le bloc-ressort (224) aucune force ou une force inférieure à la force que le levier d'actionnement (226) exerce sur le bloc-ressort (224) au moment intermédiaire, ledit moment intermédiaire étant situé entre le début du pivotement du levier d'actionnement (226) et la fin du verrouillage du logement de palier (32).
